# EUROPEAN PATENT APPLICATION

(11) **EP 3 467 627 A1**
(43) Date of publication of application: **10.04.2019**
(21) Application number: 17802842.9
(22) Date of filing: 24.05.2017
(51) Int. Cl.: G06F 3/041, G06F 3/044

(54) **CONDUCTIVE FILM, TOUCH PANEL, AND DISPLAY DEVICE**

(30) Priority: 24.05.2016 JP 2016103665; 24.05.2016 JP 2016103666; 04.11.2016 JP 2016216425; 16.05.2017 JP 2017097573; 16.05.2017 JP 2017097574
(71) Applicant: VTS-Touchsensor Co., Ltd., Higashiomi-shi Shiga 527-0046 (JP)
(72) Inventor: NAKAGOME, Tomohiro, Tokyo 110-0016 (JP); MURILLO-MORA, Luis, Manuel, Tokyo 110-0016 (JP); TAKIZAWA, Yumi, Tokyo 110-0016 (JP)
(74) Representative: Rau, Schneck & Hübner Patentanwälte Rechtsanwälte PartGmbB
(86) International application number: PCT/JP2017/019399
(87) International publication number: WO 2017/204256

(57) **Abstract**

Each of a plurality of first electrodes which extend in a first direction on a first surface of a transparent dielectric layer and are arranged in a first intersecting direction intersecting the first direction includes a plurality of first electrode wires having a bent line shape which extends in the first direction. A region between two first electrode wires that are adjacent to one another in the first intersecting direction is an intermediate region, the intermediate region includes an enlarging region in which the length of the intermediate region in the first intersecting direction becomes larger in the first direction, and a contracting region in which the length of the intermediate region in the first intersecting direction becomes smaller in the first direction, and the enlarging region and the contracting region are disposed alternately in the first direction.

## Description

The present invention relates to a conductive film provided with a plurality of electrode wires, a touch panel provided with the conductive film, and a display device provided with the touch panel.

Display devices employing a touch panel as an input device are provided with a display panel which displays an image, and the touch panel, which is overlaid on the display panel. An electrostatic capacitance method in which contact by a finger or the like on an operating surface of the touch panel is detected as a variation in electrostatic capacitance is used widely as a method for detecting a position of contact of a finger or the like on the touch panel. In an electrostatic capacitance type touch panel, a conductive film with which the touch panel is provided includes a plurality of first electrodes extending in a first direction, a plurality of second electrodes extending in a second direction perpendicular to the first direction, and a transparent dielectric layer sandwiched between the first electrodes and the second electrodes. Then, the position of contact of the finger or the like on the operating surface is detected by detecting a variation in the electrostatic capacitance between one first electrode and each of the plurality of second electrodes, for each first electrode.

In one example of such a conductive film, each of the plurality of first electrodes consists of a plurality of first electrode wires extending in the first direction, and each of the plurality of second electrodes consists of a plurality of second electrode wires extending in the second direction. Thin wires comprising a metal such as silver or copper are used as the electrode wires. Using a metal as the material for the electrode wires allows a rapid response characteristic and a high resolution to be obtained when detecting the position of contact, and also enables an increase in the size of the touch panel and a reduction in manufacturing costs.

Now, in a configuration in which the electrode wires are formed from a metal which absorbs or reflects visible light, the plurality of first electrode wires and the plurality of second electrode wires form a grid-shaped pattern in which the electrode wires intersect one another at right angles, when viewed from the operating surface of the touch panel. Meanwhile, in the display panel to which the touch panel is laminated, a grid-shaped pattern is also formed by a black matrix demarcating a plurality of pixels in the first direction and the second direction.

With this configuration, a gap between mutually adjacent first electrode wires is generally different from a gap in the second direction between mutually adjacent pixels, and a gap between mutually adjacent second electrode wires is different from a gap in the first direction between mutually adjacent pixels. Furthermore, when viewed from the operating surface of the touch panel, a grid-shaped periodic structure formed by the first electrode wires and the second electrode wires overlaps a grid-shaped periodic structure demarcating the pixels, as a result of which an offset between the two periodic structures may give rise to moiré. Visual recognition of moiré causes a deterioration in the quality of images visually recognized on the display device.

One countermeasure that has been proposed to suppress such moiré is to reduce the periodicity of the periodic structure of the electrode wires. If the periodicity of the pattern formed by the plurality of electrode wires is low, the electrode wire pattern is less liable to be recognized as a periodic structure, and thus an offset between the pattern demarcating the pixels and the electrode wire pattern is less liable to be recognized as an offset between two periodic structures. Visual recognition of moiré is consequently suppressed.

In a touch panel disclosed in International Publication No. 2014/115831, for example, each first electrode wire and second electrode wire have a polygonal line shape in which ridge portions and valley portions are repeated alternately, and a pattern formed by these electrode wires has a repeating structure comprising polygons different from a rectangle. The periodicity of such an electrode wire pattern is therefore lower than the periodicity of a grid-shaped electrode wire pattern obtained by arranging rectangles.

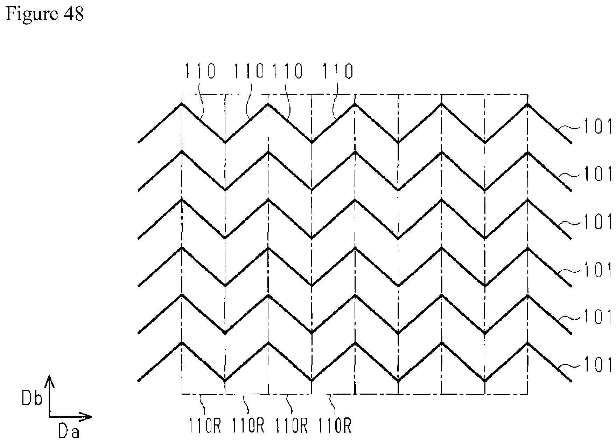

Now, in the touch panel disclosed in International Publication No. 2014/115831, each of a plurality of electrode wires disposed in one plane has a shape obtained by translating one electrode wire having a polygonal line shape in the direction in which the electrode wires are arranged. As illustrated in Figure 48, for example, a first electrode wire 101 has a polygonal line shape which extends in a first direction Da while bending repeatedly. Specifically, the first electrode wire 101 has a shape in which two types of short line portions 110 extending linearly in mutually different directions are arranged alternately in the first direction Da. Furthermore, each of the plurality of first electrode wires 101 arranged in a second direction Db has a shape obtained by translating one first electrode wire 101 in the second direction Db. In such a configuration there are formed strip-shaped regions 110R in which a plurality of the short line portions 110 extending in the same direction are arranged in the second direction Db with the positions thereof in the first direction Db aligned. Furthermore, two types of the strip-shaped regions 110R in which the directions in which the short line portions 110 extend are mutually different are arranged alternately with no gaps in the first direction Da. As a result, the arrangement of the plurality of strip-shaped regions 110R is liable to be visually recognized as a strip-shaped pattern. This strip-shaped pattern is particularly liable to be visually recognized as a result of the reflection of external light at an unlit time, which is a time when no image is being displayed by the display device, and if such a strip-shaped pattern is visually recognized, the quality of the appearance as seen from the operating surface decreases.

The objective of the present invention is to provide a conductive film, a touch panel and a display device with which it is possible to suppress a deterioration in appearance quality.

### Means of overcoming the problem

A conductive film which solves the abovementioned problem is provided with: a transparent dielectric layer having a first surface and a second surface which is a surface on the opposite side to the first surface; a plurality of first electrodes which extend on the first surface in a first direction and are arranged in a first intersecting direction intersecting the first direction; and a plurality of second electrodes which extend on the second surface in a second direction intersecting the first direction and are arranged in a second intersecting direction intersecting the second direction; wherein the first electrodes include a plurality of first electrode wires having a bent line shape extending in the first direction, a region between two first electrode wires that are adjacent to one another in the first intersecting direction is an intermediate region, the intermediate region includes an enlarging region in which the length of the intermediate region in the first intersecting direction becomes larger in the first direction, and a contracting region in which the length of the intermediate region in the first intersecting direction becomes smaller in the first direction, and the enlarging region and the contracting region are disposed alternately in the first direction.

According to this configuration, the formation, by linear parts of the plurality of first electrode wires extending in the same direction, of strip-shaped regions arranged in the first intersecting direction is suppressed, and an alternating arrangement in the first direction, with no gaps, of two types of strip-shaped regions in which the direction in which the linear parts contained in each region extend differ from one another is also suppressed. Visual recognition, as a result of reflected light, for example, of a strip-shaped pattern resulting from such an arrangement of strip-shaped regions is therefore suppressed. Consequently, a reduction in the appearance quality of a touch panel employing a conductive film when viewed from the operating surface thereof is suppressed.

A touch panel which solves the abovementioned problem is provided with: the abovementioned conductive film; a cover layer covering the conductive film; and a peripheral circuit which measures an electrostatic capacitance between the first electrodes and the second electrodes.

According to this configuration, a touch panel is realized in which a reduction in the appearance quality when viewed from the operating surface thereof is suppressed.

A display device which solves the abovementioned problem is provided with: a display panel which has a plurality of pixels aligned in a grid formation, and which displays information; a touch panel through which the information being displayed by the display panel is transmitted; and a control unit which controls the driving of the touch panel; wherein the touch panel is the touch panel described hereinabove.

According to this configuration, a display device is realized in which a reduction in the appearance quality of the touch panel when viewed from the operating surface thereof is suppressed, and in which, in particular, visual recognition of a strip-shaped pattern as a result of reflected external light when the display device is not lit is suppressed.

### Effect of the invention

According to the present invention, a deterioration in the appearance quality of the touch panel can be suppressed.

In the drawing,
- Figure 1: relates to a first mode of embodiment of a display device, and is a cross-sectional view illustrating the cross-sectional structure of the display device.
- Figure 2: is a plan view illustrating the planar structure of a conductive film in the first mode of embodiment.
- Figure 3: is a plan view illustrating the pixel arrangement in a display panel in the first mode of embodiment.
- Figure 4: is a schematic diagram used to describe the electrical configuration of a touch panel in the first mode of embodiment.
- Figure 5: is a drawing illustrating the configuration of sensing electrode wires in the first mode of embodiment.
- Figure 6: is a drawing illustrating an example of an FFT analysis result of a pattern formed by a plurality of sensing electrode wires in the first mode of embodiment, where the ratio of a bend width to the electrode wire spacing in the pattern is 1.0.
- Figure 7: is a drawing illustrating an example of an FFT analysis result of a pattern formed by a plurality of sensing electrode wires in the first mode of embodiment, where the ratio of the bend width to the electrode wire spacing in the pattern is less than 1.0.
- Figure 8: is a drawing illustrating a relationship between the ratio of the bend width to the electrode wire spacing and the intensities of frequency components in the FFT analysis result, for the sensing electrode wires in the first mode of embodiment.
- Figure 9: is a drawing illustrating the configuration of an intermediate region between two mutually adjacent sensing electrode wires, in the sensing electrode wires in the first mode of embodiment.
- Figure 10: is a drawing illustrating the configuration of drive electrode wires in the first mode of embodiment.
- Figure 11: is a plan view illustrating the planar structure of part of the conductive film in the first mode of embodiment, the drawing illustrating an example of an electrode wire pattern formed by the sensing electrode wires and the drive electrode wires.
- Figure 12: is a plan view illustrating the planar structure of part of the conductive film in the first mode of embodiment, the drawing illustrating an example of an electrode wire pattern formed by the sensing electrode wires and the drive electrode wires.
- Figure 13: relates to a second mode of embodiment of a conductive film, and is a drawing illustrating the configuration of sensing electrode wires in the second mode of embodiment.
- Figure 14: is a drawing illustrating sensing reference electrode wires in the second mode of embodiment together with reference bent portion displacement regions.
- Figure 15: is a drawing illustrating an example of sensing reference electrode wires created by displacement of reference bent portions of the sensing reference electrode wires in the second mode of embodiment.
- Figure 16: relates to a third mode of embodiment of a conductive film, and is a drawing illustrating the configuration of sensing electrode wires in the third mode of embodiment.
- Figure 17: is a drawing illustrating the configuration of the sensing electrode wires in the third mode of embodiment.
- Figure 18: is a drawing illustrating, in an overlapping manner, the sensing electrode wires and the sensing reference electrode wires in the third mode of embodiment.
- Figure 19: is a drawing illustrating, in an overlapping manner, drive electrode wires and drive reference electrode wires in the third mode of embodiment.
- Figure 20: is a drawing illustrating an example of an electrode wire pattern formed by the sensing reference electrode wires and the drive reference electrode wires in the third mode of embodiment.
- Figure 21: is a plan view illustrating the planar structure of part of the conductive film in the third mode of embodiment, the drawing illustrating an example of an electrode wire pattern formed by the sensing electrode wires and the drive electrode wires.
- Figure 22: relates to a fourth mode of embodiment of a conductive film, and is a drawing illustrating, in an overlapping manner, sensing electrode wires in the fourth mode of embodiment and the sensing electrode wires in the third mode of embodiment.
- Figure 23: is a drawing illustrating the sensing electrode wires in the fourth mode of embodiment, together with sensing reference electrode wires and reference bent portion displacement regions.
- Figure 24: relates to a fifth mode of embodiment of a conductive film, and is a drawing illustrating the configuration of sensing electrode wires in the fifth mode of embodiment.
- Figure 25: is a drawing illustrating the configuration of separated bent portions in the fifth mode of embodiment.
- Figure 26A: is a drawing illustrating a reference pattern in the fifth mode of embodiment.
- Figure 26B: is a drawing illustrating the configuration of a sensing reference electrode wire in the fifth mode of embodiment.
- Figure 27: is a drawing illustrating the process for creating the sensing electrode wires in the fifth mode of embodiment, the drawing illustrating sensing displaced electrode wires set with respect to the sensing reference electrode wires.
- Figure 28: is a drawing illustrating the process for creating the sensing electrode wires in the fifth mode of embodiment, the drawing illustrating the sensing displaced electrode wires together with the sensing reference electrode wires.
- Figure 29: is a drawing illustrating the process for creating the sensing electrode wires in the fifth mode of embodiment, the drawing illustrating the sensing electrode wires together with the sensing reference electrode wires.
- Figure 30: is a drawing illustrating the relationship between opposing separated bent portions in the fifth mode of embodiment.
- Figure 31: is a drawing illustrating the configuration of drive electrode wires in the fifth mode of embodiment.
- Figure 32A: is a drawing illustrating the drive electrode wires in the fifth mode of embodiment together with the drive reference electrode wires.
- Figure 32B: is a drawing illustrating the configuration of a drive reference electrode wire in the fifth mode of embodiment.
- Figure 33: is a drawing illustrating a pattern formed by the sensing reference electrode wires and the drive reference electrode wires in the fifth mode of embodiment.
- Figure 34: is a plan view illustrating the planar structure of part of the conductive film in the fifth mode of embodiment, the drawing illustrating an example of an electrode wire pattern formed by the sensing electrode wires and the drive electrode wires.
- Figure 35: is a drawing illustrating the configuration of a modified example of the separated bent portions in the fifth mode of embodiment.
- Figure 36: relates to a reference mode of a conductive film, and is a drawing illustrating the configuration of sensing electrode wires in the reference mode.
- Figure 37: is a drawing illustrating in enlargement part of a sensing electrode wire in the reference mode.
- Figure 38: is a drawing illustrating the configuration of drive electrode wires in the reference mode.
- Figure 39: is a plan view illustrating the planar structure of part of the conductive film in the reference mode, the drawing illustrating the configuration of an electrode wire pattern formed by the sensing electrode wires and the drive electrode wires.
- Figure 40: is a drawing illustrating the configuration of a sensing reference electrode wire in the reference mode.
- Figure 41: is a drawing illustrating an example of an FFT analysis result of a pattern formed by a plurality of sensing reference electrode wires in the reference mode.
- Figure 42: is a drawing illustrating a relationship between an occupancy ratio and the intensities of the frequency components in the FFT analysis result, for the sensing reference electrode wires in the reference mode.
- Figure 43A: is a drawing illustrating the shape of an ideal electrode wire.
- Figure 43B: is a drawing illustrating schematically the shape of an actually formed electrode wire.
- Figure 44: is a drawing illustrating simulation results obtained by evaluating a moiré occurrence degree for a pattern of ideal electrode wires and patterns of actually formed electrode wires.
- Figure 45: is a drawing illustrating simulation results obtained by evaluating the moiré occurrence degree with a varying size of the radius of curvature of a curved portion, for the sensing electrode wires in the reference mode.
- Figure 46: is a cross-sectional view illustrating the cross-sectional structure of a display device in a modified example.
- Figure 47: is a cross-sectional view illustrating the cross-sectional structure of a display device in a modified example.
- Figure 48: is a drawing illustrating the configuration of conventional electrode wires.

### Modes for carrying out the invention

### First mode of embodiment

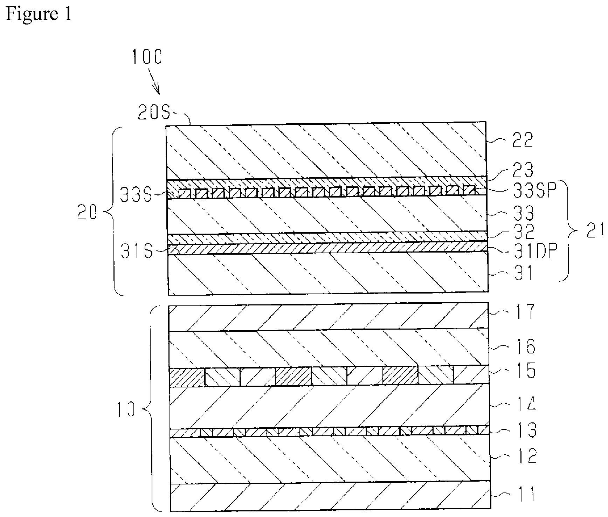

A first mode of embodiment of a conductive film, a touch panel and a display device will be described with reference to Figure 1 to Figure 12. It should be noted that the drawings illustrate the configurations of the conductive film, the touch panel and the display device in the first mode of embodiment schematically for the purpose of describing the same, and ratios between the sizes of each part in the configurations illustrated in each drawing may differ from the actual ratios.

### Configuration of display device

The configuration of the display device will be described with reference to Figure 1.

As illustrated in Figure 1, the display device 100 is provided, for example, with a laminated body in which a display panel 10, which is a liquid crystal panel, and a touch panel 20 are bonded together by means of one transparent adhesive layer, not shown in the drawing, and is additionally provided with a circuit for driving the touch panel 20 and a control unit which controls the driving of the touch panel 20. If it is assumed that the relative positions of the display panel 10 and the touch panel 20 are to be fixed by means of another component such as an enclosure, the transparent adhesive layer may be omitted.

A substantially rectangular display surface is demarcated on the surface of the display panel 10, and information such as an image based on image data is displayed on the display surface. The constituent elements that form the display panel 10 are arranged in order as follows, from the constituent element furthest from the touch panel 20. That is, a lower polarizing plate 11, a thin film transistor (referred to as 'TFT' hereinbelow) substrate 12, a TFT layer 13, a liquid crystal layer 14, a color filter layer 15, a color filter substrate 16 and an upper polarizing plate 17 are positioned in order of decreasing distance from the touch panel 20.

Among these, pixel electrodes forming sub-pixels are positioned in a matrix formation in the TFT layer 13. Further, a black matrix included in the color filter layer 15 has a grid shape formed by a plurality of rectangular unit grids. Furthermore, by means of this grid shape, the black matrix demarcates a plurality of rectangular regions as regions facing each of the sub-pixels, and each region demarcated by the black matrix has positioned therein a colored layer which changes white light into either red, green or blue colored light.

It should be noted that if the display panel 10 is an EL panel which outputs colored light and which is configured with red pixels for outputting red light, green pixels for outputting green light, and blue pixels for outputting blue light, then the color filter layer 15 discussed hereinabove may be omitted. In this case, boundary parts of mutually adjacent pixels in the EL panel function as the black matrix. Further, the display panel 10 may be a plasma panel which emits light by means of electric discharge, in which case boundary parts demarcating red phosphor layers, green phosphor layers and blue phosphor layers function as the black matrix.

The touch panel 20 is an electrostatic capacitance type touch panel comprising a laminated body in which a conductive film 21 and a cover layer 22 are bonded together by means of a transparent adhesive layer 23, and is light transmissive to transmit the information being displayed by the display panel 10.

Specifically, among the constituent elements forming the touch panel 20, a transparent substrate 31, a plurality of drive electrodes 31DP, a transparent adhesive layer 32, a transparent dielectric substrate 33, a plurality of sensing electrodes 33SP, the transparent adhesive layer 23, and a cover layer 22 are positioned in order from the constituent element closest to the display panel 10. Among these, the transparent substrate 31, the drive electrodes 31DP, the transparent adhesive layer 32, the transparent dielectric substrate 33 and the sensing electrodes 33SP constitute the conductive film 21.

The transparent substrate 31 is light transmissive to transmit the information such as an image displayed on the display surface of the display panel 10, and also has insulating properties, and is overlaid over the entire display surface. The transparent substrate 31 is configured from a substrate such as a transparent glass substrate, a transparent resin film or a silicon substrate, for example. Examples of resins that may be used for the transparent substrate 31 include PET (polyethylene terephthalate), PMMA (polymethyl methacrylate), PP (polypropylene), and PS (polystyrene). The transparent substrate 31 may be a single layer structure consisting of one substrate, or a multilayer structure obtained by stacking two or more substrates.

The surface of the transparent substrate 31 on the opposite side to the display panel 10 is set as a drive electrode surface 31S, and the plurality of drive electrodes 31DP are disposed on the drive electrode surface 31S. The plurality of drive electrodes 31DP and the parts of the drive electrode surface 31S on which the drive electrodes 31DP are not positioned are bonded to the transparent dielectric substrate 33 by means of the one transparent adhesive layer 32.

The transparent adhesive layer 32 is light transmissive to transmit information such as an image displayed on the display surface, and a polyether-based adhesive or an acrylic-based adhesive is used as the transparent adhesive layer 32, for example.

The transparent dielectric substrate 33 is light transmissive to transmit the information such as an image displayed on the display surface, and has a relative dielectric constant suitable for detecting an electrostatic capacitance between the electrodes. The transparent dielectric substrate 33 is configured from a substrate such as a transparent glass substrate, a transparent resin film or a silicon substrate, for example. Examples of resins that may be used for the transparent dielectric substrate 33 include PET, PMMA, PP and PS. The transparent dielectric substrate 33 may be a single layer structure consisting of one substrate, or a multilayer structure obtained by stacking two or more substrates.

The plurality of drive electrodes 31DP are bonded to the transparent dielectric substrate 33 by means of the transparent adhesive layer 32, as a result of which the plurality of drive electrodes 31DP are arranged on a rear surface of the transparent dielectric substrate 33, which is the surface thereof facing the transparent substrate 31.

The top surface of the transparent dielectric substrate 33, which is the surface thereof on the opposite side to the transparent adhesive layer 32, is set as a sensing electrode surface 33S, and the plurality of sensing electrodes 33SP are disposed on the sensing electrode surface 33S. That is, the transparent dielectric substrate 33 is sandwiched between the plurality of drive electrodes 31DP and the plurality of sensing electrodes 33SP. The plurality of sensing electrodes 33SP and the parts of the sensing electrode surface 33S on which the sensing electrodes 33SP are not positioned are bonded to the cover layer 22 by means of the one transparent adhesive layer 23.

The transparent adhesive layer 23 is light transmissive to transmit the information such as an image displayed on the display surface, and a polyether-based adhesive or an acrylic-based adhesive is used as the transparent adhesive layer 23, for example. The type of adhesive used as the transparent adhesive layer 23 may be a wet laminate adhesive, or may be a dry laminate adhesive or a hot laminate adhesive.

The cover layer 22 is formed from a glass substrate such as toughened glass or a resin film, for example, and the surface of the cover layer 22 on the opposite side to the transparent adhesive layer 23 is the top surface of the touch panel 20 and functions as an operating surface 20S.

It should be noted that from among the constituent elements described hereinabove, the transparent adhesive layer 23 may be omitted. In a configuration in which the transparent adhesive layer 23 is omitted, the surface of the cover layer 22 that faces the transparent dielectric substrate 33 is set as the sensing electrode surface 33S, and the plurality of sensing electrodes 33SP should be formed by patterning one thin film formed on the sensing electrode surface 33S.

Further, when manufacturing the touch panel 20, a method may be adopted in which the conductive film 21 and the cover layer 22 are bonded to one another by means of the transparent adhesive layer 23, or as an example of a different manufacturing method, the following manufacturing method may be adopted. That is, a thin film layer comprising a conductive metal such as copper is formed on the cover layer 22 such as a resin film, either directly or with an underlayer interposed therebetween, and a resist layer shaped in the pattern of the sensing electrodes 33SP is formed on the thin film layer. The thin film layer is next processed into the plurality of sensing electrodes 33SP by wet etching using ferric chloride or the like, to obtain a first film. Further, in the same way as for the sensing electrodes 33SP, a thin film layer formed on another resin film functioning as the transparent substrate 31 is processed into the plurality of drive electrodes 31DP, to obtain a second film. The first film and the second film are then bonded to the transparent dielectric substrate 33 by means of the transparent adhesive layers 23 and 32 in such a way as to sandwich the transparent dielectric substrate 33.

### Planar structure of conductive film

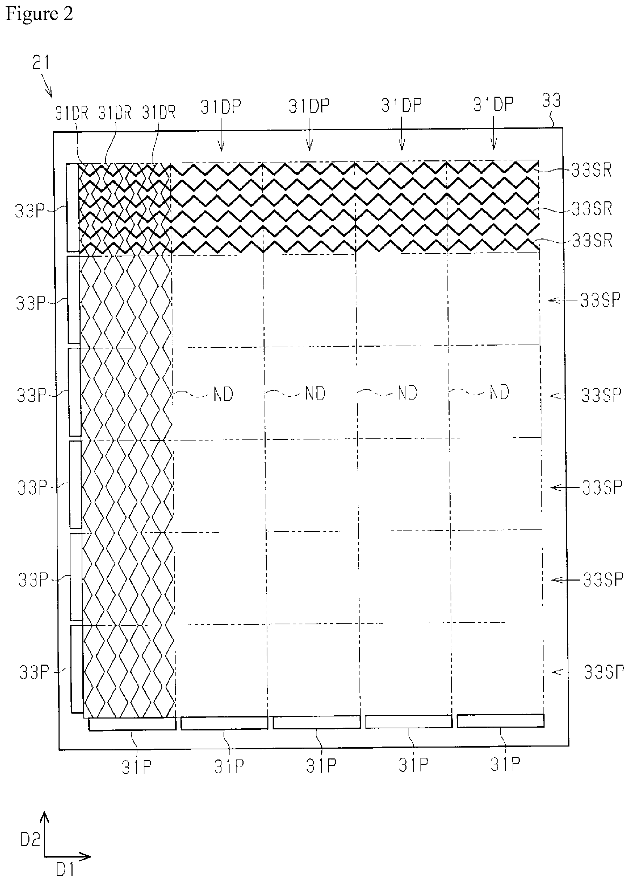

The planar structure of the conductive film 21 will now be described with reference to Figure 2, focusing on the positional relationship between the sensing electrodes 33SP and the drive electrodes 31DP. It should be noted that Figure 2 is a drawing of the conductive film 21 as viewed in a direction facing the top surface of the transparent dielectric substrate 33, wherein each strip-shaped region extending in a lateral direction and surrounded by two-dash chain lines represents a region in which one sensing electrode 33SP is disposed, and each strip-shaped region extending in a longitudinal direction and surrounded by two-dash chain lines represents a region in which one drive electrode 31DP is disposed. The sensing electrodes 33SP and the drive electrodes 31DP are illustrated with the numbers thereof simplified.

Further, in order to facilitate understanding of the configuration of the sensing electrodes 33SP and the drive electrodes 31DP, the sensing electrode wires constituting the sensing electrodes 33SP are represented by thick lines, for only the sensing electrode 33SP positioned uppermost in Figure 2, and the drive electrode wires constituting the drive electrodes 31DP are represented by thin lines, for only the drive electrode 31DP positioned leftmost in Figure 2.

As illustrated in Figure 2, on the sensing electrode surface 33S of the transparent dielectric substrate 33, the plurality of sensing electrodes 33SP each have a strip shape extending in one direction, namely a first electrode direction D1, and are arranged in a second electrode direction D2 orthogonal to the first electrode direction D1. Each sensing electrode 33SP is insulated from other adjacent sensing electrodes 33SP.

Each sensing electrode 33SP consists of a plurality of sensing electrode wires 53SR, and a sensing electrode wire group, which is a set of a plurality of the sensing electrode wires 53SR, is disposed on the sensing electrode surface 33S. A metal film such as copper, silver or aluminum is used as the material for forming the sensing electrode wires 53SR, and the sensing electrode wires 53SR are formed, for example, by performing etching to pattern the metal film which has been deposited on the sensing electrode surface 33S.

Each of the plurality of sensing electrodes 33SP is connected individually, by way of a sensing pad 33P, to a detecting circuit, which is one example of a peripheral circuit of the touch panel 20, and measures a current value by means of the detecting circuit. The plurality of sensing electrode wires 53SR electrically connected to one another by being connected to one sensing pad 33P are the sensing electrode wires 53SR that constitute one sensing electrode 33SP. The plurality of sensing electrode wires 53SR constituting one sensing electrode 33SP cooperatively contribute to the detection of a variation in electrostatic capacitance in the region in which the sensing electrode 33SP is located.

On the drive electrode surface 31S of the transparent substrate 31, the plurality of drive electrodes 31DP each have a strip shape extending in the second electrode direction D2, and are arranged in the first electrode direction D1. Each drive electrode 31DP is insulated from other adjacent drive electrodes 31DP.

Each drive electrode 31DP consists of a plurality of drive electrode wires 51DR, and a drive electrode wire group, which is a set of a plurality of the drive electrode wires 51DR, is disposed on the drive electrode surface 31S. A metal film such as copper, silver or aluminum is used as the material for forming the drive electrode wires 51DR, and the drive electrode wires 51DR are formed, for example, by performing etching to pattern the metal film which has been deposited on the drive electrode surface 31S.

Each of the plurality of drive electrodes 31DP is connected individually, by way of a drive pad 31P, to a selecting circuit, which is one example of a peripheral circuit of the touch panel 20, and is selected by the selecting circuit by receiving a drive signal output by the selecting circuit. The plurality of drive electrode wires 51DR electrically connected to one another by being connected to one drive pad 31P are the drive electrode wires 51DR that constitute one drive electrode 31DP. The plurality of drive electrode wires 51DR constituting one drive electrode 31DP cooperatively contribute to the detection of a variation in electrostatic capacitance in the region in which the drive electrode 31DP is located.

In a plan view facing the top surface of the transparent dielectric substrate 33, a part in which the sensing electrodes 33SP and the drive electrodes 31DP overlap one another is a capacitance detection portion ND having a quadrilateral shape demarcated by the two-dash chain lines in Figure 2. One capacitance detection portion ND is a part in which one sensing electrode 33SP and one drive electrode 31DP intersect each other three-dimensionally, and is the smallest unit in the touch panel 20 in which it is possible to detect the position being touched by the finger of a user, for example.

It should be noted that the method for forming the sensing electrode wires 53SR and the drive electrode wires 51DR is not limited to etching, discussed hereinabove, and other methods such as printing or the like may also be used.

### Planar structure of display panel

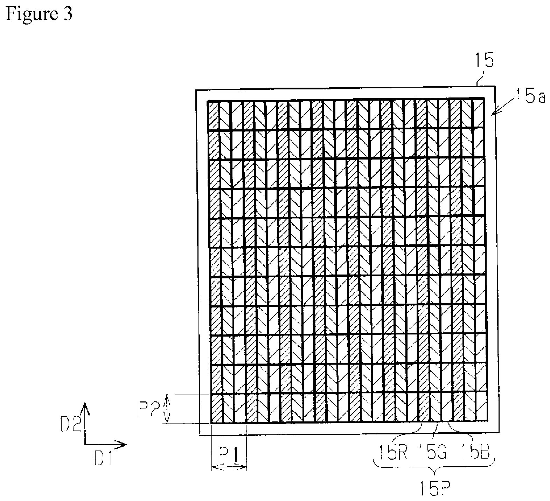

The planar structure of the color filter layer 15 in the display panel 10, that is, the pixel arrangement in the display panel 10, will be described with reference to Figure 3.

As illustrated in Figure 3, a black matrix 15a in the color filter layer 15 has a grid pattern consisting of a plurality of rectangular unit grids arranged in the first electrode direction D1 and the second electrode direction D2. One pixel 15P consists of three unit grids which are continuous in the first electrode direction D1, and a plurality of the pixels 15P are arranged in the first electrode direction D1 and the second electrode direction D2 to form a grid shape.

Each of the plurality of pixels 15P comprises a red colored layer 15R for displaying the color red, a green colored layer 15G for displaying the color green, and a blue colored layer 15B for displaying the color blue. In the color filter layer 15, red colored layers 15R, green colored layers 15G and blue colored layers 15B are repeatedly arranged in this order in the first electrode direction D1, for example. Further, a plurality of the red colored layers 15R are arranged continuously in the second electrode direction D2, a plurality of the green colored layers 15G are arranged continuously in the second electrode direction D2, and a plurality of the blue colored layers 15B are arranged continuously in the second electrode direction D2.

One red colored layer 15R, one green colored layer 15G and one blue colored layer 15B constitute one pixel 15P, and the plurality of pixels 15P are arranged in the first electrode direction D1 with the order in which the red colored layers 15R, the green colored layers 15G and the blue colored layers 15B are arranged in the first electrode direction D1 being maintained. In other words, the plurality of pixels 15P are disposed in the shape of a stripe extending in the second electrode direction D2.

The width of the pixels 15P in the first electrode direction D1 is a first pixel width P1, and the width of the pixels 15P in the second electrode direction D2 is a second pixel width P2. The first pixel width P1 and the second pixel width P2 are each set to a value corresponding to the size of the display panel 10 and the required resolution of the display panel 10, for example.

### Electrical configuration of touch panel

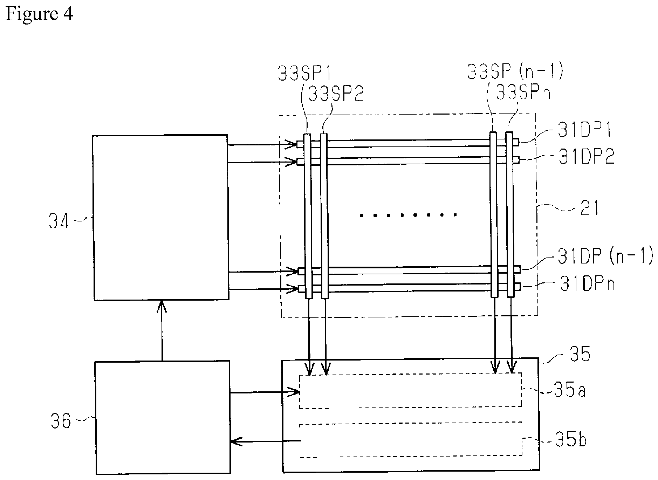

The electrical configuration of the touch panel 20 and the function of a control unit with which the display device 100 is provided will be described with reference to Figure 4. It should be noted that in the following description, the electrical configuration of a mutual-capacitance type touch panel 20 will be described, as one example of the electrostatic capacitance type touch panel 20.

As illustrated in Figure 4, the touch panel 20 is provided, as peripheral circuits, with a selecting circuit 34 and a detecting circuit 35. The selecting circuit 34 is connected to the plurality of drive electrodes 31DP, the detecting circuit 35 is connected to the plurality of sensing electrodes 33SP, and a control unit 36 with which the display device 100 is provided is connected to the selecting circuit 34 and the detecting circuit 35.

The control unit 36 generates and outputs a start timing signal for causing the selecting circuit 34 to start generating a drive signal for each drive electrode 31DP. The control unit 36 generates and outputs a scan timing signal for causing the selecting circuit 34 to sequentially scan the target to which the drive signal is to be supplied, from a first drive electrode 31DP1 toward an n-th drive electrode 31DPn.

The control unit 36 generates and outputs a start timing signal for causing the detecting circuit 35 to start detecting a current flowing through each sensing electrode 33SP. The control unit 36 generates and outputs a scan timing signal for causing the detecting circuit 35 to sequentially scan the target of detection from a first sensing electrode 33SP1 toward an n-th sensing electrode 33SPn.

The selecting circuit 34 starts generating the drive signal on the basis of the start timing signal output by the control unit 36, and scans the output destination of the drive signal from the first drive electrode 31DP1 toward the n-th drive electrode 31DPn on the basis of the scan timing signal output by the control unit 36.

The detecting circuit 35 comprises a signal acquiring unit 35a and a signal processing unit 35b. The signal acquiring unit 35a starts acquiring an electric current signal, which is an analog signal generated by each sensing electrode 33SP, on the basis of the start timing signal output by the control unit 36. Furthermore, the signal acquiring unit 35a scans the acquisition source of the electric current signal from the first sensing electrode 33SP1 toward the n-th sensing electrode 33SPn on the basis of the scan timing signal output by the control unit 36.

The signal processing unit 35b processes each electric current signal acquired by the signal acquiring unit 35a, generates a voltage signal, which is a digital value, and outputs the generated voltage signal to the control unit 36. Thus, by generating the voltage signal from the electric current signal, which changes in accordance with a variation in electrostatic capacitance, the selecting circuit 34 and the detecting circuit 35 measure the variation in the electrostatic capacitance between the drive electrodes 31DP and the sensing electrodes 33SP.

The control unit 36 detects the position in which the finger of the user, for example, is touching the touch panel 20, on the basis of the voltage signal output by the signal processing unit 35b, and uses information relating to the detected position for various processes such as the generation of information to be displayed on the display surface of the display panel 10. It should be noted that the touch panel 20 is not limited to the mutual-capacitance type touch panel 20 discussed hereinabove, and may also be a self-capacitance type touch panel.

### Configuration of sensing electrodes

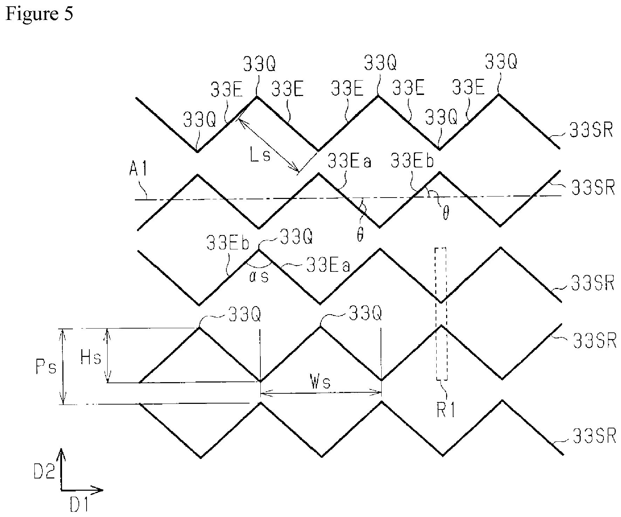

The configuration of the sensing electrodes 33SP will be described with reference to Figure 5.

As illustrated in Figure 5, each of the plurality of sensing electrode wires 33SR has a bent line shape which bends repeatedly with a prescribed period in the first electrode direction D1.

The configuration of one sensing electrode wire 33SR will first be described. Each sensing electrode wire 33SR includes a plurality of bent portions 33Q and a plurality of short line portions 33E in the shape of straight lines joining the bent portions 33Q that are adjacent to one another along the sensing electrode wire 33SR. The plurality of short line portions 33E are arranged in the first electrode direction D1. The bent portions 33Q are parts where two mutually adjacent short line portions 33E are connected to one another, and the bent portions 33Q corresponding to ridge portions in the drawing and the bent portions 33Q corresponding to valley portions in the drawing are arranged alternately one by one along the sensing electrode wire 33SR. In other words, the sensing electrode wires 33SR have a polygonal line shape in which the plurality of short line portions 33E are linked by way of the bent portions 33Q, and which as a whole extend in the first electrode direction D1.

Each of the plurality of short line portions 33E has a length Ls in the direction in which the short line portion 33E extends. The length Ls is constant in the plurality of short line portions 33E. Further, the plurality of short line portions 33E comprise short line portions 33Ea inclined at an angle +θ relative to a base axis A1, which is an imaginary straight line extending in the first electrode direction D1, and short line portions 33Eb inclined at an angle -θ relative to the base axis A1. The short line portions 33Ea and the short line portions 33Eb are arranged alternately in the first electrode direction D1. That is, among the plurality of short line portions 33E, the absolute value of the inclination of each short line portion 33E relative to the base axis A1 is constant, and the short line portions 33E having a positive inclination and the short line portions 33E having a negative inclination are repeated alternately in the first electrode direction D1.

The angle between the short line portions 33Ea and the short line portions 33Eb connected by the bent portions 33Q is a bend angle αs, and the bend angle αs is constant within one sensing electrode wire 33SR. Further, the bend angle αs is bisected by a straight line extending in the second electrode direction D2 through the bent portion 33Q.

A straight line which extends in the first electrode direction D1 through the midpoint of each short line portion 33E of one sensing electrode wire 33SR is a reference line. Bent portions 33Q positioned on one side, in the second electrode direction D2, of the reference line are bent portions 33Q of the sensing electrode wire 33SR that are positioned on one side thereof in the second electrode direction D2, and bent portions 33Q positioned on the other side, in the second electrode direction D2, of the reference line are bent portions 33Q of the sensing electrode wire 33SR that are positioned on the other side thereof in the second electrode direction D2.

A plurality of the bent portions 33Q positioned on one side, in the second electrode direction D2, of the sensing electrode wire 33SR are positioned on a straight line extending in the first electrode direction D1, and a plurality of the bent portions 33Q positioned on the other side, in the second electrode direction D2, of the sensing electrode wire 33SR are also positioned on a straight line extending in the first electrode direction D1. The distance between these straight lines is a bend width Hs. That is, the distance in the second electrode direction D2 between the bent portions 33Q positioned on one side in the second electrode direction D2 and the bent portions 33Q positioned on the other side in the second electrode direction D2 is the bend width Hs. In other words, the bend width Hs is the width in the second electrode direction D2 occupied by one sensing electrode wire 33SR, that is, the width over which one sensing electrode wire 33SR extends in the second electrode direction D2. In other words, the bend width Hs is the length of one short line portion 33E in the second electrode direction D2.

Further, the distance between bent portions 33Q that are adjacent to one another in the first electrode direction D1 on one side or the other side, in the second electrode direction D2, of the sensing electrode wire 33SR is a bending period Ws. The bending period Ws is constant within one sensing electrode wire 33SR. In other words, the bending period Ws is the distance between a ridge portion and a ridge portion of the sensing electrode wire 33SR, and is the distance between a valley portion and a valley portion of the sensing electrode wire 33SR. That is, the bending period Ws is the length of one period of the sensing electrode wire 33SR.

The arrangement of the plurality of sensing electrode wires 33SR will next be described.

The plurality of sensing electrode wires 33SR are arranged in the second electrode direction D2. The plurality of sensing electrode wires 33SR constituting one sensing electrode 33SP are each connected at one end thereof in the first electrode direction D1 to a sensing pad 33P.

The plurality of sensing electrode wires 33SR are arranged in the second electrode direction D2 with the phases thereof offset in the first electrode direction D1. That is, in sensing electrode wires 33SR that are adjacent to one another in the second electrode direction D2, the phases of parts thereof arranged in the second electrode direction D2 are mutually different. The phase is a position, in the first electrode direction D1, within one period of the sensing electrode wire 33SR. For example, the phase is the position in a part extending from a bent portion 33Q that is a valley portion to a bent portion 33Q that is the valley portion adjacent to said valley portion 33Q in the first electrode direction D1.

Specifically, in mutually adjacent sensing electrode wires 33SR, parts thereof arranged in the second electrode direction D2 have opposite phases. In other words, the phases of mutually adjacent sensing electrode wires 33SR are inverted. For example, in the central part of a region R1 illustrated in Figure 5, if the interval between a valley portion and a valley portion is one period, then the phase of the sensing electrode wire 33SR on the upper side in the drawing corresponds to the start position of one period, and the phase of the sensing electrode wire 33SR on the lower side in the drawing corresponds to a position halfway through one period. With such a configuration, the bent portions 33Q that are ridge portions and the bent portions 33Q that are valley portions are arranged alternately in the second electrode direction D2, and the short line portions 33Ea and the short line portions 33Eb are arranged alternately in the second electrode direction D2.

The plurality of sensing electrode wires 33SR are arranged with a constant arrangement spacing in the second electrode direction D2, where said arrangement spacing is an electrode wire spacing Ps. That is, the electrode wire spacing Ps is the distance in the second electrode direction D2 between ridge portions and ridge portions or valley portions and valley portions of mutually adjacent sensing electrode wires 33SR. Further, the length Ls of the short line portions 33E, the bend angle αs, the bend width Hs and the bending period Ws are constant among the plurality of sensing electrode wires 33SR.

The parameters of bend angle αs, bend width Hs, bending period Ws and electrode wire spacing Ps are preferably set using Fourier analysis to values that suppress moiré generation when the pattern formed by the plurality of sensing electrode wires 33SR and the pixel pattern of the display panel 10 are superimposed. More specifically, the contrast of moiré occurring when the pattern formed by the plurality of sensing electrode wires 33SR is superimposed on a pixel pattern having a prescribed period, and the pitch and angle of stripes visually recognized as moiré are calculated, and the values of each parameter are set in such a way that moiré is not liable to be visually recognized. At this time, it is preferable to obtain parameter values with which the generation of moiré can be suppressed in common with respect to pixel patterns of a plurality of display panels 10 having mutually different sizes and mutually different resolutions. The plurality of display panels 10 to be superimposed should at least include two types of display panel having mutually different sizes or two types of display panel having mutually different resolutions.

In the Fourier analysis, frequency information is acquired by performing a Fourier transformation of the patterns to be superimposed, a convolution of the resulting two-dimensional Fourier pattern is calculated, following which a two-dimensional mask is applied, and an image is reconstructed by means of a reverse Fourier transform. Since the pitch of the moiré is greater than the period of the original superimposed patterns, the two-dimensional mask should be applied in such a way that high-frequency components are removed by the two-dimensional mask, and only low frequency components are extracted. Setting the size of the mask to a size determined in accordance with human visual response characteristics makes it possible, after the image has been reconstructed, to determine the degree of visually recognized moiré, by calculating the contrast, pitch and angle of the moiré.

Further, the electrode wire spacing Ps is preferably set to within a range of between 10% or more and 600% or less of the first pixel width P1 and the second pixel width P2 in the display panel 10. If the first pixel width P1 and the second pixel width P2 are different from one another, the range should be based on the larger of the first pixel width P1 and the second pixel width P2.

If the electrode wire spacing Ps is at least equal to 10% of the first pixel width P1 and the second pixel width P2, the proportion of the pattern occupied by the electrode wires does not become excessive, and therefore a deterioration in the transmittance of light in the touch panel 20 can be suppressed. Meanwhile, if the electrode wire spacing Ps is at most equal to 600% of the first pixel width P1 and the second pixel width P2, detection accuracy of a position on the touch panel 20 is increased.

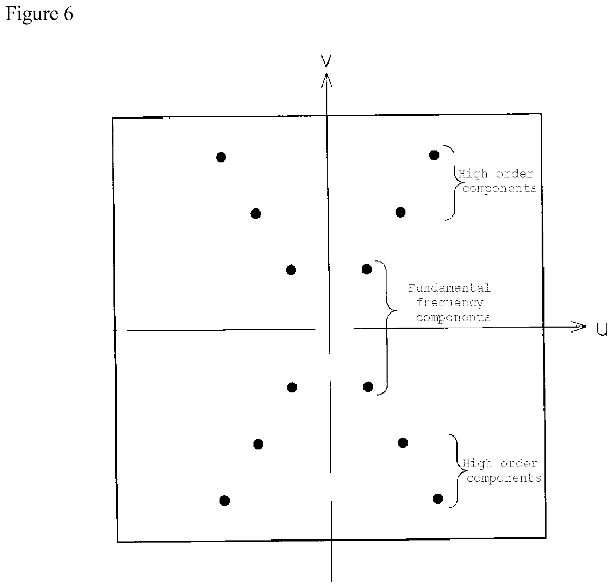

Further, the bend width Hs is preferably set to within a range in which an occupancy ratio Hs/Ps, which is the ratio of the bend width Hs to the electrode wire spacing Ps set as discussed hereinabove, is more than 0.75 and 1.0 or less. The reasons for defining this range of the occupancy ratio Hs/Ps will be described with reference to Figure 6 to Figure 8.

Figure 6 presents a result obtained by performing an FFT (Fast Fourier Transformation) to analyze the pattern formed by the plurality of sensing electrode wires 33SR for a case in which H5/Ps=1.0. Figure 6 illustrates a power spectrum obtained by performing a two-dimensional Fourier transformation of the pattern formed by the plurality of sensing electrode wires 33SR. In Figure 6, characteristic peaks are emphasized, and weak points having a low correlation with the pattern of sensing electrode wires 33SR are omitted.

The origin in the drawing represents the peak of a direct current component, and in a two-dimensional frequency space, fundamental spatial frequency components and high order components appear in directions defined by the bend angle αs and the bending period Ws.

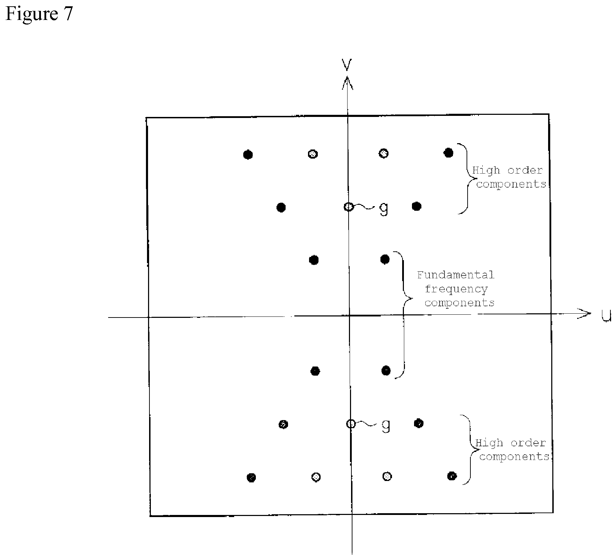

Figure 7 presents a result obtained by performing an FFT to analyze the pattern formed by the plurality of sensing electrode wires 33SR for a case in which H5/Ps<1.0. A comparison with Figure 6 confirms that new high order components have been generated in the power spectrum illustrated in Figure 7.

Here, attention will be paid to the frequency component g appearing on the v-axis. The frequency component g is derived only from the second electrode direction D2 periodicity contained in the pattern of sensing electrode wires 33SR. The high intensity of the frequency component g indicates that an element extending in the first electrode direction D1 in the pattern of sensing electrode wires 33SR has a large frequency component, and in this case, when the pixel pattern of the display panel 10 and the pattern of sensing electrode wires 33SR, extending similarly in the first electrode direction D1, are superimposed, the patterns interfere, and moiré having a high contrast is liable to be generated.

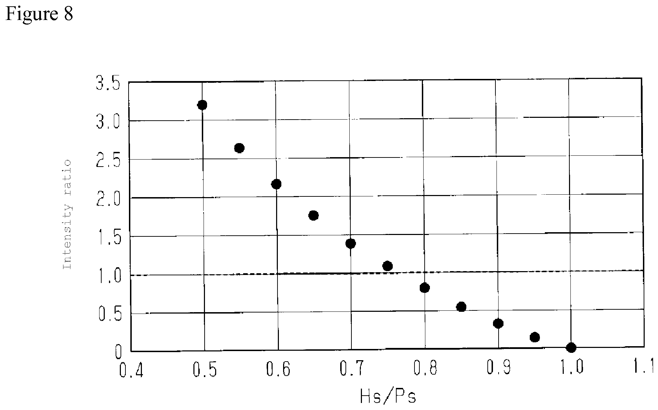

Figure 8 presents a result obtained by analyzing how the intensity of the frequency component g in the FFT analysis result varies with respect to the intensity of a fundamental spatial frequency component when the occupancy ratio Hs/Ps is varied. That is, Figure 8 represents a relationship between the size of the gap between mutually adjacent sensing electrode wires 33SR and the intensity of the frequency component g. In Figure 8, the vertical axis represents a ratio of the spectral intensity of the frequency component g to the spectral intensity of the fundamental spatial frequency component, and the horizontal axis represents the occupancy ratio Hs/Ps.

As illustrated in Figure 8, the smaller the occupancy ratio Hs/Ps, in other words the larger the size of the gap between mutually adjacent sensing electrode wires 33SR, the larger the intensity of the frequency component g relative to the fundamental spatial frequency component. The intensity of the frequency component g is preferably as small as possible, and in particular, in order to suppress an increase in the periodicity of the pattern of sensing electrode wires 33SR, which gives rise to moiré, the intensity of the frequency component g is preferably lower than the intensity of the fundamental spatial frequency component. That is, the intensity ratio represented in Figure 8 is preferably smaller than 1.0. In other words, the occupancy ratio Hs/Ps is preferably greater than 0.75.

It should be noted that if the occupancy ratio Hs/Ps exceeds 1.0, mutually adjacent electrode wires intersect one another and a pattern in which the bent line shaped sensing electrode wires 33SR are arranged does not form, and therefore in the pattern of sensing electrode wires 33SR in this mode of embodiment the occupancy ratio Hs/Ps is at most equal to 1.0.

Further, the bend angle αs is preferably at least equal to 95 degrees and at most equal to 150 degrees, and more preferably at least equal to 100 degrees and at most equal to 140 degrees. Setting the bend angle αs to at least 95 degrees prevents the number of short line portions 33E becoming large and causing the proportion of the pattern occupied by the electrode wires becoming excessive, and therefore a deterioration in the transmittance of light in the touch panel 20 can be suppressed. Meanwhile, if the bend angle αs is at most equal to 150 degrees, the bending period Ws is maintained in a range that is not too large, and it is therefore straightforward to set the electrode wire spacing Ps and the occupancy ratio Hs/Ps to values within appropriate ranges.

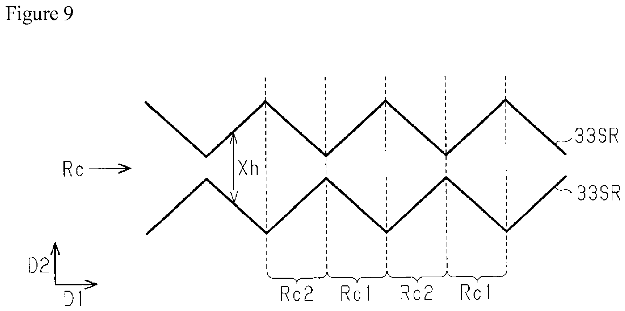

As illustrated in Figure 9, a region between two sensing electrode wires 33SR that are adjacent to one another in the second electrode direction D2 is an intermediate region Rc. The intermediate region Rc is a strip-shaped region extending in the first electrode direction D1. Furthermore, the length of the intermediate region Rc in the second electrode direction D2 is a region width Xh. The intermediate region Rc includes enlarging regions Rc1 in which the region width Xh becomes larger in the first electrode direction D1, and contracting regions Rc2 in which the region width Xh becomes smaller in the first electrode direction D1. In the first mode of embodiment, the enlarging regions Rc1 and the contracting regions Rc2 are disposed alternately with no gaps in the first electrode direction D1.

### Configuration of drive electrodes

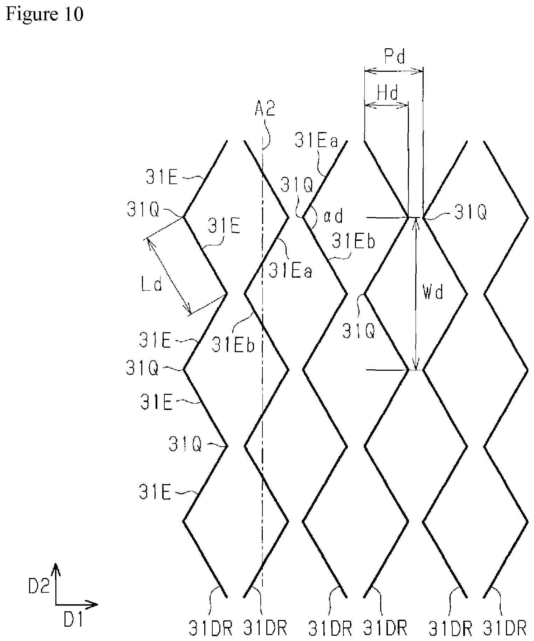

The configuration of the drive electrodes 31DP will be described with reference to Figure 10.

As illustrated in Figure 10, each drive electrode wire 31DP has a bent line shape which bends repeatedly with a prescribed period in the second electrode direction D2. In the same way as with the plurality of sensing electrode wires 33SR, the plurality of drive electrode wires 31DR are arranged with the phases thereof offset.

Specifically, each drive electrode wire 31DR includes a plurality of bent portions 31Q and a plurality of short line portions 31E in the shape of straight lines joining the bent portions 31Q that are adjacent to one another along the drive electrode wire 31DR. The drive electrode wires 31DR have a polygonal line shape extending as a whole in the second electrode direction D2.

Each of the plurality of short line portions 31E has a length Ld in the direction in which the short line portion 31E extends. The length Ld of the short line portions 31E is constant in the plurality of drive electrode wires 31DR. Further, the absolute values of the inclinations of each short line portion 31E relative to a base axis A2, which is a straight line extending in the second electrode direction D2, are equal, and short line portions 31Ea having a positive inclination and short line portions 31Eb having a negative inclination are repeated alternately in the second electrode direction D2 in one drive electrode wire 31DR.

A bend angle αd is the angle between the short line portions 31Ea and the short line portions 31Eb connected by the bent portions 31Q, and the bend angle αd is constant in the plurality of drive electrode wires 31DR. Further, the bend angle αd is bisected by a straight line extending in the first electrode direction D1 through the bent portion 31Q.

A straight line which extends in the second electrode direction D2 through the midpoint of each short line portion 31E of one drive electrode wire 31DR is a reference line. Bent portions 31Q positioned on one side, in the first electrode direction D1, of the reference line are bent portions 31Q of the drive electrode wire 31DR positioned on one side thereof in the first electrode direction D1, and bent portions 31Q positioned on the other side, in the first electrode direction D1, of the reference line are bent portions 31Q of the drive electrode wire 31DR positioned on the other side thereof in the first electrode direction D1.

A plurality of the bent portions 31Q positioned on one side, in the first electrode direction D1, of the drive electrode wire 31DR and a plurality of the bent portions 31Q positioned on the other side, in the first electrode direction D1, of the drive electrode wire 31DR are positioned on separate straight lines extending in the second electrode direction D2. The distance between these straight lines is a bend width Hd. That is, the distance in the first electrode direction D1 between the bent portions 31Q positioned on one side in the first electrode direction D1 and the bent portions 31Q positioned on the other side in the first electrode direction D1 is the bend width Hd. The bend width Hd is constant in the plurality of drive electrode wires 31DR.

Further, the distance between bent portions 31Q that are adjacent to one another in the second electrode direction D2 on one side or the other side in the first electrode direction D1 is a bending period Wd. The bending period Wd is the length of one period of the drive electrode wire 31DR. The bending period Wd is constant in the plurality of drive electrode wires 31DR.

The plurality of drive electrode wires 31DR are arranged in the first electrode direction D1 with an electrode wire spacing Pd, which is a constant arrangement spacing. The plurality of drive electrode wires 31DR constituting one drive electrode 31DP are each connected at one end thereof in the second electrode direction D2 to a drive pad 31P.

The phase in each drive electrode wire 31DR is a position, in the second electrode direction D2, within one period of the drive electrode wire 31DR. The plurality of drive electrode wires 31DR are arranged in the first electrode direction D1 with the phases thereof offset in the second electrode direction D2. That is, in drive electrode wires 31DR that are adjacent to one another in the first electrode direction D1, the phases of parts thereof arranged in the first electrode direction D1 are mutually different. Specifically, in mutually adjacent drive electrode wires 31DR, parts thereof arranged in the first electrode direction D1 have opposite phases, and the phases of mutually adjacent drive electrode wires 31DR are inverted.

Also in the drive electrodes 31DP, a region between two drive electrode wires 31DR that are adjacent to one another in the first electrode direction D1 is an intermediate region, and the intermediate region includes an enlarging region in which the length of the intermediate region in the first electrode direction D1 becomes larger in the second electrode direction D2, and a contracting region in which the length of the intermediate region in the first electrode direction D1 becomes smaller in the second electrode direction D2. Furthermore, the enlarging region and the contracting region are disposed alternately with no gaps in the second electrode direction D2.

In the drive electrode wires 31DR, the bend angle αd, the bend width Hd, the bending period Wd and the electrode wire spacing Pd are each preferably set in such a way as to satisfy the same conditions as the conditions indicated for the bend angle αs, the bending period Ws, the bend width Hs and the electrode wire spacing Ps respectively in the above description of the sensing electrode wires 33SR.

That is, the parameters of bend angle αd, bend width Hd, bending period Wd and electrode wire spacing Pd are preferably set to values that suppress moiré generation when the pattern formed by the plurality of drive electrode wires 31DR and the pixel pattern of the display panel 10 are superimposed. Further, the bend angle αd is preferably at least equal to 95 degrees and at most equal to 150 degrees, and more preferably at least equal to 100 degrees and at most equal to 140 degrees. It should be noted that at least one of the bend angle αs of the sensing electrode wires 33SR and the bend angle αd of the drive electrode wires 31DR should be within the abovementioned range. Further, the electrode wire spacing Pd is preferably set to within a range of between 10% or more and 600% or less of the first pixel width P1 and the second pixel width P2 in the display panel 10. Further, the bend width Hd and the electrode wire spacing Pd are preferably set to within a range in which the ratio of the bend width Hd to the electrode wire spacing Pd (Hd/Pd) is more than 0.75 and 1.0 or less.

In the sensing electrode wires 33SR and the drive electrode wires 31DR, the values in each set comprising the length Ls of the short line portions 33E and the length Ld of the short line portions 31E, the bend angle αs and the bend angle αd, the bend width Hs and the bend width Hd, the bending period Ws and the bending period Wd, and the electrode wire spacing Ps and the electrode wire spacing Pd may be the same or different in each set. However, the bending period Ws of the sensing electrode wires 33SR is preferably twice the electrode wire spacing Pd of the drive electrode wires 31DR (Ws=2×Pd), and the bending period Wd of the drive electrode wires 31DR is preferably twice the electrode wire spacing Ps of the sensing electrode wires 33SR (Wd=2×Ps). The reasons for this will be described below with reference to a pattern in which the sensing electrode wires 33SR and the drive electrode wires 31DR are superimposed.

### Configuration of electrode wire pattern

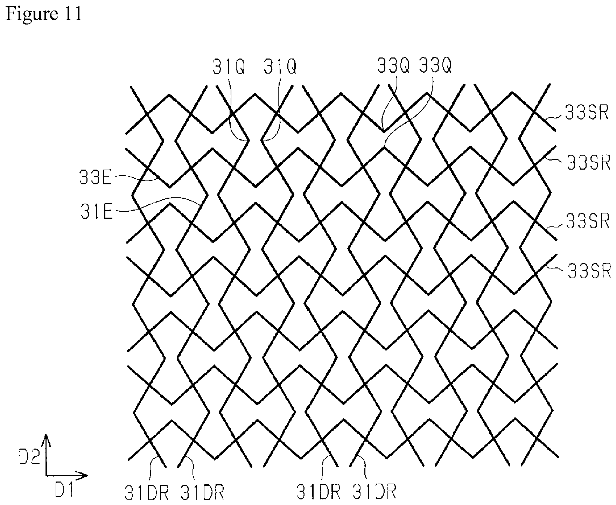

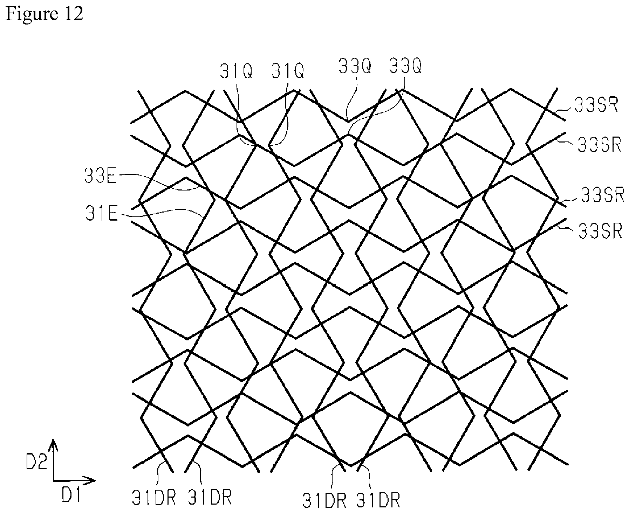

An electrode wire pattern, which is a pattern formed by superimposing the plurality of sensing electrode wires 33SR and the plurality of drive electrode wires 31DR, will be described with reference to Figure 11 and Figure 12.

As illustrated in Figure 11, a pattern formed by superimposing the pattern formed by the plurality of sensing electrode wires 33SR discussed hereinabove and the pattern formed by the plurality of drive electrode wires 31DR is formed in the conductive film 21 when viewed in a direction facing the top surface of the transparent dielectric substrate 33. At this time, the electrode wires are overlaid in such a way that the sensing electrodes 33SP and the drive electrodes 31DP intersect at right angles, that is, in such a way that the direction in which the sensing electrode wires 33SR extend and the direction in which the drive electrode wires 31DR extend intersect at right angles.

Since the electrode wire pattern in the present mode of embodiment is a pattern obtained by arranging polygons having at least two shape types that are different from rectangles, the periodicity of the pattern is low in comparison with a pattern in which rectangles having the same shape are repeated, as in a pattern in which electrode wires extending linearly intersect one another. Therefore, the offset between the pixel pattern and the electrode wire pattern is not readily recognized as an offset between two periodic structures, and therefore when the electrode wire pattern in the present mode of embodiment is superimposed on the pixel pattern of the display panel 10, visual recognition of moiré is suppressed. As a result, a deterioration in the quality of images visually recognized on the display device 100 is suppressed. In particular, visual recognition of moiré is suppressed more suitably when the pixel pattern and the electrode wire pattern are superimposed with a configuration in which the bend angles αs and αd, the bend widths Hs and Hd, the bending periods Ws and Wd, and the electrode wire spacings Ps and Pd are each set to values with which moiré generation does not readily occur.

Furthermore, since the phases of mutually adjacent electrode wires are offset in both the plurality of sensing electrode wires 33SR and the plurality of drive electrode wires 31DR, a situation does not occur in which short line portions 33E or 31E having the same inclination are arranged in the first electrode direction D1 or the second electrode direction D2. Consequently, strip-shaped regions in which short line portions 33E or 31E having the same inclination are arranged do not form in such a way as to extend in the direction in which the electrode wires are arranged. There is also no occurrence of an alternating arrangement of two types of strip-shaped regions in which the directions in which the short line portions 33E or 31E extend differ from one another. Consequently, visual recognition of a strip-shaped pattern as a result, in particular, of the reflection of external light when the display device 100 is unlit is suppressed, and a reduction in the quality of the appearance as seen from the operating surface 20S is suppressed.

Here, if Ws=2×Pd and Wd=2×Ps, then the arrangement of the sensing electrode wires 33SR relative to the drive electrode wires 31DR as viewed in a direction facing the top surface of the transparent dielectric substrate 33 is constant within the plane. That is, the positions of the bent portions 33Q and the short line portions 33E of the sensing electrode wires 33SR relative to the bent portions 31Q and the short line portions 31E of the drive electrode wires 31DR are constant within the plane. The electrode wires can therefore be arranged in such a way that the arrangement density of the electrode wires in the electrode wire pattern is uniform within the plane.

For example, as illustrated in Figure 11, the bent portions 33Q of the sensing electrode wires 33SR overlap gaps between mutually adjacent drive electrode wires 31DR, in a central portion between said electrode wires, and the bent portions 31Q of the drive electrode wires 31DR overlap gaps between mutually adjacent sensing electrode wires 33SR, in a central portion between said electrode wires. Furthermore, when viewed in the direction facing the top surface of the transparent dielectric substrate 33, midpoints of the short line portions 33E of the sensing electrode wires 33SR and midpoints of the short line portions 31E of the drive electrode wires 31DR intersect. Furthermore, the electrode wire pattern is a pattern in which two types of octagon having mutually different shapes are arranged alternately in both the first electrode direction D1 and the second electrode direction D2. Each of these octagons has two mutually opposing reflex angles.

In contrast, if Ws=2×Pd and Wd=2×Ps are not satisfied among the sensing electrode wires 33SR and the drive electrode wires 31DR, as illustrated in Figure 12, then the positions of the bent portions 33Q and the short line portions 33E of the sensing electrode wires 33SR relative to the bent portions 31Q and the short line portions 31E of the drive electrode wires 31DR differ depending on the location within the plane. It is therefore inevitable that regions in which the electrode wires are arranged densely and regions in which the electrode wires are arranged sparsely are generated. Although visual recognition of strip-shaped patterns is also suppressed with such a configuration, if the sparsity or density of the electrode wires is excessively non-uniform, then the difference between the sparsity or density of the electrode wires may cause unevenness in brightness, for example, within the regions in which the electrode wire pattern is located, and this may give rise to a phenomenon known as graining. Graining is a phenomenon whereby, when viewed from the operating surface 20S of the touch panel 20, flicker or screen glare distributed in a sand-like manner can be perceived. It is therefore preferable that Ws=2×Pd and Wd=2×Ps are satisfied in the sensing electrode wires 33SR and the drive electrode wires 31DR.

As described hereinabove, according to the first mode of embodiment the advantages detailed below can be obtained.
(1) Since the phases of mutually adjacent sensing electrode wires 33SR are offset, the formation of strip-shaped regions arranged in the second electrode direction D2 by short line portions 33E extending in the same direction, from among the plurality of sensing electrode wires 33SR, is suppressed. Furthermore, an alternating arrangement in the first electrode direction D1 of two types of strip-shaped regions in which the directions in which the short line portions 33E extend differ from one another is also suppressed. Therefore, since visual recognition, as a result of reflected light, for example, of a strip-shaped pattern resulting from such an arrangement of strip-shaped regions is suppressed, a reduction in the quality of the appearance as seen from the operating surface 20S is suppressed. Similarly, since the phases of mutually adjacent drive electrode wires 31DR are offset, the formation of strip-shaped regions arranged in the first electrode direction D1 by short line portions 31E extending in the same direction, from among the plurality of drive electrode wires 31DR, is suppressed. Furthermore, an alternating arrangement in the second electrode direction D2 of two types of strip-shaped regions in which the directions in which the short line portions 31E extend differ from one another is also suppressed. Therefore, since visual recognition of a strip-shaped pattern resulting from such an arrangement of strip-shaped regions is suppressed, a reduction in the quality of the appearance as seen from the operating surface 20S is suppressed.
(2) Since the phases of mutually adjacent sensing electrode wires 33SR are inverted, an arrangement in the second electrode direction D2 of short line portions 33E extending in the same direction, and an alternating arrangement in the first electrode direction D1 of two types of strip-shaped regions in which the directions in which the short line portions 33E extend differ from one another are reliably suppressed. Similarly, since the phases of mutually adjacent drive electrode wires 31DR are inverted, an arrangement in the first electrode direction D1 of short line portions 31E extending in the same direction, and an alternating arrangement in the second electrode direction D2 of two types of strip-shaped regions in which the directions in which the short line portions 31E extend differ from one another are reliably suppressed. Visual recognition of a strip-shaped pattern can therefore be suitably suppressed.
(3) In the sensing electrode wires 33SR, the occupancy ratio Hs/Ps, which is the ratio of the bend width Hs to the electrode wire spacing Ps, is more than 0.75 and 1.0 or less. According to such a configuration, periodicity giving rise to moiré is suppressed to a low level in the pattern formed by the plurality of sensing electrode wires 33SR, and therefore visual recognition of moiré in the pattern obtained by superimposing the electrode wire pattern and the pixel pattern is suitably suppressed. Similarly, with a configuration in which the occupancy ratio Hd/Pd in the drive electrode wires 31DR is more than 0.75 and at most equal to 1.0, periodicity giving rise to moiré is suppressed to a low level in the pattern formed by the plurality of drive electrode wires 31DR.
(4) The bending period Ws of the sensing electrode wires 33SR is twice the electrode wire spacing Pd of the drive electrode wires 31DR, and the bending period Wd of the drive electrode wires 31DR is twice the electrode wire spacing Ps of the sensing electrode wires 33SR. According to such a configuration, the positions of the bent portions 33Q of the sensing electrode wires 33SR relative to the bent portions 31Q of the drive electrode wires 31DR as viewed in a direction facing the top surface of the transparent dielectric substrate 33 are constant within the pattern formed by the electrode wires. Consequently, the electrode wires can be arranged in such a way that the arrangement density of the electrode wires in the electrode wire pattern is uniform within the plane. Therefore, since visual recognition of graining, which occurs as a result of a difference in the sparsity or density of the electrode wires, is suppressed, a deterioration in the quality of images visually recognized on the display device 100 is suppressed.

### Second mode of embodiment

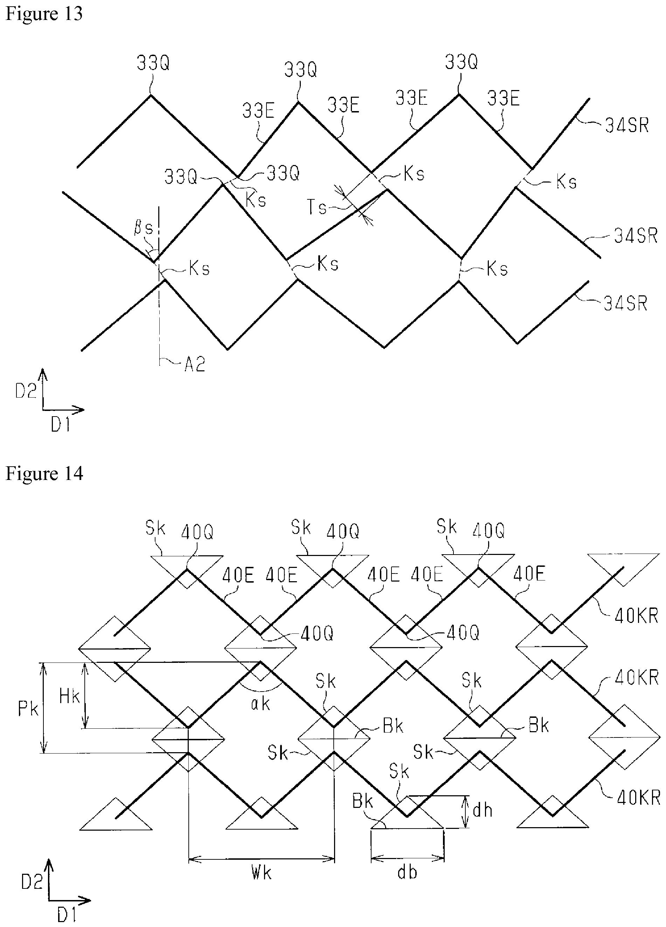

A second mode of embodiment of a conductive film, a touch panel and a display device will be described with reference to Figure 13 to Figure 15. The following description focuses on points of difference between the second mode of embodiment and the first mode of embodiment, and aspects of the configuration that are the same as in the first mode of embodiment are denoted using the same reference codes, and descriptions thereof are omitted.

### Configuration of sensing electrode wire group

The configuration of sensing electrode wires 34SR in the second mode of embodiment will be described with reference to Figure 13. As illustrated in Figure 13, the sensing electrode wires 34SR in the second mode of embodiment have an irregular bent line shape, and are created on the basis of the regular bent line shape in the first mode of embodiment.

In the sensing electrode wires 34SR in the second mode of embodiment, the length Ls of each short line portion 33E varies irregularly with respect to the order in which the short line portions 33E are arranged, among the plurality of short line portions 33E arranged in the first electrode direction D1 in one sensing electrode wire 34SR. Further, the absolute value of the inclination of each short line portion 33E relative to the base axis A1 varies irregularly with respect to the order in which the short line portions 33E are arranged, among the plurality of short line portions 33E arranged in the first electrode direction D1 in one sensing electrode wire 34SR.

In two sensing electrode wires 34SR that are adjacent to one another in the second electrode direction D2, an imaginary line segment joining a bent portion 33Q of one of the sensing electrode wires 345R positioned on the side thereof, in the second electrode direction D2, on which the other sensing electrode wire 34SR is positioned, and the bent portion 33Q of the other sensing electrode wire 34SR that is closest to said bent portion 33Q is an imaginary line Ks.

The length of the imaginary line Ks, in other words the distance between adjacent bent portions 33Q in two mutually adjacent sensing electrode wires 34SR, is an inter-bent portion distance Ts. The inter-bent portion distance Ts is preferably at least equal to 0, and the ratio of the inter-bent portion distance Ts to the arrangement spacing of the regular bent lines on which the sensing electrode wires 34SR are based is preferably at most equal to 0.5 and more preferably at most equal to 0.3.

Further, the angle between the base axis A2 extending in the second electrode direction D2 and the imaginary line Ks is an inter-bent portion angle βs. The inter-bent portion angle βs should be set to within a range in which the short line portions 33E in two mutually adjacent sensing electrode wires 34SR do not intersect, and more specifically should be set to within a range of -90 degrees or more to +90 degrees or less.

The inter-bent portion distance Ts varies irregularly with respect to the order in which the imaginary lines Ks are arranged, among the plurality of imaginary lines Ks set for two mutually adjacent sensing electrode wires 34SR. The inter-bent portion angle βs also varies irregularly with respect to the order in which the imaginary lines Ks are arranged, among the plurality of imaginary lines Ks set for two mutually adjacent sensing electrode wires 34SR.

### Method for creating sensing electrode wires

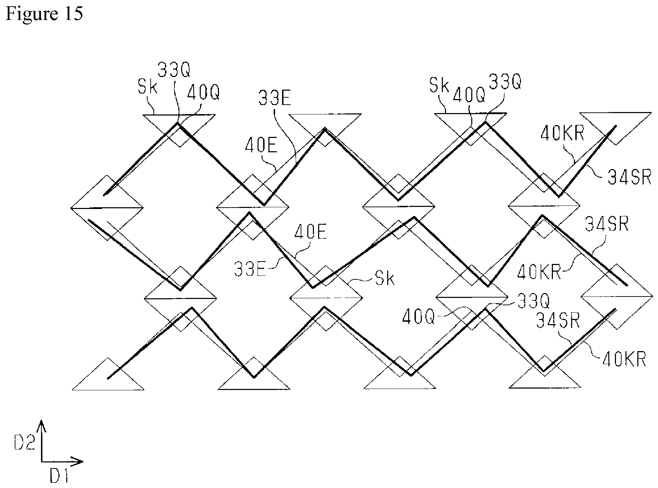

A method for creating the shape of the sensing electrode wires 34SR in the second mode of embodiment will be described with reference to Figure 14 and Figure 15. The sensing electrode wires 34SR in the second mode of embodiment are obtained by irregularly displacing the positions of the bent portions of reference electrode wires having the same shape as the sensing electrode wires 33SR in the first mode of embodiment.

As illustrated in Figure 14, sensing reference electrode wires 40KR are imaginary electrode wires set when creating the sensing electrode wires 34SR, and have the same shape as the sensing electrode wires 33SR in the first mode of embodiment. That is, each sensing reference electrode wire 40KR has a bent line shape which bends repeatedly with a prescribed period in the first electrode direction D1, and comprises a plurality of reference bent portions 40Q and a plurality of reference short line portions 40E in the shape of straight lines joining the reference bent portions 40Q that are adjacent to one another along the sensing reference electrode wire 40KR. In other words, from among the plurality of reference bent portions 40Q, the reference bent portions 40Q positioned on one side, in the second electrode direction D2, of the sensing reference electrode wire 40KR are first imaginary bent portions, the reference bent portions 40Q positioned on the other side thereof in the second electrode direction D2 are second imaginary bent portions, and the first imaginary bent portions and the second imaginary bent portions are arranged alternately and periodically along the sensing reference electrode wire 40KR. Furthermore, the plurality of first imaginary bent portions and the plurality of second imaginary bent portions are positioned on separate straight lines extending in the first electrode direction D1.

Further, the phase in each sensing reference electrode wire 40KR is a position, in the first electrode direction D1, within one period of the sensing reference electrode wire 40KR, and the plurality of sensing reference electrode wires 40KR are arranged in the second electrode direction D2 with the phases thereof offset in the first electrode direction D1. The phases of mutually adjacent sensing reference electrode wires 40KR are inverted.

In the sensing reference electrode wires 40KR, a bend angle αk serving as a reference angle, a bend width Hk serving as a reference width, a bending period Wk serving as a reference period, and an electrode wire spacing Pk serving as a reference spacing correspond respectively to the bend angle αs, the bend width Hs, the bending period Ws, and the electrode wire spacing Ps of the sensing electrode wires 335R in the first mode of embodiment. It should be noted that with regard to the length of the inter-bent portion distance Ts in the sensing electrode wires 34SR, the regular bent line arrangement spacing discussed hereinabove is the electrode wire spacing Pk. That is, the length of the inter-bent portion distance Ts is preferably at most equal to 0.5 times and more preferably at most equal to 0.3 times the electrode wire spacing Pk.

The bent portions 33Q of the sensing electrode wires 34SR are disposed in positions that are displaced from the reference bent portions 40Q of the sensing reference electrode wires 40KR within triangular displacement regions Sk surrounding the reference bent portions 40Q. One sensing electrode wire 34SR has a shape in which the position of each reference bent portion 40Q of one sensing reference electrode wire 40KR is displaced irregularly, within the displacement region Sk for each reference bent portion 40Q, with respect to the order in which the reference bent portions 40Q are arranged.

Each displacement region Sk is in the shape of an isosceles triangle having a base Bk extending in the first electrode direction D1. Each displacement region Sk is disposed with the base Bk thereof facing toward the outside of the sensing reference electrode wire 40KR, in such a way that an imaginary straight line extending in the second electrode direction D2 through the reference bent portion 40Q passes through the vertex of the isosceles triangle and the midpoint of the base Bk. Each base Bk is disposed centrally between two sensing reference electrode wires 40KR that are adjacent to one another in the second electrode direction D2. Furthermore, each base Bk is shared between the displacement region Sk set for the reference bent portion 40Q of one sensing reference electrode wire 40KR and the displacement region Sk set for the reference bent portion 40Q of another sensing reference electrode wire 40KR facing said reference bent portion 40Q. That is, the base Bk of each displacement region Sk is disposed in a position separated in the second electrode direction D2 from the position, in the second electrode direction D2, of the center of the sensing reference electrode wire 40KR by a distance that is half the electrode wire spacing Pk.

The length db of the base Bk is preferably at least equal to 0.1 times and at most equal to 0.9 times the bending period Wk. Further, the height dh of the triangle constituting the displacement region Sk is preferably at least equal to 0.05 times and at most equal to 0.45 times the electrode wire spacing Pk.

If the length db and the height dh are at least equal to these lower limits, an electrode wire shape in which the periodicity of the sensing reference electrode wire 40KR is adequately disrupted is obtained for the sensing electrode wire 34SR. Meanwhile, if the length db and the height dh are at most equal to the upper limits, the sensing electrode wire 34SR is prevented from adopting an excessively irregular bent line shape. For example, the intersection of mutually adjacent sensing electrode wires 34SR in the pattern of the sensing electrode wires 34SR is suppressed.

Figure 15 illustrates an example of the pattern of sensing electrode wires 34SR obtained by irregularly displacing the positions of each reference bent portion 40Q of a plurality of sensing reference electrode wires 40KR within the displacement region Sk set for each reference bent portion 40Q. In Figure 15, the sensing reference electrode wires 40KR are indicated by thin lines, and the sensing electrode wires 34SR are indicated by thick lines.

In order for the pattern of sensing electrode wires 34SR to be a pattern in which, among the plurality of imaginary lines Ks set for two mutually adjacent sensing electrode wires 34SR, both the inter-bent portion distance Ts and the inter-bent portion angle βs change irregularly with respect to the order in which the imaginary lines Ks are arranged, the bent portions 34Q of the sensing electrode wires 34SR are disposed in positions displaced from the reference bent portions 40Q. For example, with regard to a set of two opposing reference bent portions 40Q in two mutually adjacent sensing reference electrode wires 40KR, the inter-bent portion distance Ts and the inter-bent portion angle βs in one set of bent portions 33Q that have been moved to arbitrarily defined positions within the respective displacement regions Sk for the one set of reference bent portions 40Q are respectively set as initial values of said parameters. The inter-bent portion distance Ts and the inter-bent portion angle βs are then set using pseudo-random numbers in the order in which the imaginary lines Ks are arranged, and the positions of the bent portions 34Q after displacement relative to the respective set of reference bent portions 40Q are determined on the basis of the set inter-bent portion distance Ts and inter-bent portion angle βs.

The bent portions 33Q of each sensing electrode wire 34SR are positioned in positions displaced within the respective displacement regions Sk from the reference bent portions 40Q, and the short line portions 33E of the sensing electrode wires 34SR are positioned in positions joining the bent portions 33Q. By displacing the positions of the reference bent portions 40Q of the plurality of sensing reference electrode wires 40KR irregularly with respect to the order in which the reference bent portions 40Q of each sensing reference electrode wire 40KR are arranged, a pattern formed by the plurality of sensing electrode wires 34SR is formed.

Similarly, the positions of the bent portions of reference electrode wires having the same shape as the drive electrode wires 31DR in the first mode of embodiment are displaced irregularly with respect to order in which the bent portions are arranged, to obtain the drive electrode wires in the second mode of embodiment. That is, the drive electrode wires in the second mode of embodiment also have an irregular bent line shape.

As described hereinabove, in the second mode of embodiment the pattern of sensing electrode wires 34SR is a pattern in which the periodicity of the pattern of sensing reference electrode wires 40KR has been disrupted, and the periodicity of the pattern of sensing electrode wires 34SR in the second mode of embodiment is lower than the periodicity of the pattern of sensing electrode wires 33SR in the first mode of embodiment. Similarly, the periodicity of the pattern of drive electrode wires in the second mode of embodiment is lower than the periodicity of the pattern of drive electrode wires 31DR in the first mode of embodiment.

As described above, the periodicity of the electrode wire pattern in the second mode of embodiment, that is, the periodicity of the presence or absence of structure in each of the first electrode direction D1 and the second electrode direction D2, is even lower than in the first mode of embodiment. Consequently, if the electrode wire pattern in the second mode of embodiment is employed, the offset between the pixel pattern and the electrode wire pattern is even less liable to be recognized as an offset between two periodic structures. Therefore, visual recognition of moiré is further suppressed when the electrode wire pattern is superimposed on the pixel pattern of the display panel 10.

Also in each of the sensing electrodes 33SP and the drive electrodes 31DP in the second mode of embodiment, an intermediate region between two mutually adjacent electrode wires includes an enlarging region in which a region width, which is the length of the intermediate region in the direction in which the electrodes are arranged, becomes larger in the direction in which the electrodes extend, and a contracting region in which the region width becomes smaller in the direction in which the electrodes extend. Furthermore, the enlarging region and the contracting region are disposed alternately in the direction in which the electrodes extend. The rate of change in the region width per unit length does not need to be constant in the enlarging regions and the contracting regions respectively. For example, depending on the positions of the bent portions and the inclination of the short line portions, one enlarging region may contain a part in which the region width increases sharply and a part in which the region width increases gently. Further, a region in which the region width is constant may be included between an enlarging region and a contracting region that are adjacent to one another. With a configuration in which the enlarging regions and the contracting regions are disposed alternately in the direction in which the electrodes extend, the formation of strip-shaped regions in which short line portions extending in the same direction are arranged in the direction in which the electrodes extend is suppressed, and an alternating arrangement, with no gaps, of two types of strip-shaped regions in which the directions in which the short line portions extend differ from one another is also suppressed. Visual recognition of a strip-shaped pattern is therefore suppressed to a greater extent than with the conventional configuration illustrated in Figure 48.

As described hereinabove, according to the second mode of embodiment the advantages detailed below can be obtained.
(5) The plurality of sensing electrode wires 34SR each have a bent line shape obtained by displacing the reference bent portions 40Q of the plurality of sensing reference electrode wires 40KR, arranged with offset phases, irregularly with respect to the order in which the reference bent portions 40Q of each sensing reference electrode wire 40KR are arranged. Therefore, the formation of strip-shaped regions in which short line portions 33E extending in the same direction, from among the plurality of sensing electrode wires 34SR, are arranged in the second electrode direction D2 is suppressed, and an alternating arrangement in the first electrode direction D1 of two types of strip-shaped regions in which the directions in which the short line portions 33E extend differ from one another is also suppressed. Consequently, since visual recognition of a strip-shaped pattern resulting from such an arrangement of strip-shaped regions is suppressed, a reduction in the quality of the appearance as seen from the operating surface 20S is suppressed. Furthermore, since the sensing electrode wires 34SR have a bent line shape that bends irregularly, the periodicity of the electrode wire pattern is lower than that of an electrode wire pattern comprising regularly bent lines. Therefore, since visual recognition of moiré when the electrode wire pattern and the pixel pattern are superimposed is suppressed, a deterioration in the quality of images visually recognized on the display device 100 is suppressed.
   Similarly, with regard also to the drive electrode wires, since the plurality of drive electrode wires each have a bent line shape obtained by displacing the bent portions of the plurality of reference electrode wires, arranged with offset phases, irregularly with respect to the order in which the bent portions of each reference electrode wire are arranged, visual recognition of a strip-shaped pattern is suppressed, in addition to which visual recognition of moiré is also suitably suppressed.
(6) Each displacement region Sk, which is the range of displacement of the bent portion 34Q with respect to the reference bent portion 40Q, is in the shape of an isosceles triangle having a base Bk which is positioned centrally between mutually adjacent sensing reference electrode wires 40KR and which extends in the first electrode direction D1. Each displacement region Sk is disposed in a position in which an imaginary straight line extending in the second electrode direction D2 through the reference bent portion 40Q passes through the vertex of the isosceles triangle and the midpoint of the base Bk. Further, the height dh of said isosceles triangle is at least equal to 0.05 times and at most equal to 0.45 times the electrode wire spacing Pk, and the length db of the base Bk is at least equal to 0.1 times and at most equal to 0.9 times the bending period Wk. According to such a configuration, by setting the height dh of the displacement region Sk and the length db of the base Bk to be at least equal to these lower limits, a shape in which the periodicity of the sensing reference electrode wire 40KR is adequately disrupted is obtained as the shape of the sensing electrode wire 34SR. Meanwhile, by setting the height dh of the displacement region Sk and the length db of the base Bk to be at most equal to these upper limits, the intersection of mutually adjacent sensing electrode wires 34SR is suppressed in the pattern formed by the plurality of sensing electrode wires 34SR.
(7) With a configuration in which the inter-bent portion distance Ts in the plurality of sensing electrode wires 34SR is at most equal to 0.5 times the electrode wire spacing Pk in the sensing reference electrode wires 40KR, an imbalance in the arrangement density of the electrode wires in the pattern formed by the plurality of sensing electrode wires 34SR is suppressed.

### Modified examples of first mode of embodiment and second mode of embodiment

The first mode of embodiment and the second mode of embodiment can be modified and implemented as follows.

In the first mode of embodiment, in sensing electrode wires 33SR that are adjacent to one another in the second electrode direction D2, the phases of parts thereof arranged in the second electrode direction D2 are not limited to being opposite phases, but should differ from one another. Even if the phases of mutually adjacent sensing electrode wires 33SR are not inverted, provided that the configuration is such that the phases are offset, an aligned arrangement in the second electrode direction D2 of short line portions 33E extending in the same direction is suppressed, and an alternating arrangement in the first electrode direction D1, with no gaps, of two types of strip-shaped regions in which the directions in which the short line portions 33E extend differ from one another does not occur. Visual recognition of a strip-shaped pattern is therefore suppressed to a greater extent than with the conventional configuration illustrated in Figure 48, that is, compared with a configuration in which the phases of mutually adjacent sensing electrode wires 33SR coincide. Similarly, in drive electrode wires 31DR that are adjacent to one another in the first electrode direction D1, the phases of parts thereof arranged in the first electrode direction D1 are not limited to being opposite phases, but should differ from one another.

Similarly, in the second mode of embodiment, in sensing reference electrode wires 40KR that are adjacent to one another in the second electrode direction D2, the phases of parts thereof arranged in the second electrode direction D2 are not limited to being opposite phases, but should differ from one another, and the plurality of reference electrode wires serving as the basis for creating the drive electrode wires should also be arranged with the phases thereof offset.

In the first mode of embodiment and the second mode of embodiment, the bent portions of the sensing electrode wires and the drive electrode wires are point-shaped parts joining short line portions having a straight line shape. Without limitation to said configuration, the bent portions may be parts that join, in a curved shape or in a linear shape, short line portions that are adjacent to one another in the direction in which the electrodes extend, that is, two short line portions having mutually different inclinations. That is, the sensing electrode wires and the drive electrode wires should each have a bent line shape in which ridge portions or valley portions are formed by the bent portions and end portions of the short line portions joined thereto, with the ridge portions and the valley portions positioned alternately.

It should be noted that in the second mode of embodiment, the shapes of the sensing electrode wires and the drive electrode wires should be determined by replacing a portion in the vicinity of each bent portion, displaced relative to the reference bent portion of the reference electrode wire, with a curved or linear part joining the short line portions.

Furthermore, the sensing electrode wires 33SR and the drive electrode wires 31DR in the first mode of embodiment and the reference electrode wires in the second mode of embodiment may have a shape that is different from the bent line shapes illustrated in the modes of embodiment described hereinabove, provided that the shape is a bent line shape which bends repeatedly with a prescribed period. However, visual recognition of a strip-shaped pattern is liable to occur with a configuration in which two types of short line portions having mutually different inclinations are arranged alternately, if the phases of mutually adjacent electrode wires coincide, as in the conventional case, and therefore applying the configurations in the first mode of embodiment and the second mode of embodiment makes it possible to obtain a more pronounced effect of reducing the likelihood of a strip-shaped pattern being visually recognized.

In the second mode of embodiment, the positions of the bent portions should be irregular, with respect to the order in which the bent portions are arranged, on at least one side, in the second electrode direction D2, of the sensing electrode wire 34SR. That is, the sensing electrode wires 34SR may have a shape in which only the first imaginary bent portions or only the second imaginary bent portions of the sensing reference electrode wires 40KR are displaced irregularly. For example, in each sensing electrode wire the valley portions may be positioned on one straight line extending in the first electrode direction D1, and in each drive electrode wire the valley portions may be positioned on one straight line extending in the second electrode direction D2.

### Third embodiment

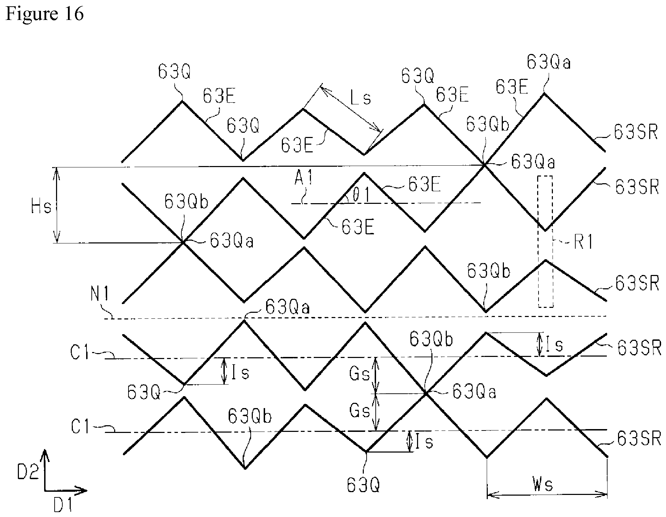

A third mode of embodiment of a conductive film, a touch panel and a display device will be described with reference to Figure 16 to Figure 21. The following description focuses on points of difference between the third mode of embodiment and the first mode of embodiment, and aspects of the configuration that are the same as in the first mode of embodiment are denoted using the same reference codes, and descriptions thereof are omitted.

### Configuration of sensing electrodes

The configuration of sensing electrode wires 63SR forming the sensing electrodes 33SP in the third mode of embodiment will be described with reference to Figure 16.

As illustrated in Figure 16, each of the plurality of sensing electrode wires 63SR has a bent line shape which extends in the first electrode direction D1 while bending repeatedly.

More specifically, each sensing electrode wire 63SR includes a plurality of bent portions 63Q and a plurality of short line portions 63E in the shape of straight lines joining the bent portions 63Q that are adjacent to one another along the sensing electrode wire 63SR. The bent portions 63Q are parts where two mutually adjacent short line portions 63E are connected to one another, and the bent portions 63Q corresponding to ridge portions in the drawing, being an example of first bent portions, and the bent portions 63Q corresponding to valley portions in the drawing, being an example of second bent portions, are arranged alternately one by one along the sensing electrode wire 63SR. In other words, the sensing electrode wires 63SR have a polygonal line shape in which the plurality of short line portions 63E are linked by way of the bent portions 63Q, and which as a whole extend in the first electrode direction D1.

Each of the plurality of short line portions 63E has a length Ls in the direction in which the short line portion 63E extends, and the plurality of short line portions 63E include short line portions 63E having mutually different lengths Ls. That is, the length Ls is not constant in the plurality of short line portions 63E. The length Ls varies irregularly with respect to the order in which the short line portions 63E are arranged, among the plurality of short line portions 63E arranged in the first electrode direction D1.

Each of the plurality of short line portions 63E has an inclination θ1 relative to the base axis A1, which is an imaginary straight line extending in the first electrode direction D1, and the plurality of short line portions 63E include short line portions 63E having inclinations θ1 of mutually different sizes. That is, the absolute value of the inclination θ1 is not constant in the plurality of short line portions 63E. The inclination θ1 is an angle other than 0 degrees, and the inclination θ1 of one of two mutually adjacent short line portions 63E is positive, and the inclination θ1 of the other is negative. In other words, in one sensing electrode wire 63SR, the short line portions 63E having a positive inclination θ1 and the short line portions 63E having a negative inclination θ1 are repeated alternately in the first electrode direction D1. Furthermore, the absolute value of the inclination θ1 varies irregularly with respect to the order in which the short line portions 63E are arranged, among the plurality of short line portions 63E arranged in the first electrode direction D1.

The distance in the second electrode direction D2 between a bent portion 63Qa positioned outermost on one side, in the second electrode direction D2, of each sensing electrode wire 63SR and a bent portion 63Qb positioned outermost on the other side thereof in the second electrode direction D2 is the bend width Hs. In other words, the bend width Hs is the width in the second electrode direction D2 occupied by one sensing electrode wire 63SR.

An imaginary straight line which passes through an intermediate position, in the second electrode direction D2, between an imaginary straight line extending in the first electrode direction D1 through the bent portion 63Qa and an imaginary straight line extending in the first electrode direction D1 through the bent portion 63Qb is a centerline C1. In other words, the centerline C1 is an imaginary line which extends in the first electrode direction D1 in a position equidistant from the bent portion 63Qa and the bent portion 63Qb, which are the bent portions 63Q that are farthest from one another in the second electrode direction D2 from among the plurality of bent portions 63Q of the sensing electrode wire 63SR. The centerline C1 is set for each sensing electrode wire 63SR.

Bent portions 63Q positioned on one side, in the second electrode direction D2, of the centerline C1 are bent portions 63Q of the sensing electrode wire 63SR positioned on one side thereof in the second electrode direction D2, and bent portions 63Q positioned on the other side, in the second electrode direction D2, of the centerline C1 are bent portions 63Q of the sensing electrode wire 63SR positioned on the other side thereof in the second electrode direction D2. The bent portions 63Q corresponding to ridge portions in the drawing, serving as first bent portions, are positioned on one side, in the second electrode direction D2, of the centerline C1, and the bent portions 63Q corresponding to valley portions in the drawing, serving as second bent portions, are positioned on the other side, in the second electrode direction D2, of the centerline C1.

In each sensing electrode wire 63SR, the distance in the second electrode direction D2 from the bent portion 63Qa to the centerline C1 is, in other words, the distance in the second electrode direction D2 from the bent portion 63Qb to the centerline C1, and this length is an object length Gs. The object length Gs is half the length of the bend width Hs. With regard to each of the plurality of bent portions 63Q included in one sensing electrode wire 63SR, a center length Is, which is the distance from the bent portion 63Q to the centerline C1 in the second electrode direction D2, is more than 0.75 times and at most equal to 1.0 times the object length Gs. The center lengths Is of the bent portions 63Qa and 63Qb coincide with the object length Gs.

One sensing electrode wire 63SR includes bent portions 63Q having mutually different center lengths Is. Furthermore, in the plurality of bent portions 63Q positioned on one side, in the second electrode direction D2, of the sensing electrode wire 63SR, that is, in the plurality of first bent portions, the center length Is not constant. Further, in the plurality of bent portions 63Q positioned on the other side, in the second electrode direction D2, of the sensing electrode wire 63SR, that is, in the plurality of second bent portions, the center length Is also not constant. The center lengths Is of the plurality of bent portions 63Q vary irregularly with respect to the order in which the bent portions 63Q are arranged along the sensing electrode wire 63SR.

Further, the distance between bent portions 63Q that are adjacent to one another on one side or the other side in the second electrode direction D2 is the bending period Ws, and the bending period Ws is constant within one sensing electrode wire 63SR. In other words, the bending period Ws is the length in the first electrode direction D1 between the first bent portions of the sensing electrode wire 63R, and is also the length in the first electrode direction D1 between the second bent portions of the sensing electrode wire 63SR. A central position in the first electrode direction D1 between mutually adjacent first bent portions coincides with the position in the first electrode direction D1 of a second bent portion sandwiched between said adjacent first bent portions. The bending period Ws is the length of one period of the sensing electrode wire 63SR.

It should be noted that in Figure 16 to Figure 23, the variability in the positions of the bent portions in the direction in which the electrode wires extend is illustrated in a more exaggerated manner than in practice.

The arrangement of the plurality of sensing electrode wires 63SR will next be described.

The plurality of sensing electrode wires 63SR are arranged in the second electrode direction D2. The plurality of sensing electrode wires 63SR constituting one sensing electrode 33SP are connected at one end thereof in the first electrode direction D1 to a common sensing pad 33P. The dashed line N1 in Figure 16 indicates a boundary between mutually adjacent sensing electrodes 33SP. That is, the sensing electrode wires 63SR that are adjacent to one another across the dashed line N1 are constituents of mutually different sensing electrodes 33SP and are connected to mutually different sensing pads 33P.

The bending period Ws is constant in the plurality of sensing electrode wires 63SR. The plurality of sensing electrode wires 63SR are arranged in the second electrode direction D2 with the phases thereof offset in the first electrode direction D1. That is, in sensing electrode wires 63SR that are adjacent to one another in the second electrode direction D2, the phases of parts thereof arranged in the second electrode direction D2 are mutually different. The phase is a position, in the first electrode direction D1, within one period of the sensing electrode wire 63SR, for example a position, in the first electrode direction D1, within a part extending from a bent portion 63Q that is a first bent portion to a bent portion 63Q that is the first bent portion adjacent to said bent portion 63Q.

Specifically, in mutually adjacent sensing electrode wires 63SR, parts thereof arranged in the second electrode direction D2 have opposite phases. In other words, the phases of mutually adjacent sensing electrode wires 63SR are inverted. For example, in the central part of a region R1 illustrated in Figure 16, if the interval between a valley portion and a valley portion is one period, then the phase of the sensing electrode wire 63SR on the upper side in the drawing corresponds to the start position of one period, and the phase of the sensing electrode wire 63SR on the lower side in the drawing corresponds to the position halfway through one period. In the plurality of sensing electrode wires 63SR, the plurality of bent portions 63Q are positioned on a straight line in the second electrode direction D2, and ridge portions and valley portions, that is, bent portions 63Q that are first bent portions and bent portions 63Q that are second bent portions, are arranged alternately.

In one sensing electrode 33SP, each sensing electrode wire 63SR is connected in at least one location to another sensing electrode wire 63SR adjacent to the sensing electrode wire 63SR, by respective bent portions 63Q thereof being connected to one another. That is, among two sensing electrode wires 63SR that are adjacent to one another in the second electrode direction D2 within one sensing electrode 33SP, the bent portion 63Qa positioned outermost on one side of one sensing electrode wire 63SR in the second electrode direction D2 is connected to the bent portion 63Qb positioned outermost on the other side of the other sensing electrode wire 63SR in the second electrode direction D2. It should be noted that the bent portions 63Qa and 63Qb of one sensing electrode wire 63SR are not necessarily all connected to another sensing electrode wire 63SR. The bent portions 63Qa and 63Qb that are connected to other sensing electrode wires 63SR are examples of connected bent portions.

If breaks occur in two locations in one electrode wire, the part of the electrode wire sandwiched between the broken locations becomes a floating portion isolated from the surroundings, and the generation of floating portions leads to a deterioration in the detection accuracy of the position of contact. With a configuration in which the sensing electrode wire 63SR is connected to another adjacent sensing electrode wire 63SR at the bent portion 63Q, even if breaks occur in the sensing electrode wire 63SR at two locations sandwiching the bent portion 63Q connecting location, since the part sandwiched between the broken locations is electrically connected to another sensing electrode wire 63SR at the connecting location, a state of isolation from the surroundings does not arise. The generation of floating portions as a result of breaks in the electrode wires is therefore suppressed.

The larger the number of connecting locations, the more the generation of floating portions is suppressed. However, the following problems arise if the number of connecting locations is too large. That is, at the connecting locations, four corner portions formed by the electrode wires meet around the bent portion 63Q. It is difficult to form precisely, in line with the design shape, the shape of a part in which corner portions meet, and in particular, if the electrode wires are formed by etching a metal thin film, the wire width of the electrode wires at the corner portions becomes greater than the design dimension, and the bent portion 63Q is liable to be visually recognized as a point. Therefore, having too many connecting locations may lead to a deterioration in the quality of images visually recognized on the display device 100.

Consequently, in order both to suppress the generation of floating portions and to suppress a deterioration in image quality, the connecting locations in the sensing electrode wires 63SR are preferably provided spaced apart by an interval at least equal to 3 bending periods Ws and at most equal to 10 periods, and are more preferably provided spaced apart by an interval at least equal to 5 periods and at most equal to 7 periods. Further, if the periodicity of the arrangement of the connecting locations is high, this periodicity may cause moiré to be visually recognized when the pixel pattern of the display panel 10 is superimposed on the electrode wire pattern of the touch panel 20. In order to suppress such moiré, the connecting locations are preferably arranged at irregular intervals.

Meanwhile, the sensing electrode wires 63SR constituting mutually different sensing electrodes 33SP, that is, sensing electrode wires 63SR that are adjacent to one another across the dashed line N1, do not have locations in which the bent portions 63Q are connected to one another between the electrode wires.

### Method for creating sensing electrode wires

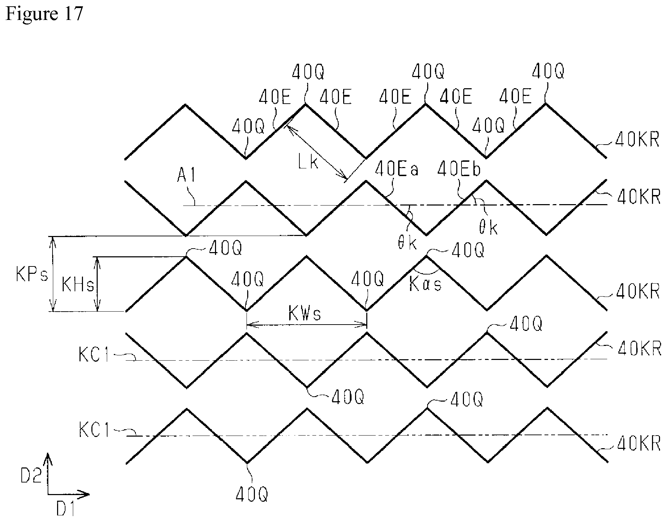

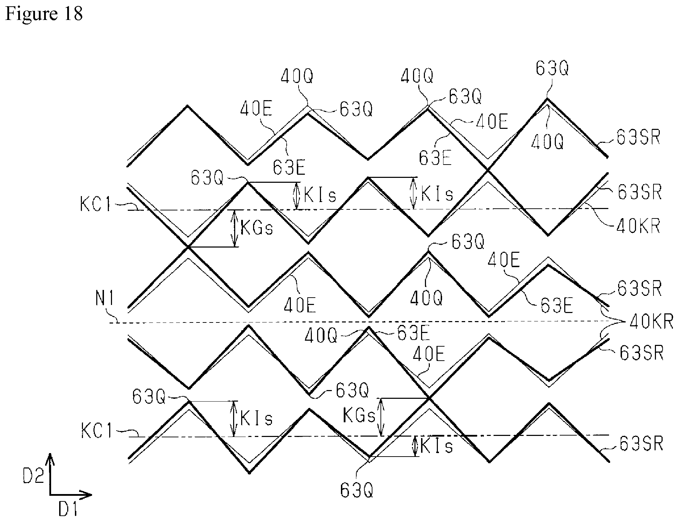

A method for creating the pattern formed by the plurality of sensing electrode wires 63SR discussed hereinabove will be described with reference to Figure 17 and Figure 18. The pattern of the sensing electrode wires 63SR in this mode of embodiment is created on the basis of a pattern formed by a plurality of reference electrode wires. The reference electrode wires are imaginary electrode wires having a regular polygonal line shape, and have the same shape as the sensing electrode wires 33SR in the first mode of embodiment. The pattern formed by the reference electrode wires will first be described with reference to Figure 17.

As illustrated in Figure 17, each of the plurality of sensing reference electrode wires 40KR is an assembly of two types of reference short line portions 40E having a straight line shape and mutually different inclinations. Each sensing reference electrode wire 40K includes two types of reference short line portions 40E repeated alternately in the first electrode direction D1, and reference bent portions 40Q which are parts where the two types of reference bent portions 40E are connected to one another. In other words, each of the plurality of sensing reference electrode wires 40KR has a polygonal line shape in which the plurality of reference short line portions 40E are linked by way of the reference bent portions 40Q, and which extend in the first electrode direction D1.

Each of the two types of reference short line portions 40E has a length Lk in the direction in which the reference short line portion 40E extends. The lengths Lk of the plurality of reference short line portions 40E are all equal. Among the two types of reference short line portions 40E, one reference short line portion 40Ea is inclined at an angle +θk relative to the base axis A1, which is an imaginary straight line extending in the first electrode direction D1, and the other reference short line portion 40Eb is inclined at an angle -θk relative to the base axis A1. The angle between two mutually adjacent reference short line portions 40E is a reference angle Kas, and the reference angles Kas in the plurality of sensing reference electrode wires 40KR are all equal. Further, the reference angle Kas is bisected by a straight line extending in a direction in the second electrode direction D2 through the reference bent portion 40Q.

In other words, the plurality of reference bent portions 40Q comprise the ridge portions in the drawing, which are one example of first imaginary bent portions, and the valley portions in the drawing, which are one example of second imaginary bent portions, and the first imaginary bent portions and the second imaginary bent portions are arranged alternately and periodically, one by one along the sensing reference electrode wire 40KR. Furthermore, the plurality of first imaginary bent portions and the plurality of second imaginary bent portions are positioned on separate straight lines extending in the first electrode direction D1.

The distance between reference bent portions 40Q that are adjacent to one another in the first electrode direction D1 is a reference period KWs. That is, the reference period KWs is the distance between mutually adjacent first imaginary bent portions on one side, in the second electrode direction D2, of the sensing reference electrode wire 40KR, and is also the distance between mutually adjacent second imaginary bent portions on the other side thereof in the second electrode direction D2. The reference period KWs is constant in the plurality of sensing reference electrode wires 40KR.

The plurality of sensing reference electrode wires 40KR are arranged in the second electrode direction D2, spaced apart by a reference spacing KPs, which is a constant spacing. That is, the reference spacing KPs is the distance in the second electrode direction D2 between the reference bent portions 40Q that are the first imaginary bent portions or between the reference bent portions 40Q that are the second imaginary bent portions, in mutually adjacent sensing reference electrode wires 40KR.

The distance in the second electrode direction D2 between the reference bent portions 40Q positioned on one side, in the second electrode direction D2, of the sensing reference electrode wire 40KR, that is, the first imaginary bent portions, and the reference bent portions 40Q positioned on the other side thereof in the second electrode direction D2, that is, the second imaginary bent portions, is constant, and this length is a reference width KHs. The reference width KHs is constant in the plurality of sensing reference electrode wires 40KR.

An imaginary straight line which passes through an intermediate position, in the second electrode direction D2, between an imaginary straight line extending in the first electrode direction D1 through the reference bent portions 40Q that are the first imaginary bent portions, and an imaginary straight line extending in the first electrode direction D1 through the reference bent portions 40Q that are the second imaginary bent portions is a reference centerline KC1. In other words, the reference centerline KC1 is an imaginary line which extends in the first electrode direction D1 in a position equidistant from the first imaginary bent portions and the second imaginary bent portions.

The plurality of sensing reference electrode wires 40KR are arranged in the second electrode direction D2 with the phases thereof offset in the first electrode direction D1. That is, in sensing reference electrode wires 40KR that are adjacent to one another in the second electrode direction D2, the phases of parts thereof arranged in the second electrode direction D2 are mutually different. The phase is a position, in the first electrode direction D1, within one period of the sensing reference electrode wire 40KR. Specifically, in mutually adjacent sensing reference electrode wires 40KR, parts thereof arranged in the second electrode direction D2 have opposite phases.

The parameters of reference angle Kαs, reference period KWs and reference spacing KPs are each preferably set in such a way as to satisfy the same conditions as the conditions indicated for the bend angle αs, the bending period Ws and the electrode wire spacing Ps respectively in the description of the sensing electrode wires 33SR in the first mode of embodiment. That is, the parameters of reference angle Kαd, reference period KWd and reference spacing KPd are preferably set to values that suppress moiré generation when the pattern of the plurality of sensing reference electrode wires 40KR and the pixel pattern of the display panel 10 are superimposed. Further, the reference angle Kαd is preferably at least equal to 95 degrees and at most equal to 150 degrees, and more preferably at least equal to 100 degrees and at most equal to 140 degrees. Further, the reference spacing KPd is preferably set to within a range of between 10% or more and 600% or less of the first pixel width P1 and the second pixel width P2 in the display panel 10.

As illustrated in Figure 18, the pattern formed by the plurality of sensing electrode wires 63SR is a pattern obtained by irregularly displacing the positions of the reference bent portions 40Q of the plurality of sensing reference electrode wires 40KR. In Figure 18, the sensing reference electrode wires 40KR are indicated by thin lines, and the sensing electrode wires 63SR are indicated by thick lines.

Specifically, the bent portions 63Q of the sensing electrode wires 63SR are disposed in positions displaced in the second electrode direction D2 with respect to the reference bent portions 40Q of the sensing reference electrode wires 40KR. At this time, the position of each bent portion 63Q is a position displaced with respect to the reference bent portion 40Q in a range in which a displaced length KIs, which is the distance in the second electrode direction D2 from the bent portion 63Q to the reference centerline KC1, is more than 0.75 times and at most equal to 1.0 times a reference length KGs, which is half the reference spacing KPs. In the plurality of bent portions 63Q, the displaced length KIs varies irregularly with respect to the order in which the bent portions 63Q are arranged, in other words with respect to the order in which the reference bent portions 40Q serving as a reference are arranged. In the present mode of embodiment, the range of the displaced length KIs is set to more than 0.75 times and at most equal to 1.0 times the reference length KGs on the basis of an FFT analysis result obtained when the occupancy ratio Hs/Ps in the pattern of sensing electrode wires 33SR in the first mode of embodiment was varied.

When bent portions 63Q each having a displaced length KIs 1.0 times the reference length KGs, that is, equal to the reference length KGs, are disposed with respect to each of two opposing reference bent portions 40Q of mutually adjacent sensing reference electrode wires 40KR, the positions of the bent portions 63Q disposed with respect to each reference bent portion 40Q coincide. Providing such locations at appropriate positions within one sensing electrode 33SP forms connecting locations where mutually adjacent sensing electrode wires 63SR are connected to one another at the bent portions 63Q.

The bending period Ws of the sensing electrode wires 63SR coincides with the reference period KWs of the sensing reference electrode wires 40KR. Further, if a sensing electrode wire 63SR is connected at a bent portion 63Q to another sensing electrode wire 63SR adjacent thereto on one side in the second electrode direction D2 and is connected at a bent portion 63Q to another sensing electrode wire 63SR adjacent thereto on the other side in the second electrode direction D2, the object length Gs coincides with the reference length KGs, the center length Is coincides with the displaced length KIs, and the centerline C1 coincides with the reference centerline KC1. In this case, the first bent portions of the sensing electrode wire 63SR include a bent portion 63Q having a displaced length KIs 1.0 times the reference length KGs, and the second bent portions of the sensing electrode wire 63SR also include a bent portion 63Q having a displaced length KIs 1.0 times the reference length KGs. Furthermore, the sensing electrode wire 63SR is connected to the other adjacent sensing electrode wires 63SR in the positions of the bent portions 63Q having a displaced length KIs 1.0 times the reference length KGs.

If a sensing electrode wire 63SR does not have a bent portion 63Q having a displaced length KIs 1.0 times the reference length KGs, on one side or the other side thereof in the second electrode direction D2, the object length Gs differs slightly from the reference length KGs, the center length Is may differ from the displaced length KIs, and the centerline C1 may differ from the reference centerline KC1. In such cases, even if the displaced lengths KIs of all the bent portions 63Q in the sensing electrode wire 63SR are included in the range of more than 0.75 times and at most equal to 1.0 times the center length Is, there is a possibility that the plurality of bent portions 63Q may include a bent portion 63Q having a center length Is not included in the range of more than 0.75 times and at most equal to 1.0 times the object length Gs. In this way, the plurality of electrode wires constituting the sensing electrode 33SP may include electrode wires including bent portions 63Q having a center length Is not included in the range of more than 0.75 times and at most equal to 1.0 times the object length Gs.

### Configuration of drive electrodes

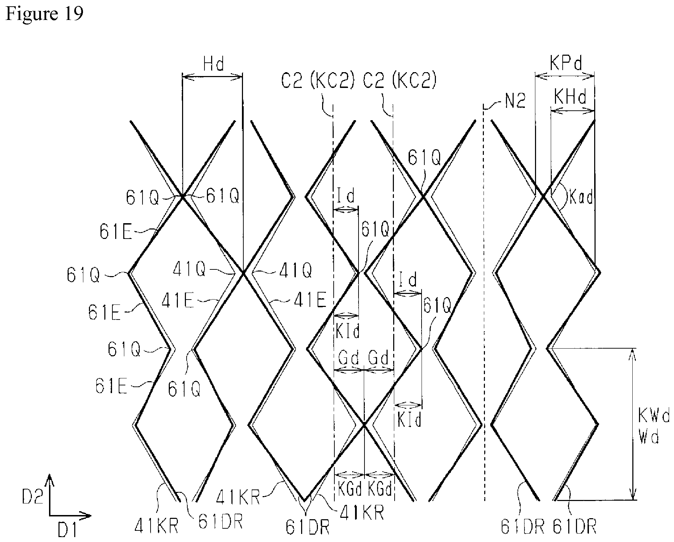

The configuration of drive electrode wires 61DR forming the drive electrodes 31DP in the third mode of embodiment will be described with reference to Figure 19.

As illustrated in Figure 19, each drive electrode wire 61DR has a bent line shape which extends in the second electrode direction D2 while bending repeatedly, and in the same way as with the sensing electrode wires 63SR, the drive electrode wires 61DR are created on the basis of reference electrode wires having a regular polygonal line shape.

Specifically, each drive electrode wire 61DR includes a plurality of bent portions 61Q and a plurality of short line portions 61E in the shape of straight lines joining the bent portions 61Q that are adjacent to one another along the drive electrode wire 61DR, and has a polygonal line shape which as a whole extends in the second electrode direction D2.

The length in the direction in which each short line portion 61E extends varies irregularly with respect to the order in which the short line portions 63E are arranged, among the plurality of short line portions 63E arranged in the second electrode direction D2. Further, the inclination of each short line portion 61E relative to a straight line extending in the second electrode direction D2 varies irregularly with respect to the order in which the short line portions 63E are arranged, among the plurality of short line portions 63E. Furthermore, in one drive electrode wire 61DR, the short line portions 61E having a positive inclination and the short line portions 61E having a negative inclination are repeated alternately in the second electrode direction D2.

The bend width Hd is the width in the first electrode direction D1 occupied by one drive electrode wire 61DR. An imaginary straight line which extends in the second electrode direction D2 in a position equidistant from each of two bent portions 61Q that are farthest from one another in the first electrode direction D1, from among the plurality of bent portions 61Q of the drive electrode wire 61DR, is a centerline C2. The distance to the centerline C2 in the first electrode direction D1 from each of the two bent portions 61Q that are farthest from one another in the first electrode direction D1 is an object length Gd, and the object length Gd is half the length of the bend width Hd. With regard to each of the plurality of bent portions 61Q included in one drive electrode wire 61DR, a center length Id, which is the distance from the bent portion 61Q to the centerline C2 in the first electrode direction D1, is more than 0.75 times and at most equal to 1.0 times the object length Gd. The center lengths Id of the plurality of bent portions 61Q vary irregularly with respect to the order in which the bent portions 61Q are arranged along the drive electrode wire 61DR.

Bent portions 61Q positioned on one side, in the first electrode direction D1, of the centerline C2 are bent portions 61Q of the drive electrode wire 61DR positioned on one side thereof in the first electrode direction D1, and bent portions 61Q positioned on the other side, in the first electrode direction D1, of the centerline C2 are bent portions 61Q of the drive electrode wire 61DR positioned on the other side thereof in the first electrode direction D1.

The distance between bent portions 61Q that are adjacent to one another on one side or the other side, in the first electrode direction D1, of the drive electrode wire 61DR is the bending period Wd, and the bending period Wd is constant within one drive electrode wire 61DR. The bending period Wd is the length of one period of the drive electrode wire 61DR.

The plurality of drive electrode wires 61DR are arranged in the first electrode direction D1. The plurality of drive electrode wires 61DR constituting one drive electrode 31DP are connected at one end thereof in the second electrode direction D2 to a common drive pad 31P. The dashed line N2 in Figure 19 indicates a boundary between mutually adjacent drive electrodes 31DP. That is, drive electrode wires 61DR that are adjacent to one another across the dashed line N2 are constituents of mutually different drive electrodes 31DP and are connected to mutually different drive pads 31P.

The bending period Wd is constant in the plurality of drive electrode wires 61DR. The phase in the drive electrode wire 61DR is a position, in the second electrode direction D2, within one period of the drive electrode wire 61DR. The plurality of drive electrode wires 61DR are arranged in the first electrode direction D1 with the phases thereof offset in the second electrode direction D2. That is, in drive electrode wires 61DR that are adjacent to one another in the first electrode direction D1, the phases of parts thereof arranged in the first electrode direction D1 are mutually different. Specifically, in mutually adjacent drive electrode wires 61DR, parts thereof arranged in the first electrode direction D1 have opposite phases, and the phases of mutually adjacent drive electrode wires 61DR are opposite phases.

In one drive electrode 31DP, each drive electrode wire 61DR is connected in at least one location to another drive electrode wire 61DR adjacent to the drive electrode wire 61DR, by respective bent portions 61Q thereof being connected to one another. Bent portions 61Qa and 61Qb that are connected to other drive electrode wires 61DR are examples of connected bent portions. In the drive electrodes 31DP also, in order both to suppress the generation of floating portions and to suppress a deterioration in image quality, the connecting locations where the drive electrode wire 61DR is connected to another adjacent drive electrode wire 61DR at the bent portions 61Q are preferably provided spaced apart by an interval at least equal to 3 bending periods Wd and at most equal to 10 periods, and are more preferably provided spaced apart by an interval at least equal to 5 periods and at most equal to 7 periods. Further, the connecting locations are preferably arranged at irregular intervals.

Meanwhile, the drive electrode wires 61DR constituting mutually different drive electrodes 31DP, that is, drive electrode wires 61DR that are adjacent to one another across the dashed line N2, do not have locations in which the bent portions 61Q are connected to one another between the electrode wires.

Drive reference electrode wires 41KR, which are imaginary electrode wires used to create the drive electrode wires 61DR, have the same shape as the drive electrode wires 31DR in the first mode of embodiment. Each drive reference electrode wire 41KR includes two types of reference short line portions 41E repeated alternately in the first electrode direction D1, and reference bent portions 41Q which are parts where the two types of reference bent portions 41E are connected to one another. The length of the plurality of reference short line portions 41E is constant. Among the two types of reference short line portions 41E, the inclination of one type of reference short line portion 41E relative to a straight line extending in the second electrode direction D2 is positive, the inclination of the other type of reference short line portion 41E relative to a straight line extending in the second electrode direction D2 is negative, and the absolute values of the inclinations are equal. The bent portions 41Q positioned on one side, in the first electrode direction D1, of the drive reference electrode wire 41KR and the bent portions 41Q positioned on the other side thereof are positioned on separate straight lines extending in the second electrode direction D2.

The angle between two mutually adjacent reference short line portions 41E is a reference angle Kad, and the reference angles Kad in the plurality of drive reference electrode wires 41KR are all equal. The distance between reference bent portions 41Q that are adjacent to one another in the second electrode direction D2 is a reference period KWd. The reference period KWd is constant in the plurality of drive reference electrode wires 41KR. The distance in the first electrode direction D1 between the reference bent portions 40Q positioned on one side, in the first electrode direction D1, of the drive reference electrode wire 41KR and the reference bent portions 41Q positioned on the other side thereof in the first electrode direction D1 is a reference width KHd. The reference width KHd is constant in the plurality of drive reference electrode wires 41KR.

Further, an imaginary straight line which extends in the second electrode direction D2 in a position equidistant from the bent portions 40Q positioned on one side in the first electrode direction D1 and the bent portions 41Q positioned on the other side in the first electrode direction D1 is a reference centerline KC2.

The plurality of drive reference electrode wires 41KR are arranged in the first electrode direction D1, spaced apart by a reference spacing KPd, which is a constant spacing. The length of half the reference spacing KPd is a reference length KGd. The plurality of drive reference electrode wires 41KR are arranged in the first electrode direction D1 with the phases thereof offset in the second electrode direction D2. The phase is a position, in the second electrode direction D2, within one period of the drive reference electrode wire 41KR. Specifically, in mutually adjacent drive reference electrode wires 41KR, parts thereof arranged in the first electrode direction D1 have opposite phases.

The reference angle Kad, the reference period KWd and the reference spacing KPd of the drive reference electrode wires 41KR are each preferably set in such a way as to satisfy the same conditions as the conditions indicated for the bend angle αs, the bending period Ws and the electrode wire spacing Ps respectively in the description of the sensing electrode wires 33SR in the first mode of embodiment. That is, the parameters of reference angle Kad, reference period KWd and reference spacing KPd are preferably set to values that suppress moiré generation when the pattern of the plurality of drive reference electrode wires 41KR and the pixel pattern of the display panel 10 are superimposed. Further, the reference angle Kad is preferably at least equal to 95 degrees and at most equal to 150 degrees, and more preferably at least equal to 100 degrees and at most equal to 140 degrees. It should be noted that at least one of the reference angle Kas of the sensing reference electrode wires 40KR and the reference angle Kad of the drive reference electrode wires 41KR should be within the abovementioned range. Further, the reference spacing KPd is preferably set to within a range of between 10% or more and 600% or less of the first pixel width P1 and the second pixel width P2 in the display panel 10.

The pattern formed by the plurality of drive electrode wires 61DR is a pattern obtained by irregularly displacing the positions of the reference bent portions 41Q of the plurality of drive reference electrode wires 41KR. The bent portions 61Q of the drive electrode wires 61DR are disposed in positions displaced in the first electrode direction D1 with respect to the reference bent portions 41Q of the drive reference electrode wires 41KR. At this time, the position of each bent portion 61Q is a position displaced with respect to the reference bent portion 41Q in a range in which a displaced length KId, which is the distance in the first electrode direction D1 from the bent portion 61Q to the reference centerline KC2, is more than 0.75 times and at most equal to 1.0 times the reference length KGd. In the plurality of bent portions 61Q, the displaced length KId varies irregularly with respect to the order in which the bent portions 61Q are arranged, in other words with respect to the order in which the reference bent portions 41Q serving as a reference are arranged.

When bent portions 61Q each having a displaced length KId 1.0 times the reference length KGd are disposed with respect to each of two opposing reference bent portions 41Q of mutually adjacent drive reference electrode wires 41KR, the positions of the bent portions 61Q disposed with respect to each reference bent portion 41Q coincide, and said drive reference electrode wires 41KR are connected to one another at the reference bent portions 61Q.

The bending period Wd of the drive electrode wires 61DR coincides with the reference period KWd of the drive reference electrode wires 41KR. If a drive electrode wire 61DR is connected at a bent portion 61Q to another drive electrode wire 61DR adjacent thereto on one side in the first electrode direction D1 and is connected at a bent portion 61Q to another drive electrode wire 61DR adjacent thereto on the other side in the first electrode direction D1, the object length Gd coincides with the reference length KGd, the center length Id coincides with the displaced length KId, and the centerline C2 coincides with the reference centerline KC2.

If a drive electrode wire 61DR does not have a bent portion 61Q having a displaced length KId 1.0 times the reference length KGd, on one side or the other side thereof in the first electrode direction D1, the object length Gd differs slightly from the reference length KGd, the center length Id may differ from the displaced length KId, and the centerline C2 may differ from the reference centerline KC2. That is, when the drive electrode wires 61DR are created by means of the creation method discussed hereinabove, the plurality of electrode wires constituting the drive electrode 31 DP may include electrode wires including bent portions 61Q having a center length Id not included in the range of more than 0.75 times and at most equal to 1.0 times the object length Gd.

### Configuration of electrode wire pattern

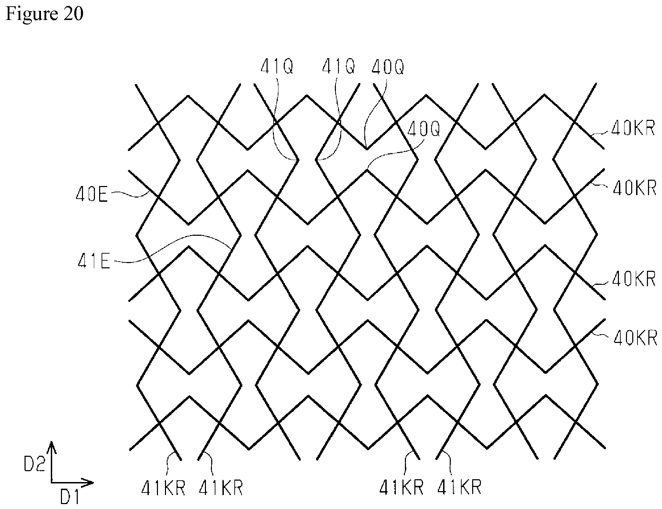

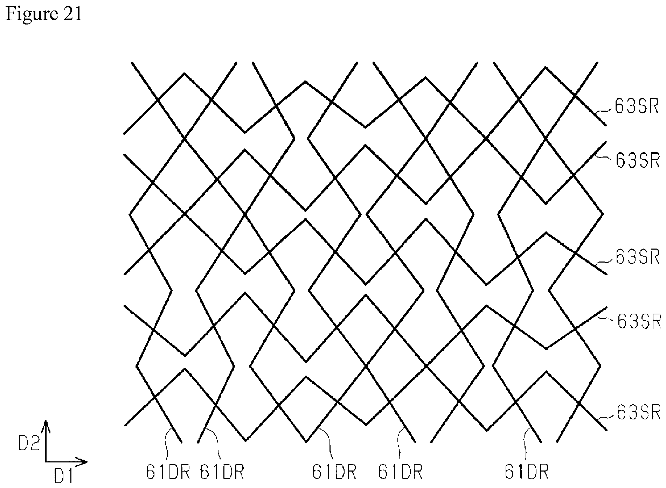

An electrode wire pattern, which is a pattern formed by superimposing the plurality of sensing electrode wires 63SR and the plurality of drive electrode wires 61DR, will be described with reference to Figure 20 and Figure 21.

A preferred shape and arrangement of the sensing reference electrode wires 40KR and the drive reference electrode wires 41KR will first be described with reference to Figure 20.

In the sensing reference electrode wires 40KR and the drive reference electrode wires 41KR, the values in each set comprising the length of the reference short line portions 40E and the length of the reference short line portions 41E, the reference bend angle Kas and the reference bend angle Kad, the reference period KWs and the reference period KWd, and the reference spacing KPs and the reference spacing KPd may be the same or different in each set. However, the reference period KWs of the sensing reference electrode wires 40KR is preferably twice the reference spacing KPd of the drive reference electrode wires 41KR (KWs=2×KPd), and the reference period KWd of the drive reference electrode wires 41KR is preferably twice the reference spacing KPs of the sensing reference electrode wires 40KR (KWd=2×KPs).

The electrode wire pattern, which is a pattern formed by superimposing the pattern formed by the plurality of sensing electrode wires 63SR and the pattern formed by the plurality of drive electrode wires 61DR, is formed in the conductive film 21 when viewed in a direction facing the top surface of the transparent dielectric substrate 33. At this time, the electrode wires are overlaid in such a way that the direction in which the sensing electrodes 33SP extend and the direction in which the drive electrodes 31DP extend intersect at right angles. This electrode wire pattern is a pattern based on a pattern in which the pattern formed by the plurality of sensing reference electrode wires 40KR and the pattern formed by the plurality of drive reference electrode wires 41KR are superimposed in such a way that the direction in which the sensing reference electrode wires 40KR extend and the direction in which the drive reference electrode wires 41KR extend intersect at right angles.

As illustrated in Figure 20, if KWs=2×KPd and KWd=2×KPs, the arrangement of the sensing reference electrode wires 40KR relative to the drive reference electrode wires 41KR, that is, the positions of the reference bent portions 40Q and the reference short line portions 40E relative to the reference bent portions 41Q and the reference short line portions 41E, is constant within the pattern. It is therefore possible to increase the uniformity of the density of the electrode wire arrangement in the pattern formed by the reference electrode wires 40KR and 41KR, and by extension, to prevent the density of the electrode wire arrangement in the electrode wire pattern formed by the sensing electrode wires 63SR and the drive electrode wires 61DR from becoming excessively non-uniform within the pattern.

As illustrated in Figure 20, for example, in the pattern formed by the reference electrode wires 40KR and 41KR, the reference bent portions 40Q of the sensing reference electrode wires 40KR overlap gaps between mutually adjacent drive reference electrode wires 41KR, in a central portion between said electrode wires. Further, the reference bent portions 41Q of the drive reference electrode wires 41KR overlap gaps between mutually adjacent sensing reference electrode wires 40KR, in a central portion between said electrode wires. Furthermore, midpoints of the reference short line portions 40E of the sensing reference electrode wires 40KR and midpoints of the reference short line portions 41E of the drive reference electrode wires 41KR intersect.

Figure 21 illustrates an electrode wire pattern formed by the sensing electrode wires 63SR and the drive electrode wires 61DR created on the basis of the pattern formed by the reference electrode wires 40KR and 41KR illustrated in Figure 20.

Since the sensing electrode wires 63SR and the drive electrode wires 61DR forming the electrode wire pattern have a bent line shape that bends irregularly, a difference may occur in the sparsity or density of the electrode wires in the electrode wire pattern, that is, regions in which the electrode wires are arranged densely and regions in which the electrode wires are arranged sparsely may be generated. However, if the sparsity or density of the electrode wires in the pattern is excessively non-uniform, the difference between the sparsity or density of the electrode wires may cause graining to be visually recognized.

Creating the electrode wire pattern using, as the pattern formed by the reference electrode wires 40KR and 41KR, a pattern having a high degree of uniformity in the arrangement density of the electrode wires, prevents the density of the arrangement of electrode wires in the electrode wire pattern from becoming excessively non-uniform within the pattern.

Further, in the sensing electrode wires 63SR and the drive electrode wires 61DR the electrode wire shapes are prevented from becoming excessively irregular since the center lengths Is and Id are more than 0.75 times and at most equal to 1.0 times the object lengths Gs and Gd respectively, and the displaced lengths KIs and KId are more than 0.75 times and at most equal to 1.0 times the reference lengths KGs and KGd respectively. This also prevents the density of the electrode wire arrangement from becoming excessively non-uniform within the pattern.

The operation of the third mode of embodiment will be described. Since the electrode wire pattern in the present mode of embodiment is a pattern formed from polygons that are different from rectangles, the periodicity of the pattern is low in comparison with a pattern in which rectangles having the same shape are repeated, as in a pattern in which electrode wires extending linearly intersect one another. Therefore, the offset between the pixel pattern and the electrode wire pattern is not readily recognized as an offset between two periodic structures, and therefore when the electrode wire pattern in the present mode of embodiment is superimposed on the pixel pattern of the display panel 10, visual recognition of moiré is suppressed. As a result, a deterioration in the quality of images visually recognized on the display device 100 is suppressed.

In particular, since the sensing electrode wires 63SR and the drive electrode wires 61DR forming the electrode wire pattern each have an irregular bent line shape, the periodicity of the pattern is lower than if the pattern is formed from electrode wires having a regular bent line shape. Therefore, visual recognition of moiré is more suitably suppressed when the electrode wire pattern and the pixel pattern are superimposed.

Further, part of the periodicity of the pattern of the reference electrode wires 40KR and 41KR also remains in the electrode wire pattern formed by the sensing electrode wires 63SR and the sensing electrode wires 61DR. In the present mode of embodiment, the electrode wire pattern is created from reference electrode wires 40KR and 41KR of which the reference angles Kas and Kad, the reference periods KWs and KWd, and the reference spacings KPs and KPd are each set to values with which moiré generation does not readily occur. Therefore, visual recognition of moiré attributable to the periodicity of the reference electrode wires 40KR and 41KR is also suppressed when the electrode wire pattern and the pixel pattern are superimposed.

Furthermore, since the phases of mutually adjacent electrode wires are offset in both the plurality of sensing electrode wires 63SR and the plurality of drive electrode wires 61DR, in addition to which the inclinations of the short line portions 63E add 61E are not constant, a situation does not occur in which short line portions having the same inclination are arranged in the first electrode direction D1 or the second electrode direction D2. Therefore, strip-shaped regions in which short line portions having the same inclination are arranged do not form in such a way as to extend in the direction in which the electrode wires are arranged, and moreover there is no occurrence of an alternating arrangement of two types of strip-shaped regions in which the directions in which the short line portions extend differ from one another. Consequently, visual recognition of a strip-shaped pattern as a result, in particular, of the reflection of external light when the display device 100 is unlit is suppressed, and a reduction in the quality of the appearance as seen from the operating surface 20S is suppressed.

Also in each of the sensing electrodes 33SP and the drive electrodes 31DP in the third mode of embodiment, an intermediate region between two mutually adjacent electrode wires includes an enlarging region in which a region width, which is the length of the intermediate region in the direction in which the electrodes are arranged, becomes larger in the direction in which the electrodes extend, and a contracting region in which the region width becomes smaller in the direction in which the electrodes extend. Furthermore, the enlarging region and the contracting region are disposed alternately in the direction in which the electrodes extend.

As described hereinabove, according to the third mode of embodiment the advantages detailed below can be obtained.
(8) Because the phases of mutually adjacent sensing electrode wires 63SR are offset, the formation of strip-shaped regions in which short line portions extending in the same direction, from among the plurality of sensing electrode wires 63 SR, are arranged in the second electrode direction D2 is suppressed, and an alternating arrangement in the first electrode direction D1 of two types of strip-shaped regions in which the directions in which the short line portions extend differ from one another is also suppressed. Therefore, since visual recognition, as a result of reflected light, for example, of a strip-shaped pattern resulting from such an arrangement of strip-shaped regions is suppressed, a reduction in the quality of the appearance as seen from the operating surface 20S is suppressed. Similarly, because the phases of mutually adjacent drive electrode wires 61DR are offset, the formation of strip-shaped regions in which short line portions extending in the same direction, from among the plurality of drive electrode wires 61DR, are arranged in the first electrode direction D1 is suppressed, and an alternating arrangement in the second electrode direction D2 of two types of strip-shaped regions in which the directions in which the short line portions extend differ from one another is also suppressed. Therefore, since visual recognition of a strip-shaped pattern resulting from such an arrangement of strip-shaped regions is suppressed, a reduction in the quality of the appearance as seen from the operating surface 20S is suppressed.

In particular, since the phases of mutually adjacent sensing electrode wires 63SR are inverted, an arrangement in the second electrode direction D2 of short line portions extending in the same direction, and an alternating arrangement in the first electrode direction D1 of two types of strip-shaped regions in which the directions in which the short line portions extend differ from one another are reliably suppressed. Similarly, since the phases of mutually adjacent drive electrode wires 61DR are inverted, an arrangement in the first electrode direction D1 of short line portions extending in the same direction, and an alternating arrangement in the second electrode direction D2 of two types of strip-shaped regions in which the directions in which the short line portions extend differ from one another are reliably suppressed. Visual recognition of a strip-shaped pattern can therefore be suitably suppressed.

Further, the formation of such strip-shaped regions is also suppressed because the inclinations of the short line portions 63E in the sensing electrode wires 63SR are irregular and the inclinations of the short line portions 61E in the drive electrode wires 61DR are also irregular.
(9) In the plurality of bent portions 63Q of the sensing electrode wires 63SR, since the ratio of the object length Gs to the center length Is of each bent portion 63Q is not constant, and since the ratio of the reference length KGs to the displaced length KIs of each bent portion 63Q is not constant, the periodicity of the electrode wire pattern is suppressed to a lower level than with a configuration in which the ratios are constant. Therefore, visual recognition of moiré is suitably suppressed in a pattern in which the electrode wire pattern and the pixel pattern are superimposed. Similarly, in the plurality of bent portions 61Q of the drive electrode wires 61DR, since the ratio of the object length Gd to the center length Id of each bent portion 61Q is not constant, and since the ratio of the reference length KGd to the displaced length KId of each bent portion 61Q is not constant, visual recognition of moiré is suitably suppressed in a pattern in which the electrode wire pattern and the pixel pattern are superimposed.

In particular, since the ratios described hereinabove each vary irregularly with respect to the order in which the bent portions are arranged, the periodicity of the electrode wire pattern is suppressed to a lower level, increasing the moiré suppressing effect.

Meanwhile, since said ratios are more than 0.75 and at most equal to 1.0, the sensing electrode wires 63SR and the drive electrode wires 61DR are prevented from having an excessively irregular bent line shape, thereby preventing the density of the arrangement of electrode wires in the electrode wire pattern from becoming excessively non-uniform. As a result, a deterioration in the quality of images visually recognized on the display device 100 as a result of the occurrence of graining or the like is suppressed.
(10) Each sensing electrode 33SP includes locations in which, among two sensing electrode wires 63SR that are adjacent to one another in the second electrode direction D2, a bent portion 63Q of one sensing electrode wire 63SR and a bent portion 63Q of the other sensing electrode wire 63SR are connected to one another. Similarly, each drive electrode 31DP includes locations in which, among two drive electrode wires 61DR that are adjacent to one another in the first electrode direction D1, a bent portion 61Q of one drive electrode wire 61DR and a bent portion 61Q of the other drive electrode wire 61DR are connected to one another. According to such a configuration, the generation of floating portions caused by breaks in the electrode wires is suppressed, as a result of which a deterioration in the detection accuracy of the position of contact is suppressed.
(11) The plurality of sensing electrode wires 63SR each have a bent line shape obtained by displacing the reference bent portions 40Q of the plurality of sensing reference electrode wires 40KR, arranged with offset phases, irregularly with respect to the order in which the reference bent portions 40Q of each sensing reference electrode wire 40KR are arranged. Similarly, the plurality of drive electrode wires 61DR each have a bent line shape obtained by displacing the reference bent portions 41Q of the plurality of drive reference electrode wires 41KR, arranged with offset phases, irregularly with respect to the order in which the reference bent portions 41Q of each drive reference electrode wire 41KR are arranged. According to such a configuration, electrode wires with which the advantages (8) and (9) described hereinabove can be obtained are reliably realized.
(12) The reference period KWs of the sensing reference electrode wires 40KR is twice the reference spacing KPd of the drive reference electrode wires 41KR, and the reference period KWd of the drive reference electrode wires 41KR is twice the reference spacing KPs of the sensing reference electrode wires 40KR. According to such a configuration, in the pattern obtained by superimposing the plurality of sensing reference electrode wires 40KR and the plurality of drive reference electrode wires 41KR, the positions of the reference bent portions 40Q of the sensing reference electrode wires 40KR relative to the reference bent portions 41Q of the drive reference electrode wires 41KR is constant within the pattern. It is consequently possible to form the pattern in such a way that the density of the arrangement of the electrode wires in the pattern is uniform, and the density of the arrangement of electrode wires is also prevented from becoming excessively non-uniform in the electrode wire pattern created on the basis of such a pattern.

Therefore, since visual recognition of graining, which occurs as a result of a difference in the sparsity or density of the electrode wires, is suppressed, a deterioration in the quality of images visually recognized on the display device 100 is suppressed.

### Fourth embodiment

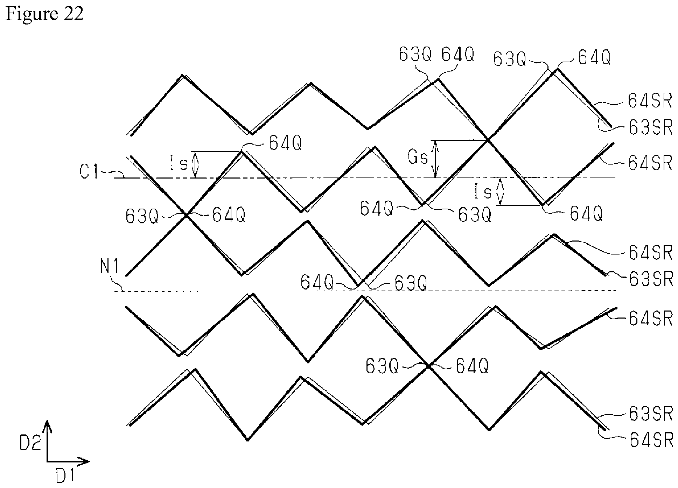

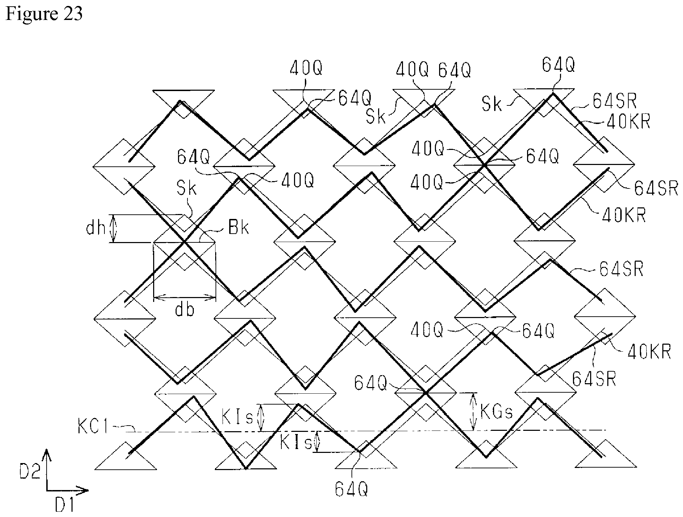

A fourth mode of embodiment of a conductive film, a touch panel and a display device will be described with reference to Figure 22 and Figure 23. The following description focuses on points of difference between the fourth mode of embodiment and the third mode of embodiment, and aspects of the configuration that are the same as in the first mode of embodiment and the third mode of embodiment are denoted using the same reference codes, and descriptions thereof are omitted.

### Configuration of sensing electrodes

The configuration of sensing electrode wires 64SR in the fourth mode of embodiment will be described with reference to Figure 22 and Figure 23. Figure 22 illustrates the sensing electrode wires 64SR in the fourth mode of embodiment using thick lines, and illustrates the sensing electrode wires 63SR in the third mode of embodiment using thin lines. Further, Figure 23 illustrates the sensing electrode wires 64SR in the fourth mode of embodiment using thick lines, and illustrates the sensing reference electrode wires 40KR using thin lines.

As illustrated in Figure 22, the sensing electrode wires 64SR in the fourth mode of embodiment have a shape obtained by irregularly displacing, in the first electrode direction D1, the positions of the bent portions 63Q relative to the sensing electrode wires 63SR in the third mode of embodiment, other than the bent portions 63Q connected to other adjacent sensing electrode wires 63SR. With such a configuration, the object length Gs does not change between the sensing electrode wires 63SR and the sensing electrode wires 64SR, and the center length Is for each bent portion also does not change. Further, the bending period in the sensing electrode wires 64SR is not constant.

As illustrated in Figure 23, among the bent portions 64Q of the sensing electrode wires 64SR in the fourth mode of embodiment, the bent portions 64Q that are connected to other adjacent sensing reference electrode wires 64SR are disposed in positions displaced in the second electrode direction D2 with respect to the reference bent portions 40Q of the sensing reference electrode wires 40KR, in the same way as in the third mode of embodiment. Meanwhile, among the bent portions 64Q of the sensing electrode wires 64SR in the fourth mode of embodiment, the bent portions 64Q that are not connected to other adjacent sensing reference electrode wires 64SR are disposed in positions displaced in both the first electrode direction D1 and the second electrode direction D2 with respect to the reference bent portions 40Q of the sensing reference electrode wires 40KR. As a result, one sensing electrode wire 64SR has a shape in which, relative to one sensing reference electrode wire 40KR, the position of each reference bent portion 40Q is displaced irregularly with respect to the order in which the reference bent portions 40Q are arranged. Also with such a configuration, the displaced length KIs of each bent portion 64Q is more than 0.75 times and at most equal to 1.0 times the reference length KGs, for each bent portion 64Q of the sensing electrode wires 64SR.

Here, the bent portions 64Q of the sensing electrode wires 64SR are disposed within the triangular displacement regions Sk surrounding the reference bent portions 40Q. In other words, the bent portions 64Q are disposed in positions displaced with respect to the reference bent portions 40Q in such a way as to be positioned within the displacement regions Sk.

Each displacement region Sk is in the shape of an isosceles triangle having a base Bk extending in the first electrode direction D1. Each displacement region Sk is disposed with the base Bk thereof facing toward the outside of the sensing reference electrode wire 40KR, in such a way that an imaginary straight line extending in the second electrode direction D2 through the reference bent portion 40Q passes through the vertex of the isosceles triangle and the midpoint of the base Bk. Each base Bk is disposed centrally between sensing reference electrode wires 40KR that are adjacent to one another in the second electrode direction D2. Furthermore, each base Bk is shared between the displacement region Sk set for the reference bent portion 40Q of one sensing reference electrode wire 40KR and the displacement region Sk set for the reference bent portion 40Q of another sensing reference electrode wire 40KR facing said reference bent portion 40Q. That is, the base Bk of each displacement region Sk is disposed in a position separated in the second electrode direction D2 from the reference centerline KC1 by the reference length KGs, which is a length that is half the reference spacing KPs.

The length db of the base Bk is preferably at least equal to 0.1 times and at most equal to 0.9 times the reference period KWs. Further, the height dh of the triangle constituting the displacement region Sk is preferably at least equal to 0.05 times and at most equal to 0.45 times the reference spacing KPs.

If the length db and the height dh are at least equal to these lower limits, an electrode wire shape in which the periodicity of the sensing reference electrode wire 40KR is adequately disrupted is obtained for the sensing electrode wire 64SR. Meanwhile, if the length db and the height dh are at most equal to the upper limits, the sensing electrode wire 64SR is prevented from adopting an excessively irregular bent line shape.

Similarly, the drive electrode wires in the fourth mode of embodiment have a shape obtained by irregularly displacing, in the second electrode direction D2, the positions of the bent portions 61Q relative to the drive electrode wires 61DR in the third mode of embodiment, other than the bent portions 61Q connected to other adjacent drive electrode wires 61DR.

That is, among the bent portions of the drive electrode wires in the fourth mode of embodiment, the bent portions that are connected to other adjacent drive reference electrode wires are disposed in positions displaced in the first electrode direction D1 with respect to the reference bent portions 41Q of the drive reference electrode wires 41KR, in the same way as in the third mode of embodiment. Meanwhile, among the bent portions of the drive electrode wires in the fourth mode of embodiment, the bent portions that are not connected to other adjacent drive reference electrode wires are disposed in positions displaced in both the first electrode direction D1 and the second electrode direction D2 with respect to the reference bent portions 41Q of the drive reference electrode wires 41KR. As a result, one drive electrode wire has a shape in which, relative to one drive reference electrode wire 41KR, the position of each reference bent portion 41Q is displaced irregularly with respect to the order in which the reference bent portions 41Q are arranged.

As described hereinabove, the periodicity of the pattern of sensing electrode wires 64SR in the fourth mode of embodiment is lower than the periodicity of the pattern of sensing electrode wires 63SR in the third mode of embodiment. Similarly, the periodicity of the pattern of drive electrode wires in the fourth mode of embodiment is lower than the periodicity of the pattern of drive electrode wires 61DR in the third mode of embodiment.

As described above, the periodicity of the electrode wire pattern in the fourth mode of embodiment, that is, the periodicity of the presence or absence of structure in each of the first electrode direction D1 and the second electrode direction D2, is even lower than in the third mode of embodiment. Consequently, if the electrode wire pattern in the fourth mode of embodiment is employed, the offset between the pixel pattern and the electrode wire pattern is even less liable to be recognized as an offset between two periodic structures. Therefore, when the electrode wire pattern in this mode of embodiment is superimposed on the pixel pattern of the display panel 10, visual recognition of moiré is further suppressed.

Also in each of the sensing electrodes 33SP and the drive electrodes 31DP in the fourth mode of embodiment, an intermediate region between two mutually adjacent electrode wires includes an enlarging region in which a region width, which is the length of the intermediate region in the direction in which the electrodes are arranged, becomes larger in the direction in which the electrodes extend, and a contracting region in which the region width becomes smaller in the direction in which the electrodes extend. Furthermore, the enlarging region and the contracting region are disposed alternately in the direction in which the electrodes extend. In each of the enlarging regions and the contracting regions, the rate of change in the region width per unit length does not need to be constant, and a region in which the region width is constant may be included between an enlarging region and a contracting region that are adjacent to one another.

As described hereinabove, according to the fourth mode of embodiment, the advantages detailed below can be obtained in addition to advantages (8) to (12) of the third mode of embodiment.
(13) Among the bent portions 64Q of the sensing electrode wires 64SR, the bent portions 64Q that are not connected to other sensing reference electrode wires 64SR are disposed in positions displaced in both the first electrode direction D1 and the second electrode direction D2 with respect to the reference bent portions 40Q of the sensing reference electrode wires 40KR. According to such a configuration, the periodicity of the electrode wire pattern becomes even lower, and therefore visual recognition of moiré is suppressed to an even greater extent when the electrode wire pattern and the pixel pattern are superimposed. The same advantages are also obtained with regard to the drive electrode wires.

Furthermore, each displacement region Sk in which the bent portions 64Q are positioned is in the shape of an isosceles triangle having a base Bk which is positioned centrally between mutually adjacent sensing reference electrode wires 40KR and which extends in the first electrode direction D1. Each displacement region Sk is disposed in a position in which an imaginary straight line extending in the second electrode direction D2 through the reference bent portion 40Q passes through the vertex of the isosceles triangle and the midpoint of the base Bk. The height dh of the isosceles triangle is at least equal to 0.05 times and at most equal to 0.45 times the reference spacing KPs, and the length db of the base Bk is at least equal to 0.1 times and at most equal to 0.9 times the reference period KWs. According to such a configuration, by setting the height dh of the displacement region Sk and the length db of the base Bk to be at least equal to these lower limits, a shape in which the periodicity of the sensing reference electrode wire 40KR is adequately disrupted is obtained as the shape of the sensing electrode wire 64SR. Meanwhile, by setting the height dh of the displacement region Sk and the length db of the base Bk to be at most equal to these upper limits, the sensing electrode wires 64SR are prevented from having an excessively irregular bent line shape, thereby preventing the density of the arrangement of electrode wires in the electrode wire pattern from becoming excessively non-uniform.

### Modified examples of third mode of embodiment and fourth mode of embodiment

The third mode of embodiment and the fourth mode of embodiment can be modified and implemented as follows.

The sensing electrode wires 63SR, 64SR in one sensing electrode 33SP may be connected to other adjacent sensing electrode wires 63SR, 64SR at bent portions 63Q, 64Q on both sides in the second electrode direction D2. Alternatively, the sensing electrode wires 63SR, 64SR may be connected to another adjacent sensing electrode wire 63SR, 64SR at a bent portion 63Q, 64Q on only one side in the second electrode direction D2. Furthermore, the sensing electrodes 33SP may include sensing electrode wires 63SR, 64SR that are not connected to another sensing electrode wire 63SR, 64SR, and the sensing electrodes 33SP may have no sensing electrode wire 63SR, 64SR connecting locations. Similarly, the drive electrode wires in one drive electrode 31DP should be connected to another adjacent drive electrode wire at bent portions on at least one side in the first electrode direction D1. Furthermore, the drive electrodes 31DP may include drive electrode wires that are not connected to another drive electrode wire, and the drive electrodes 31DP may have no drive electrode wire connecting locations.

In the third mode of embodiment, if the sensing electrodes 33SP do not have sensing electrode wire 63SR connecting locations, then in sensing electrode wires 63SR that are adjacent to one another in the second electrode direction D2, the phases of parts thereof arranged in the second electrode direction D2 are not limited to being opposite phases, but should differ from one another. Even if the phases of mutually adjacent sensing electrode wires 63SR are not inverted, provided that the configuration is such that the phases are offset, an aligned arrangement in the second electrode direction D2 of short line portions extending in the same direction is suppressed, and an alternating arrangement in the first electrode direction D1, with no gaps, of two types of strip-shaped regions in which the directions in which the short line portions extend differ from one another does not occur. Visual recognition of a strip-shaped pattern is therefore suppressed to a greater extent than with the conventional configuration illustrated in Figure 48, that is, compared with a configuration in which the phases of mutually adjacent sensing electrode wires coincide. Similarly, in drive electrode wires 61DR that are adjacent to one another in the first electrode direction D1, the phases of parts thereof arranged in the first electrode direction D1 are not limited to being opposite phases, but should differ from one another.

Similarly, in sensing reference electrode wires 40KR that are adjacent to one another in the second electrode direction D2, the phases of parts thereof arranged in the second electrode direction D2 are not limited to being opposite phases, but should differ from one another, and the drive reference electrode wires 41KR should also be arranged in the first electrode direction D1 with the phases thereof offset.

In the third mode of embodiment and the fourth mode of embodiment, the bent portions 63Q, 64Q of the sensing electrode wires 63SR, 64SR and the bent portions 61Q of the drive electrode wires 61DR are point-shaped parts joining short line portions having a straight line shape. Without limitation to said configuration, the bent portions may be parts that join, in a curved shape, a linear shape or a polygonal line shape, short line portions that are adjacent to one another in the direction in which the electrodes extend, that is, two short line portions having mutually different inclinations. That is, the sensing electrode wires and the drive electrode wires should each have a bent line shape in which ridge portions or valley portions are formed by the bent portions and end portions of the short line portions joined thereto, with the ridge portions and the valley portions positioned alternately. The center length Is, Id of the bent portions is the distance between the centerline C1, C2 and the parts of the bent portions farthest from the centerline C1, C2. Further, the displaced length KIs, KId of the bent portions is the distance between the reference centerline KC1, KC2 and the parts of the bent portions farthest from the reference centerline KC1, KC2.

It should be noted that the shapes of the electrode wires having curved, linear or polygonal line shaped bent portions are obtained by replacing a portion in the vicinity of each point-shaped bent portion, displaced relative to the reference bent portion of the reference electrode wire, with a curved, linear or polygonal line shaped part joining the short line portions.

In each sensing electrode wire and drive electrode wire, the plurality of bent portions should include a plurality of bent portions having mutually different center lengths Is, Id. For example, the plurality of bent portions may comprise two types of bent portions having mutually different center lengths Is, Id. In this case, in the plurality of bent portions, the ratio of the center length Is, Id to the object length Gs, Gd is either a prescribed value included in a range of more than 0.75 and less than 1.0, or 1.0.

In the sensing electrode wires 63SR, 64SR, the ratio of the center length Is to the object length Gs may be irregular with respect to the order in which the bent portions 63Q, 64Q are arranged along the sensing electrode wires 63SR, 64SR, or may be irregular with respect to the order in which the bent portions 63Q, 64Q are arranged on one side in the second electrode direction D2. That is, the sensing electrode wires 63SR, 64SR may have a shape in which only the first imaginary bent portions or only the second imaginary bent portions of the sensing reference electrode wires 40KR are displaced irregularly. Similarly, in the drive electrode wires, the ratio of the center length Id to the object length Gd may be irregular with respect to the order in which the bent portions are arranged along the drive electrode wires, or may be irregular with respect to the order in which the bent portions are arranged on one side in the first electrode direction D1. Among the bent portions 64Q of the sensing electrode wires 64SR in the fourth mode of embodiment, the bent portions 64Q that are connected to other adjacent sensing reference electrode wires 64SR may be disposed in positions displaced in both the first electrode direction D1 and the second electrode direction D2 with respect to the reference bent portions 40Q of the sensing reference electrode wires 40KR, in the same way as the other bent portions 64Q. Similarly, among the bent portions of the drive electrode wires, the bent portions that are connected to other adjacent drive reference electrode wires may also be disposed in positions displaced in both the first electrode direction D 1 and the second electrode direction D2 with respect to the reference bent portions 41Q of the drive reference electrode wires 41KR.

In the third mode of embodiment and the fourth mode of embodiment, the patterns of the sensing electrode wires and the drive electrode wires are created from patterns of reference electrode wires having a bent line shape that bends regularly, but there is no restriction to the creation method thereof provided that the patterns of the sensing electrode wires and the drive electrode wires have the shape features described in the first mode of embodiment and the second mode of embodiment.

### Fifth embodiment

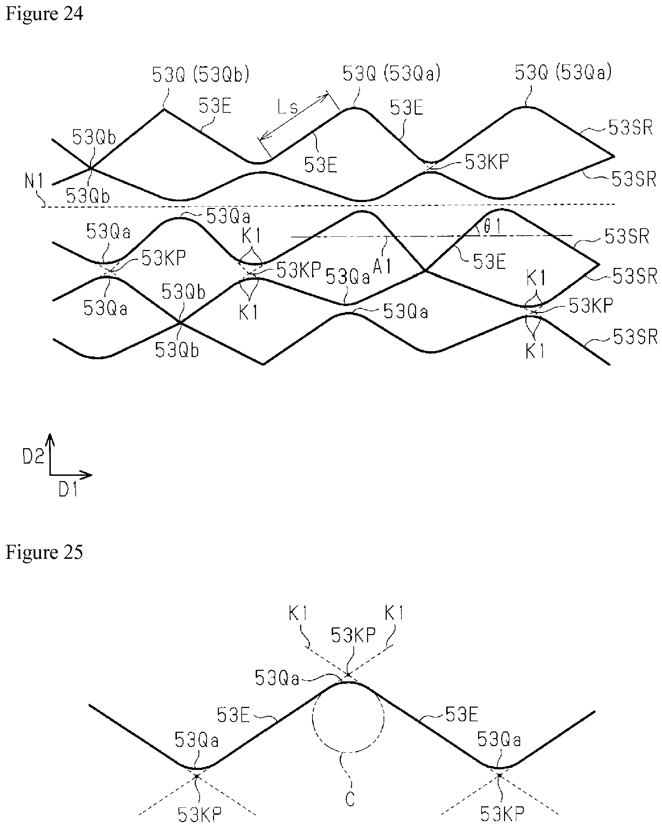

A fifth mode of embodiment of a conductive film, a touch panel and a display device will be described with reference to Figure 24 to Figure 34. The following description focuses on points of difference between the fifth mode of embodiment and the first mode of embodiment, and aspects of the configuration that are the same as in the first mode of embodiment are denoted using the same reference codes, and descriptions thereof are omitted.

### Configuration of sensing electrodes

The configuration of sensing electrode wires 53SR forming the sensing electrodes 33SP in the fifth mode of embodiment will be described with reference to Figure 24.

As illustrated in Figure 24, each of the plurality of sensing electrode wires 53SR has a bent line shape which extends in the first electrode direction D1 while bending repeatedly.

More specifically, each sensing electrode wire 53SR includes a plurality of bent portions 53Q and a plurality of short line portions 53E in the shape of straight lines joining the bent portions 53Q that are adjacent to one another along the sensing electrode wire 53SR. The bent portions 53Q are parts where two mutually adjacent short line portions 53E are connected to one another, and the bent portions 53Q corresponding to ridge portions in the drawing and the bent portions 53Q corresponding to valley portions in the drawing are arranged alternately one by one along the sensing electrode wire 53SR.

Each sensing electrode wire 53SR extends as a whole in the first electrode direction D1, and the plurality of sensing electrode wires 53SR are arranged in the second electrode direction D2. The plurality of sensing electrode wires 53SR constituting one sensing electrode 33SP are connected at one end thereof in the first electrode direction D1 to a common sensing pad 33P. The dashed line N1 in Figure 24 indicates a boundary between mutually adjacent sensing electrodes 33SP. That is, the sensing electrode wires 53SR that are adjacent to one another across the dashed line N1 are constituents of mutually different sensing electrodes 33SP and are connected to mutually different sensing pads 33P.

Each of the plurality of short line portions 53E has a length Ls in the direction in which the short line portion 53E extends, and the plurality of short line portions 53E include short line portions 53E having mutually different lengths Ls. That is, the length Ls is not constant in the plurality of short line portions 53E. The length Ls varies irregularly with respect to the order in which the short line portions 53E are arranged, among the plurality of short line portions 53E arranged in the first electrode direction D1.

Each of the plurality of short line portions 53E has an inclination θ1 relative to the base axis A1, which is an imaginary straight line extending in the first electrode direction D1, and the plurality of short line portions 53E include short line portions 53E having inclinations θ1 of mutually different sizes. That is, the absolute value of the inclination θ1 is not constant in the plurality of short line portions 53E. The inclination θ1 is an angle other than 0 degrees, and the inclination θ1 of one of two mutually adjacent short line portions 53E is positive, and the inclination θ1 of the other is negative. In other words, in one sensing electrode wire 53SR, the short line portions 53E having a positive inclination θ1 and the short line portions 53E having a negative inclination θ1 are repeated alternately in the first electrode direction D1. Furthermore, the absolute value of the inclination θ1 varies irregularly with respect to the order in which the short line portions 53E are arranged, among the plurality of short line portions 53E arranged in the first electrode direction D1.

The plurality of bent portions 53Q include separated bent portions 53Qa and connected bent portions 53Qb. The separated bent portions 53Qa have an arc shape. Each separated bent portion 53Qa faces a separated bent portion 53Qa of another sensing electrode wire 53SR adjacent to the sensing electrode wire 53SR that includes the separated bent portion 53Qa, with a gap therebetween. The short line portions 53E connected to each separated bent portion 53Qa extend continuously from the arc constituting the separated bent portion 53Qa.

Here, an imaginary straight line extending along the short line portion 53E is an imaginary line K1, and a point of intersection of imaginary lines K1 set with respect to each of two short line portions 53E sandwiching one separated bent portion 53Qa is an imaginary point of intersection 53KP. In other words, the imaginary point of intersection 53KP is a point of intersection of respective extension lines of two short line portions 53E joined to both ends of one separated bent portion 53Qa. Among the plurality of imaginary points of intersection 53KP, the positions of the imaginary points of intersection 53KP in the second electrode direction D2 change irregularly with respect to the order in which the imaginary points of intersection 53KP are arranged, on each of one side and the other side, in the second electrode direction D2, of the sensing electrode wire 53SR.

In sensing electrode wires 53SR that are adjacent to one another in the second electrode direction D2, the positions of the imaginary points of intersection 53KP related to each of two opposing separated bent portions 53Qa coincide with one another. In other words, among sensing electrode wires 53SR that are adjacent to one another in the second electrode direction D2, each of the extension lines of the two short line portions 53E joined to both ends of the separated bent portion 53Qa of one sensing electrode wire 53SR and each of the extension lines of the two short line portions 53E joined to both ends of the separated bent portion 53Qa of the other sensing electrode wire 53SR, the latter separated bent portion 53Qa facing the former separated bent portion 53Qa, intersect one another at one point.

The curvature of the separated bent portion 53Qa is constant within one separated bent portion 53Qa. Further, the curvature of each separated bent portion 53Qa of the sensing electrode wires 53SR may be constant or may differ among the plurality of separated bent portions 53Qa.

The connected bent portions 53Qb are point shaped. Each connected bent portion 53Qb is connected to a connected bent portion 53Qb of another sensing electrode wire 53SR adjacent to the sensing electrode wire 53SR that includes the connected bent portion 53Qb. In one sensing electrode wire 53SR, two adjacent short line portions 53E sandwiching a connected bent portion 53Qb are connected to one another at the position of the connected bent portion 53Qb, and the connected bent portion 53Qb and the two short line portions 53E form a polygonal line shaped part.

In one sensing electrode 33SP, each sensing electrode wire 53SR is connected in at least one location to another sensing electrode wire 53SR adjacent to the sensing electrode wire 53SR, by respective connected bent portions 53Qb thereof being connected to one another.

If breaks occur in two locations in one electrode wire, the part of the electrode wire sandwiched between the broken locations becomes a floating portion isolated from the surroundings, and the generation of floating portions leads to a deterioration in the detection accuracy of the position of contact. With a configuration in which the sensing electrode wire 53SR is connected to another adjacent sensing electrode wire 53SR at the connected bent portion 53Qb, even if breaks occur in the sensing electrode wire 53SR at two locations sandwiching the connected bent portion 53Qb, since the part sandwiched between the broken locations is electrically connected to another sensing electrode wire 53SR at the connected bent portion 53Qb, a state of isolation from the surroundings does not arise. The generation of floating portions as a result of breaks in the electrode wires is therefore suppressed.

The larger the number of connected bent portions 53Qb, the more the generation of floating portions is suppressed. However, the following problems arise if the number of connected bent portions 53Qb is too large. That is, four corner portions formed by the electrode wires meet around the connected bent portion 53Qb. It is difficult to form precisely, in line with the design shape, the shape of a part in which corner portions meet, and in particular, if the electrode wires are formed by etching a metal thin film, the wire width of the electrode wires at the corner portions becomes greater than the design dimension, and the bent portion 53Qb is liable to be visually recognized as a point. Therefore, having too many connected bent portions 53Qb may lead to a deterioration in the quality of images visually recognized on the display device 100.

Consequently, in order both to suppress the generation of floating portions and to suppress a deterioration in image quality, preferably at least 5 and no more than 19 separated bent portions 53Qa, and more preferably at least 9 and no more than 13 separated bent portions 53Qa are positioned along the sensing electrode wire 53SR between two connected bent portions 53Qb that are adjacent to one another along the sensing electrode wire 53SR. Further, if the periodicity of the arrangement of the connected bent portions 53Qb is high, this periodicity may cause moiré to be visually recognized when the pixel pattern of the display panel 10 is superimposed on the electrode wire pattern of the touch panel 20. In order to suppress such moiré, the connected bent portions 53Qb are preferably arranged at irregular intervals.

Meanwhile, the sensing electrode wires 53SR constituting mutually different sensing electrodes 33SP, that is, sensing electrode wires 53SR that are adjacent to one another across the dashed line N1, do not have locations in which the bent portions 53Q are connected to one another between the electrode wires.

The configuration of the separated bent portions 53Qa will be described with reference to Figure 25.

As illustrated in Figure 25, the arc forming the separated bent portion 53Qa is an arc of a circle C which touches connecting points of the separated bent portion 53Qa and the short line portions 53E joined to both ends of the separated bent portion 53Qa, on the imaginary lines K1 set for each of the two short line portions 53E. The connecting points of the separated bent portions 53Qa and the short line portions 53E are the boundary between a part of the bent line forming the sensing electrode wire 53SR having a curvature greater than zero and a part having a curvature of zero. Each short line portion 53E extends from the end of the arc forming the separated bent portion 53Qa, in such a way as to follow the tangent to the separated bent portion 53Qa at said end thereof. For example, when a short line portion 53E is sandwiched between two separated bent portions 53Qa and is connected to the separated bent portions 53Qa, the short line portion 53E extends between the two separated bent portions 53Qa from the ends of each of the arcs forming the separated bent portions 53Qa in such a way as to follow the tangent to the separated bent portions 53Qa at said ends thereof.

It should be noted that this configuration is a configuration for a case in which the sensing electrode wire 53SR is deemed to be an ideal line having no width. In an actual sensing electrode wire 53SR having a line width, the abovementioned configuration can be realized by defining the imaginary line K1 and the circle C in such a way as to pass though the center, in the width direction, of the sensing electrode wire 53SR.

### Method for creating sensing electrode wires

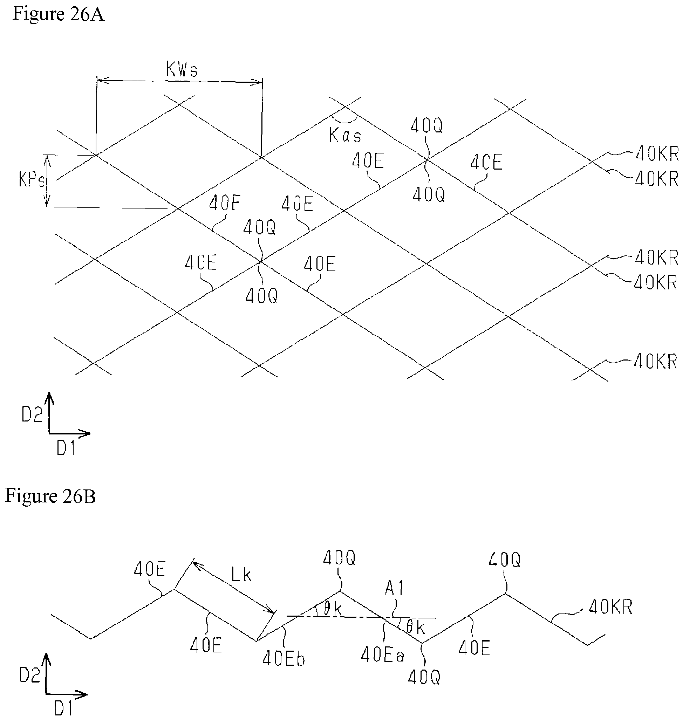

A method for creating the pattern formed by the plurality of sensing electrode wires 53SR discussed hereinabove will be described with reference to Figure 26 to Figure 29. The pattern of the sensing electrode wires 53SR in this mode of embodiment is created on the basis of a reference pattern, which is pattern in which a plurality of rhombuses are arranged regularly. The reference pattern will first be described with reference to Figure 26A and Figure 26B.

As illustrated in Figure 26A, the reference pattern is a grid-shaped pattern formed from a plurality of straight lines extending in directions inclined with respect to both the first electrode direction D1 and the second electrode direction D2. Furthermore, the reference pattern is a pattern in which a plurality of rhombuses are arranged, without gaps, in the first electrode direction D1 and the second electrode direction D2.
Here, the reference pattern can be understood to be a pattern in which a plurality of sensing reference electrode wires 40KR, which are imaginary electrode wires having a polygonal line shape and extending in the first electrode direction D1, are arranged in the second electrode direction D2. Figure 26B illustrates one sensing reference electrode wire 40KR extracted from the reference pattern.

Each of the plurality of sensing reference electrode wires 40KR is an assembly of two types of reference short line portions 40E having a straight line shape and mutually different inclinations. Each sensing reference electrode wire 40KR includes two types of reference short line portions 40E repeated alternately in the first electrode direction D1, and reference bent portions 40Q which are parts where the two types of reference bent portions 40E are connected to one another. The reference bent portion 40Q is point shaped. In other words, each of the plurality of sensing reference electrode wires 40KR has a polygonal line shape in which the plurality of reference short line portions 40E are linked by way of the reference bent portions 40Q, and which extend in the first electrode direction D1.

Each of the two types of reference short line portions 40E has a length Lk in the direction in which the reference short line portion 40E extends. The lengths Lk of the plurality of reference short line portions 40E are all equal. Among the two types of reference short line portions 40E, one reference short line portion 40Ea is inclined at an angle +θk relative to the base axis A1, which is an imaginary straight line extending in the first electrode direction D1, and the other reference short line portion 40Eb is inclined at an angle -θk relative to the base axis A1. The angle between two mutually adjacent reference short line portions 40E is a reference angle Kas, and the reference angles Kas in the plurality of sensing reference electrode wires 40KR are all equal. Further, the reference angle Kas is bisected by a straight line extending in a direction in the second electrode direction D2 through the reference bent portion 40Q.

In other words, the plurality of reference bent portions 40Q comprise the ridge portions in the drawing, which are one example of first imaginary bent portions, and the valley portions in the drawing, which are one example of second imaginary bent portions, and the first imaginary bent portions and the second imaginary bent portions are arranged alternately and periodically, one by one along the sensing reference electrode wire 40KR. Furthermore, the plurality of first imaginary bent portions and the plurality of second imaginary bent portions are positioned on separate straight lines extending in the first electrode direction D1.

The distance between reference bent portions 40Q that are adjacent to one another in the first electrode direction D1 is a reference period KWs. That is, the reference period KWs is the distance between mutually adjacent first imaginary bent portions on one side, in the second electrode direction D2, of the sensing reference electrode wire 40KR, and is also the distance between mutually adjacent second imaginary bent portions on the other side thereof in the second electrode direction D2. The reference period KWs is constant in the plurality of sensing reference electrode wires 40KR.

The plurality of sensing reference electrode wires 40KR are arranged in the second electrode direction D2 with the phases thereof inverted. That is, in sensing reference electrode wires 40KR that are adjacent to one another in the second electrode direction D2, the phases of parts thereof arranged in the second electrode direction D2 are opposite phases. The phase is a position, in the first electrode direction D1, within one period of the sensing reference electrode wire 40KR. Furthermore, in two mutually adjacent sensing reference electrode wires 40KR, the reference bent portions 40Q closest to the adjacent sensing reference electrode wire 40KR are connected to one another. That is, the reference bent portions 40Q on one side, in the second electrode direction D2, of one sensing reference electrode wire 40KR and the reference bent portions 40Q on the other side, in the second electrode direction D2, of the other sensing reference electrode wire 40KR are connected to one another. In other words, in two mutually adjacent sensing reference electrode wires 40KR, the first imaginary bent portions of one sensing reference electrode wire 40KR and the second imaginary bent portions of the other sensing reference electrode wire 40KR are connected to one another.

The arrangement spacing of the plurality of sensing reference electrode wires 40KR is the reference spacing KPs. That is, in mutually adjacent sensing reference electrode wires 40KR, the distance in the second electrode direction D2 between the reference bent portions 40Q that are the first imaginary bent portions, or between the reference bent portions 40Q that are the second imaginary bent portions, is the reference spacing KPs. In other words, the reference spacing KPs is the distance in the second electrode direction D2 between the reference bent portions 40Q positioned on one side, in the second electrode direction D2, of one sensing reference electrode wire 40KR, that is, the first imaginary bent portions, and the reference bent portions 40Q positioned on the other side thereof in the second electrode direction D2, that is, the second imaginary bent portions. Further, the reference spacing KPs is the width occupied by one sensing reference electrode wire 40KR in the second electrode direction D2.

The parameters of reference angle Kas, reference period KWs and reference spacing KPs are each preferably set in such a way as to satisfy similar conditions to the conditions indicated for the bend angle αs, the bending period Ws and the electrode wire spacing Ps respectively in the description of the sensing electrode wires 33SR in the first mode of embodiment. More specifically, the parameters of reference angle Kad, reference period KWd and reference spacing KPd are preferably set to values that suppress moiré generation when the pattern obtained by superimposing the reference pattern used to create the sensing electrode wires 53SR and the reference pattern used to create the drive electrode wires 51DR is superimposed on the pixel pattern of the display panel 10. Further, the reference angle Kad is preferably at least equal to 95 degrees and at most equal to 150 degrees, and more preferably at least equal to 100 degrees and at most equal to 140 degrees. Further, the reference spacing KPd is preferably set to within a range of between 10% or more and 600% or less of the first pixel width P1 and the second pixel width P2 in the display panel 10.

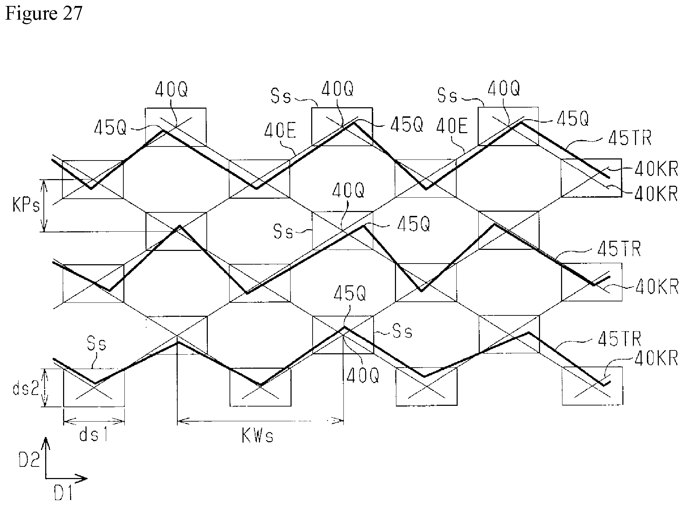

A method for creating the pattern formed by the plurality of sensing electrode wires 53SR on the basis of the reference pattern will be described with reference to Figure 27 to Figure 29.

As illustrated in Figure 27, sensing displaced electrode wires 45TR having a polygonal line shape obtained by irregularly displacing the positions of the reference bent portions 40Q of sensing reference electrode wires 40KR having aligned phases, from among the plurality of sensing reference electrode wires 40KR, are first set with respect to said sensing reference electrode wires 40KR. To elaborate, sensing reference electrode wires 40KR having aligned phases are sensing reference electrode wires 40KR selected alternately in the second electrode direction D2, from among the sensing reference electrode wires 40KR arranged in the second electrode direction D2.

Displaced bent portions 45Q of the sensing displaced electrode wires 45TR are disposed in positions displaced with respect to the reference bent portions 40Q of the sensing reference electrode wires 40KR. Furthermore, the displaced bent portions 45Q are positioned within displacement regions Ss set for each reference bent portion 40Q. That is, the displaced bent portions 45Q are positioned in positions in which the reference bent portions 40Q have been displaced irregularly, within the displacement regions Ss, with respect to the order in which the reference bent portions 40Q are arranged along the sensing reference electrode wires 40KR.

The displacement regions Ss have a rectangular shape centered on the reference bent portions 40Q. More specifically, the rectangles constituting the displacement regions Ss have sides extending in the first electrode direction D1 and sides extending in the second electrode direction D2, and the reference bent portions 40Q are positioned at the point of intersection of the diagonals of the rectangles. The length ds1 of the displacement regions Ss in the first electrode direction D1 is preferably set to within a range at least equal to 0.05 times and at most equal to 0.45 times the reference period KWs. The length ds2 of the displacement regions Ss in the second electrode direction D2 is preferably set to within a range at least equal to 0.05 times and at most equal to 0.45 times the reference spacing KPs.

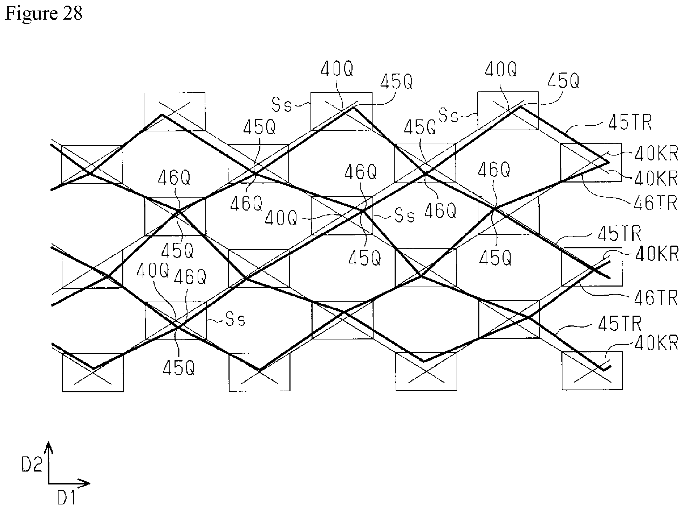

As illustrated in Figure 28, sensing displaced electrode wires 46TR having a polygonal line shape successively joining the displaced bent portions 45Q of two sensing displaced electrode wires 45TR adjacent to one another in the second electrode direction D2 are then set between said sensing displaced electrode wires 45TR. That is, the sensing displaced electrode wires 46TR have a polygonal line shape created by alternately joining the displaced bent portions 45Q positioned on one side, in the second electrode direction D2, of one sensing displaced electrode wire 45TR from among two mutually adjacent sensing displaced electrode wires 45TR, and the displaced bent portions 45Q positioned on the other side, in the second electrode direction D2, of the other sensing displaced electrode wire 45TR. In other words, the sensing displaced electrode wires 46TR have a polygonal line shape obtained by linking, in each of two mutually adjacent sensing displaced electrode wires 45TR, the displaced bent portions 45Q thereof on the side closest to the adjacent sensing displaced electrode wire 45TR.

The positions of displaced bent portions 46Q of the sensing displaced electrode wires 46TR coincide with the positions of the displaced bent portions 45Q. The sensing displaced electrode wires 46TR have a polygonal line shape obtained by irregularly displacing, within the displacement regions Ss, the positions of the reference bent portions 40Q with respect to sensing reference electrode wires 40KR having the opposite phase to the sensing reference electrode wires 40KR serving as the basis for the sensing displaced electrode wires 45TR.

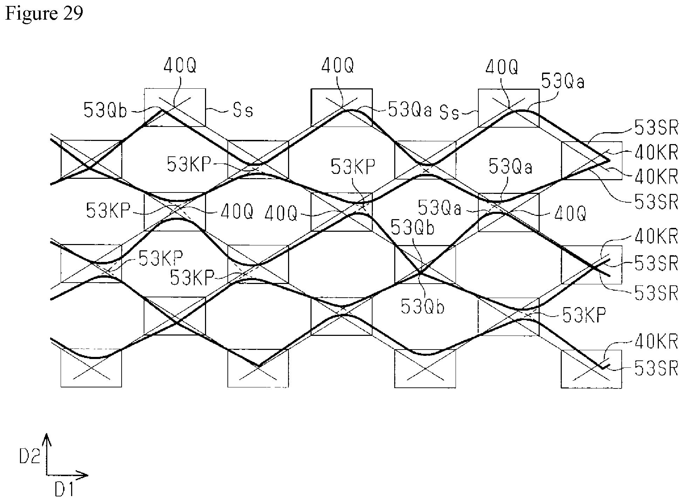

As illustrated in Figure 29 the sensing electrode wires 53SR are then created by changing the shape in the vicinity of the displaced bent portions 45Q, 46Q into an arc shape, with regard to the displaced bent portions 45Q, 46Q of some of the sensing displaced electrode wires 45TR, 46TR. At this time, with regard to mutually adjacent sensing displaced electrode wires 45TR, 46TR that are the basis for the sensing electrode wires 53SR forming a common sensing electrode 33SP, some of the displaced bent portions 45Q, 46Q shared by said sensing displaced electrode wires 45TR, 46TR are changed into arc shapes. Those thereof that have been changed into arc shapes are the separated bent portions 53Qa of the sensing electrode wires 53SR, and the positions of the displaced bent portions 45Q, 46Q correspond to the positions of the imaginary points of intersection 53KP. Meanwhile, among the displaced bent portions 45Q, 46Q, those that have not been changed into arc shapes are the connected bent portions 53Qb of the sensing electrode wires 53SR.

Further, with regard to mutually adjacent sensing displaced electrode wires 45TR, 46TR that are the basis for the sensing electrode wires 53SR forming mutually different sensing electrodes 33SP, all the displaced bent portions 45Q, 46Q shared by said sensing displaced electrode wires 45TR, 46TR are changed into arc shapes.

As described hereinabove, the imaginary points of intersection 53KP relating to each sensing electrode wire 53SR are disposed in positions that are displaced relative to the reference bent portions 40Q of the sensing reference electrode wires 40KR, within the displacement region Ss for each reference bent portion 40Q, irregularly with respect to the order in which the reference bent portions 40Q are arranged. Further, the connected bent portions 53Qb of the sensing electrode wires 53SR are also disposed in positions displaced irregularly relative to the reference bent portions 40Q, within the displacement regions Ss. That is, the imaginary points of intersection 53KP and the connected bent portions 53Qb are disposed in positions that are displaced relative to the reference bent portions 40Q, within the displacement region Ss for each reference bent portion 40Q, irregularly with respect to the order in which the reference bent portions 40Q are arranged in the sensing reference electrode wires 40KR.

It is to be noted that the sensing displaced electrode wires 45TR, 46TR discussed hereinabove are imaginary electrode wires used to describe the process for creating the sensing electrode wires 53SR from the sensing reference electrode wires 40KR, and the sensing electrode wires 53SR may be created without explicitly setting the sensing displaced electrode wires 45TR, 46TR.

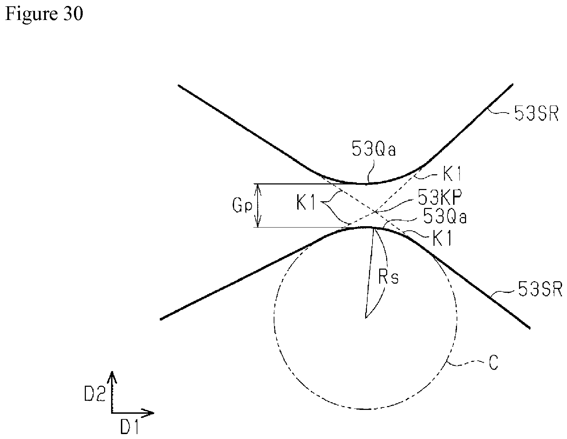

The relationship between the reference spacing KPs of the sensing reference electrode wires 40KR and the shape of the separated bent portions 53Qa of the sensing electrode wires 53SR will be described with Figure 30. As illustrated in Figure 30, with regard to opposing separated bent portions 53Qa of sensing electrode wires 53SR that are adjacent to one another in the second electrode direction D2, the shortest distance in the second electrode direction D2 between the separated bent portions 53Qa is a separation distance Gp.

The separation distance Gp is preferably at least equal to 5 µm. If the separation distance Gp is at least equal to 5 µm, it is easy to form the shape of the separated bent portions 53Qa precisely. Further, the separation distance Gp is preferably at most equal to 0.25 times the reference spacing KPs. If the separation distance Gp is too large, the gaps between mutually adjacent sensing electrode wires 53SR are liable to be visually recognized as a periodic pattern, and this periodicity may cause moiré to be visually recognized when the pixel pattern of the display panel 10 is superimposed on the electrode wire pattern of the touch panel 20. Such visual recognition of moiré is suitably suppressed if the separation distance Gp is at most equal to 0.25 times the reference spacing KPs. It should be noted that in the drawing, the distance between the opposing separated bent portions 53Qa is illustrated in a more exaggerated manner than in practice.

Further, a radius of curvature Rs of the separated bent portions 53Qa, that is, the radius Rs of the circle C, is preferably set such that the width in the first electrode direction D1 occupied by the separated bent portions 53Qa is at least equal to twice the line width of the sensing electrode wires 53SR. Furthermore, in order to suppress moiré, the ratio of the radius of curvature Rs of the separated bent portions 53Qa to the reference spacing KPs is preferably at most equal to 0.5. The length of the short line portions 53E decreases as the radius of curvature Rs increases.

### Configuration of drive electrodes

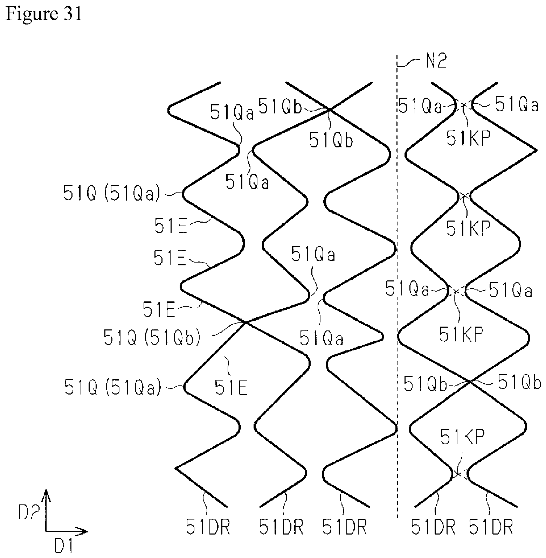

The configuration of the drive electrode wires 51DR forming the drive electrodes 31DP in the fifth mode of embodiment will be described with reference to Figure 31.

As illustrated in Figure 31, each drive electrode wire 51DR has a bent line shape which extends in the second electrode direction D2 while bending repeatedly, and in the same way as with the sensing electrode wires 53SR, the drive electrode wires 51DR are created on the basis of reference electrode wires having a regular polygonal line shape.

Specifically, each drive electrode wire 51DR includes a plurality of bent portions 51Q including separated bent portions 51Qa and connected bent portions 51Qb, and a plurality of short line portions 51E in the shape of straight lines joining the bent portions 51Q that are adjacent to one another along the drive electrode wire 51DR.

The plurality of drive electrode wires 51DR are arranged in the first electrode direction D1. The plurality of drive electrode wires 51DR constituting one drive electrode 31DP are connected at one end thereof in the second electrode direction D2 to a common drive pad 31P. The dashed line N2 in Figure 31 indicates a boundary between mutually adjacent drive electrodes 31DP. That is, drive electrode wires 51DR that are adjacent to one another across the dashed line N2 are constituents of mutually different drive electrodes 31DP and are connected to mutually different drive pads 31P.

The length in the direction in which each short line portion 51E extends varies irregularly with respect to the order in which the short line portions 53E are arranged, among the plurality of short line portions 53E arranged in the second electrode direction D2. Further, the inclination of each short line portion 51E relative to a straight line extending in the second electrode direction D2 varies irregularly with respect to the order in which the short line portions 53E are arranged, among the plurality of short line portions 53E. Furthermore, in one drive electrode wire 51DR, the short line portions 51E having a positive inclination and the short line portions 51E having a negative inclination are repeated alternately in the second electrode direction D2.

The separated bent portions 51Qa have an arc shape. Each separated bent portion 51Qa faces a separated bent portion 51Qa of a drive electrode wire 51DR adjacent to the drive electrode wire 51DR that includes the separated bent portion 51Qa, with a gap therebetween. The short line portions 51E joined to each separated bent portion 51Qa extend from the end of the arc forming the separated bent portion 51Qa in such a way as to follow the tangent to the separated bent portion 51Qa at said end thereof. The curvature of the separated bent portion 51Qa is constant within one separated bent portion 51Qa. Further, the curvature of each separated bent portion 51Qa of the drive electrode wires 51DR may be constant or may differ among the plurality of separated bent portions 51Qa.

A point of intersection of respective extension lines of two short line portions 51E joined to both ends of one separated bent portion 51Qa is an imaginary point of intersection 51KP. In drive electrode wires 51DR that are adj acent to one another in the first electrode direction D1, the positions of the imaginary points of intersection 51KP related to each of two opposing separated bent portions 51Qa coincide with one another.

The connected bent portions 51Qb are point shaped. Each connected bent portion 51Qb is connected to a connected bent portion 51Qb of a drive electrode wire 51DR adjacent to the drive electrode wire 51DR that includes the connected bent portion 51Qb. In one drive electrode wire 51DR, two adjacent short line portions 51E sandwiching a connected bent portion 51Qb are connected to one another at the position of the connected bent portion 51Qb, and the connected bent portion 51Qb and the two short line portions 51E form a polygonal line shaped part.

In one drive electrode 31DP, each drive electrode wire 51DR is connected in at least one location to another drive electrode wire 51DR adjacent to the drive electrode wire 51DR, by respective connected bent portions 51Qb thereof being connected to one another. In order both to suppress the generation of floating portions and to suppress a deterioration in image quality, preferably at least 5 and no more than 19 separated bent portions 51Qa, and more preferably at least 9 and no more than 13 separated bent portions 51Qa are positioned along the drive electrode wire 51DR between two connected bent portions 51Qb that are adjacent to one another along the drive electrode wire 51DR. Further, the connected bent portions 51Qb are preferably arranged at irregular intervals.

Meanwhile, the drive electrode wires 51DR constituting mutually different drive electrodes 31DP, that is, drive electrode wires 51DR that are adjacent to one another across the dashed line N2, do not have locations in which the bent portions 51Q are connected to one another between the electrode wires.

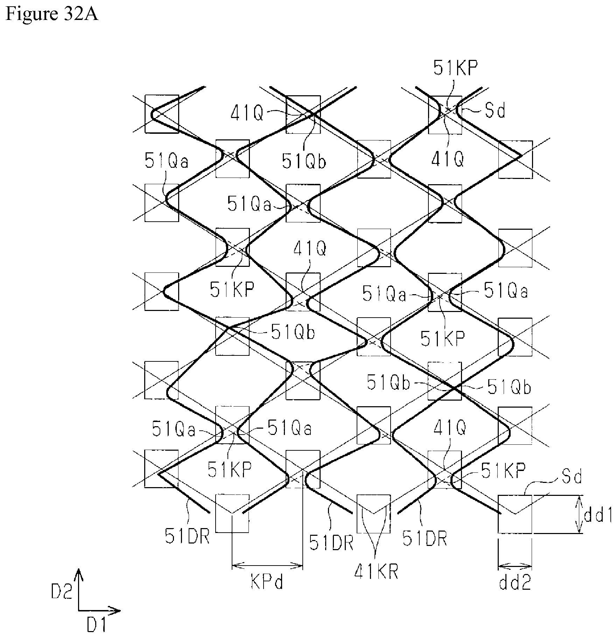

As illustrated in Figure 32A, the pattern formed by the plurality of drive electrode wires 51DR is created on the basis of a reference pattern, which is pattern in which a plurality of rhombuses are arranged regularly, in the same way as with the pattern of sensing electrode wires 53SR.

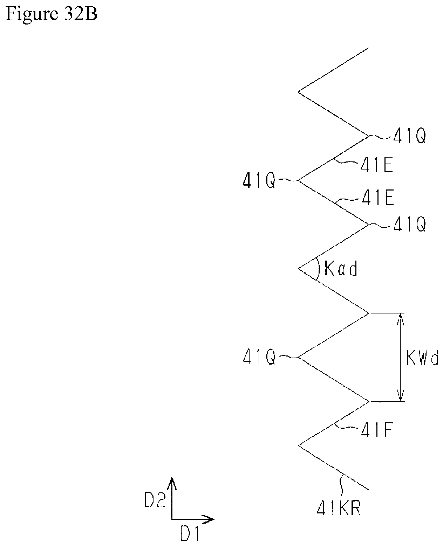

The reference pattern can be understood to be a pattern in which a plurality of drive reference electrode wires 41KR, which are imaginary electrode wires having a polygonal line shape and extending in the second electrode direction D2, are arranged in the first electrode direction D1. Figure 32B illustrates one drive reference electrode wire 41KR extracted from the reference pattern.

Each drive reference electrode wire 41KR includes two types of reference short line portions 41E repeated alternately in the first electrode direction D1, and reference bent portions 41Q which are parts where the two types of reference bent portions 41E are connected to one another. The length of the plurality of reference short line portions 41E is constant. Among the two types of reference short line portions 41E, the inclination of one type of reference short line portion 41E relative to a straight line extending in the second electrode direction D2 is positive, the inclination of the other type of reference short line portion 41E relative to a straight line extending in the second electrode direction D2 is negative, and the absolute values of the inclinations are equal. The bent portions 41Q positioned on one side, in the first electrode direction D1, of the drive reference electrode wire 41KR and the bent portions 41Q positioned on the other side thereof are positioned on separate straight lines extending in the second electrode direction D2.

The angle between two mutually adjacent reference short line portions 41E is a reference angle Kad, and the reference angles Kad in the plurality of drive reference electrode wires 41KR are all equal. The distance between reference bent portions 41Q that are adjacent to one another in the second electrode direction D2 is a reference period KWd. The reference period KWd is constant in the plurality of drive reference electrode wires 41KR.

The plurality of drive reference electrode wires 41KR are arranged in the first electrode direction D1 with the phases thereof inverted. That is, in drive reference electrode wires 41KR that are adjacent to one another in the first electrode direction D1, the phases of parts thereof arranged in the first electrode direction D1 are opposite phases. The phase is a position, in the second electrode direction D2, within one period of the drive reference electrode wire 41KR. Furthermore, in two mutually adjacent drive reference electrode wires 41KR, the reference bent portions 41Q on one side, in the first electrode direction D1, of one drive reference electrode wire 41KR and the reference bent portions 41Q on the other side, in the first electrode direction D1, of the other drive reference electrode wire 41KR are connected to one another.

The arrangement spacing of the plurality of drive reference electrode wires 41KR is the reference spacing KPd. That is, the distance in the first electrode direction D1 between the reference bent portions 40Q on one side, in the first electrode direction D1, of mutually adjacent drive reference electrode wires 41KR is the reference spacing KPd.

The reference angle Kad, the reference period KWd and the reference spacing KPd of the drive reference electrode wires 41KR are each preferably set in such a way as to satisfy similar conditions to the conditions indicated for the bend angle αs, the bending period Ws and the electrode wire spacing Ps respectively in the description of the sensing electrode wires 33SR in the first mode of embodiment. That is, the parameters of reference angle Kad, reference period KWd and reference spacing KPd are preferably set to values that suppress moiré generation when the reference pattern and the pixel pattern of the display panel 10 are superimposed. Further, the reference angle Kad is preferably at least equal to 95 degrees and at most equal to 150 degrees, and more preferably at least equal to 100 degrees and at most equal to 140 degrees. It should be noted that at least one of the reference angle Kas of the sensing reference electrode wires 40KR and the reference angle Kad of the drive reference electrode wires 41KR should be within the abovementioned range. Further, the reference spacing KPd is preferably set to within a range of between 10% or more and 600% or less of the first pixel width P1 and the second pixel width P2 in the display panel 10.

The drive electrode wires 51DR are also created on the basis of a reference pattern, using a similar procedure to the sensing electrode wires 53SR. That is, displaced electrode wires that are imaginary electrode wires having a polygonal line shape obtained by irregularly displacing the positions of the reference bent portions 41Q of drive reference electrode wires 41KR having aligned phases, from among the plurality of drive reference electrode wires 41KR, are set with respect to said drive reference electrode wires 41KR. Displaced electrode wires having a polygonal line shape successively joining displaced bent portions, which are the bent portions of two adjacent displaced electrode wires, are then additionally set between said displaced electrode wires. The drive electrode wires 51DR are created by changing the shape in the vicinity of the displaced bent portions into an arc shape, with regard to the displaced bent portions of some of the displaced electrode wires that have been set in this way.

Among the plurality of displaced bent portions, those that have been changed into arc shapes are the separated bent portions 51Qa of the drive electrode wires 51DR, and the positions of the displaced bent portions correspond to the positions of the imaginary points of intersection 51KP. Meanwhile, among the displaced bent portions, those that have not been changed into arc shapes are the connected bent portions 51Qb of the drive electrode wires 51DR. The imaginary points of intersection 51KP and the connected bent portions 51Qb are disposed in positions that are displaced relative to the reference bent portions 41Q of the drive reference electrode wires 41KR, within the displacement region Sd for each reference bent portion 41Q, irregularly with respect to the order in which the reference bent portions 41Q are arranged.

The displacement regions Sd have a rectangular shape centered on the reference bent portions 41Q. The length dd1 of the displacement regions Sd in the second electrode direction D2 is preferably set to within a range at least equal to 0.05 times and at most equal to 0.45 times the reference period KWd. The length dd2 of the displacement regions Sd in the first electrode direction D1 is preferably set to within a range at least equal to 0.05 times and at most equal to 0.45 times the reference spacing KPd.

Also in the drive electrodes 31DP, with regard to opposing separated bent portions 51Qa of drive electrode wires 51DR that are adj acent to one another in the first electrode direction D1, the separation distance, which is the shortest distance in the first electrode direction D1 between the separated bent portions 51Qa, is preferably at least equal to 5 µm. Further, the separation distance is preferably at most equal to 0.25 times the reference spacing KPd.

### Configuration of electrode wire pattern

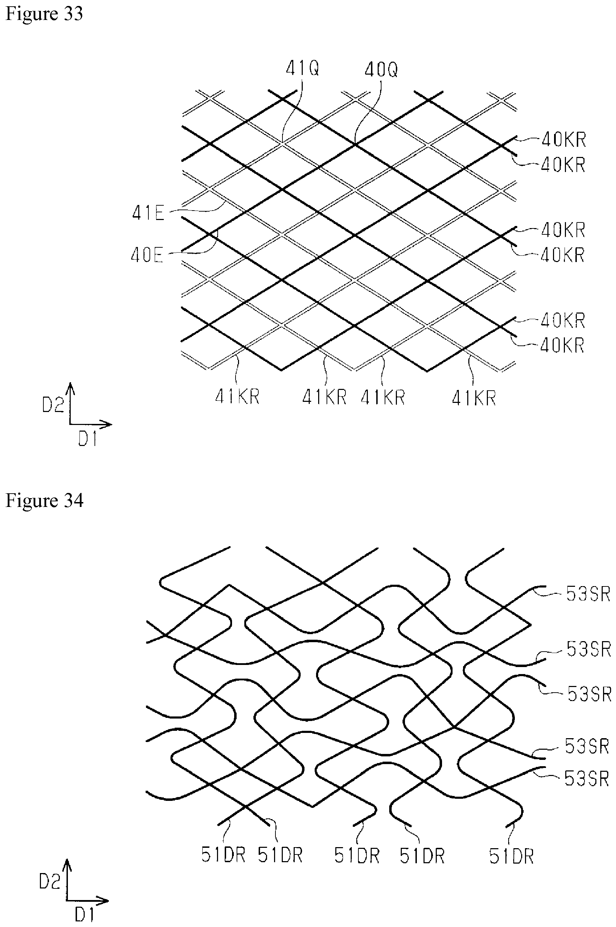

The electrode wire pattern, which is a pattern formed by superimposing the plurality of sensing electrode wires 53SR and the plurality of drive electrode wires 51DR, will be described with reference to Figure 33 and Figure 34.

A preferred shape and arrangement of the sensing reference electrode wires 40KR and the drive reference electrode wires 41KR will first be described with reference to Figure 33. In Figure 33, the sensing reference electrode wires 40KR are illustrated using thick black lines and the drive reference electrode wires 41KR are illustrated using double lines in order to facilitate identification of the sensing reference electrode wires 40KR and the drive reference electrode wires 41KR. The pattern formed by the plurality of sensing reference electrode wires 40KR and the pattern formed by the plurality of drive reference electrode wires 41KR are preferably patterns having the same grid formation. That is, the reference period KWs of the sensing reference electrode wires 40KR is preferably twice the reference spacing KPd of the drive reference electrode wires 41KR (KWs=2×KPd), and the reference period KWd of the drive reference electrode wires 41KR is preferably twice the reference spacing KPs of the sensing reference electrode wires 40KR (KWd=2×KPs).

The electrode wire pattern, which is a pattern obtained by superimposing the pattern formed by the plurality of sensing electrode wires 53SR and the pattern formed by the plurality of drive electrode wires 51DR, is formed in the conductive film 21 when viewed in a direction facing the top surface of the transparent dielectric substrate 33. At this time, the electrode wires are overlaid in such a way that the direction in which the sensing electrodes 33SP extend and the direction in which the drive electrodes 31DP extend intersect at right angles. This electrode wire pattern is a pattern based on a pattern in which the pattern formed by the plurality of sensing reference electrode wires 40KR and the pattern formed by the plurality of drive reference electrode wires 41KR are superimposed in such a way that the direction in which the sensing reference electrode wires 40KR extend and the direction in which the drive reference electrode wires 41KR extend intersect at right angles.

As illustrated in Figure 33, if KWs=2×KPd and KWd=2×KPs, the arrangement of the sensing reference electrode wires 40KR relative to the drive reference electrode wires 41KR, that is, the positions of the reference bent portions 40Q and the reference short line portions 40E relative to the reference bent portions 41Q and the reference short line portions 41E, is constant within the pattern. It is therefore possible to increase the uniformity of the density of the electrode wire arrangement in the pattern formed by the reference electrode wires 40KR and 41KR, and by extension, to prevent the density of the electrode wire arrangement in the electrode wire pattern formed by the sensing electrode wires 53SR and the drive electrode wires 51DR from becoming excessively non-uniform within the pattern.

For example, as illustrated in Figure 33, the pattern of the sensing reference electrode wires 40KR and the pattern of the drive reference electrode wires 41KR are arranged in such a way that the grids formed by each pattern are offset from one another by half of a pitch. In other words, in the pattern formed by the reference electrode wires 40KR and 41KR, the reference bent portions 40Q of the sensing reference electrode wires 40KR are positioned at the center of rhombuses formed by mutually adjacent drive reference electrode wires 41KR. Further, the reference bent portions 40Q of the drive reference electrode wires 41KR are positioned at the center of rhombuses formed by mutually adjacent sensing reference electrode wires 40KR. Furthermore, midpoints of the reference short line portions 40E of the sensing reference electrode wires 40KR and midpoints of the reference short line portions 41E of the drive reference electrode wires 41KR intersect.

Figure 34 illustrates an electrode wire pattern formed by the sensing electrode wires 53SR and the drive electrode wires 51DR created on the basis of the pattern formed by the reference electrode wires 40KR and 41KR illustrated in Figure 33.

Since the sensing electrode wires 53SR and the drive electrode wires 51DR forming the electrode wire pattern have a bent line shape that bends irregularly, a difference may occur in the sparsity or density of the electrode wires in the electrode wire pattern, that is, regions in which the electrode wires are arranged densely and regions in which the electrode wires are arranged sparsely may be generated. However, if the sparsity or density of the electrode wires in the pattern is excessively non-uniform, the difference between the sparsity or density of the electrode wires may cause graining to be visually recognized.

Creating the electrode wire pattern using, as the pattern formed by the reference electrode wires 40KR and 41KR, a pattern having a high degree of uniformity in the arrangement density of the electrode wires, prevents the density of the arrangement of electrode wires in the electrode wire pattern from becoming excessively non-uniform within the pattern.

The operation of the fifth mode of embodiment will be described. Since the electrode wire pattern in the present mode of embodiment is a pattern formed from shapes that are different from rectangles, the periodicity of the pattern is low in comparison with a pattern in which rectangles having the same shape are repeated, as in a pattern in which electrode wires extending linearly intersect one another. Therefore, the offset between the pixel pattern and the electrode wire pattern is not readily recognized as an offset between two periodic structures, and therefore when the electrode wire pattern in the present mode of embodiment is superimposed on the pixel pattern of the display panel 10, visual recognition of moiré is suppressed. As a result, a deterioration in the quality of images visually recognized on the display device 100 is suppressed.

In particular, since the sensing electrode wires 53SR and the drive electrode wires 51DR forming the electrode wire pattern each have an irregular bent line shape, the periodicity of the pattern is lower than if the pattern is formed from electrode wires having a regular bent line shape. Therefore, visual recognition of moiré is more suitably suppressed when the electrode wire pattern and the pixel pattern are superimposed.

Further, part of the periodicity of the pattern of the reference electrode wires 40KR and 41KR may also remain in the electrode wire pattern formed by the sensing electrode wires 53SR and the sensing electrode wires 51DR. In the present mode of embodiment, the electrode wire pattern is created from reference electrode wires 40KR and 41KR of which the reference angles Kas and Kad, the reference periods KWs and KWd, and the reference spacings KPs and KPd are each set to values with which moiré generation does not readily occur. Therefore, visual recognition of moiré attributable to the periodicity of the reference electrode wires 40KR and 41KR is also suppressed when the electrode wire pattern and the pixel pattern are superimposed.

Furthermore, the patterns of the plurality of sensing electrode wires 53SR and the plurality of drive electrode wires 51DR are each patterns in which the phases of mutually adjacent electrode wires are inverted, and which are created by displacing the positions of the bent portions irregularly with respect to the patterns of the reference electrode wires 40KR and 41KR in which the bent portions are connected to one another. Consequently, in mutually adjacent sensing electrode wires 53SR, the separated bent portions 53Qa oppose one another, and the positions of the imaginary points of intersection 53KP related to each of said separated bent portions 53Qa coincide with one another. Similarly, in mutually adjacent drive electrode wires 51DR, the separated bent portions 51Qa oppose one another, and the positions of the imaginary points of intersection 51KP related to each of the opposing separated bent portions 51Qa coincide with one another.

With such a configuration, a situation does not occur in which short line portions having the same inclination are arranged in the first electrode direction D1 or the second electrode direction D2. Consequently, strip-shaped regions in which short line portions having the same inclination are arranged do not form in such a way as to extend in the direction in which the electrode wires are arranged, and moreover there is no occurrence of an alternating arrangement of two types of strip-shaped regions in which the directions in which the short line portions extend differ from one another. Therefore, visual recognition of a strip-shaped pattern as a result, in particular, of the reflection of external light when the display device 100 is unlit is suppressed, and a reduction in the quality of the appearance as seen from the operating surface 20S is suppressed.

Further, as discussed hereinabove, in parts of electrode wire patterns where corner portions meet, the wire width of the electrode wires in the corner portions becomes greater than the design dimension, and the corner portions are liable to be visually recognized as a point. Therefore, if a pattern of displaced electrode wires in which the positions of the reference bent portions 40Q, 41Q of the reference electrode wires 40KR, 41KR are merely displaced is adopted as the electrode wire pattern, in other words if all the bent portions included in the electrode wire pattern are connected bent portions 53Qb, 51Qb, then since there are many corner portions, the number of parts visually recognized as points may increase, resulting in a deterioration in the quality of images visually recognized on the display device 100. In contrast, in the present mode of embodiment some of the bent portions 53Q, 53Q are arc-shaped separated bent portions 53Qa, 51Qa, and therefore a deterioration in the image quality is suppressed. Further, since some of the bent portions 53Q, 51Q are connected bent portions 53Qb, 51Qb, mutually adjacent electrode wires are connected to one another at the connected bent portions 53Qb, 51Qb, and therefore the generation of floating portions as a result of breaks in the electrode wires is suppressed.

It should be noted that the arc-shaped separated bent portions 53Qa, 51Qa in the fifth mode of embodiment are examples of arcuate bent portions.

Also, in each of the sensing electrodes 33SP and the drive electrodes 31DP in the fifth mode of embodiment, an intermediate region between two mutually adjacent electrode wires includes an enlarging region in which the region width, which is the length of the intermediate region in the direction in which the electrodes are arranged, becomes larger in the direction in which the electrodes extend, and a contracting region in which the region width becomes smaller in the direction in which the electrodes extend. Furthermore, the enlarging region and the contracting region are disposed alternately in the direction in which the electrodes extend. In each of the enlarging regions and the contracting regions, the rate of change in the region width per unit length does not need to be constant, and a region in which the region width is constant may be included between an enlarging region and a contracting region that are adjacent to one another.

As described hereinabove, according to the fifth mode of embodiment the advantages detailed below can be obtained.
(14) In mutually adjacent sensing electrode wires 53SR, the separated bent portions 53Qa oppose one another, and the positions of the imaginary points of intersection 53KP related to each of said separated bent portions 53Qa coincide with one another. With such a configuration, the formation of strip-shaped regions in which short line portions extending in the same direction are arranged in the second electrode direction D2 is suppressed, and an alternating arrangement in the first electrode direction D1 of two types of strip-shaped regions in which the directions in which the short line portions extend differ from one another is also suppressed. Therefore, since visual recognition, as a result of reflected light, for example, of a strip-shaped pattern resulting from such an arrangement of strip-shaped regions is suppressed, a reduction in the quality of the appearance as seen from the operating surface 20S is suppressed. Similarly, in mutually adjacent drive electrode wires 51SR, the separated bent portions 51Qa oppose one another, and the positions of the imaginary points of intersection 51KP related to each of said separated bent portions 51Qa coincide with one another. With such a configuration, the formation of strip-shaped regions in which short line portions extending in the same direction are arranged in the first electrode direction D1 is suppressed, and an alternating arrangement in the second electrode direction D2 of two types of strip-shaped regions in which the directions in which the short line portions extend differ from one another is also suppressed. Therefore, since visual recognition of a strip-shaped pattern resulting from such an arrangement of strip-shaped regions is suppressed, a reduction in the quality of the appearance as seen from the operating surface 20S is suppressed.

Further, the formation of such strip-shaped regions is also suppressed because the inclinations of the short line portions 53E in the sensing electrode wires 53SR are irregular and the inclinations of the short line portions 51E in the drive electrode wires 51DR are also irregular.
(15) Since the sensing electrode wires 53SR have a bent line shape that bends irregularly, the periodicity of the electrode wire pattern is suppressed to a greater extent than with a configuration in which the sensing electrode wires have a bent line shape that bends regularly. Therefore, visual recognition of moiré is suitably suppressed in a pattern in which the electrode wire pattern and the pixel pattern are superimposed. Similarly, since the drive electrode wires 51DR have a bent line shape that bends irregularly, visual recognition of moiré in the pattern obtained by superimposing the electrode wire pattern and the pixel pattern is suitably suppressed.
(16) Mutually adjacent sensing electrode wires 53SR in one sensing electrode 33SP are connected to one another at the connected bent portions 53Qb. Similarly, mutually adjacent drive electrode wires 51DR in one drive electrode 31DP are connected to one another at the connected bent portions 51Qb. According to such a configuration, the generation of floating portions caused by breaks in the electrode wires is suppressed, as a result of which a deterioration in the detection accuracy of the position of contact is suppressed.
(17) The separated bent portions 53Qa, 51Qa are arc shaped, and the short line portions 53E, 51E joined to each separated bent portion 53Qa, 51Qa extend from the ends of the arc forming the separated bent portion 53Qa, 51Qa in such a way as to follow the tangent to the separated bent portion 53Qa, 51Qa at said end thereof. According to such a configuration, the direction in which the electrode wire extends in the bent part changes more gradually that in a configuration in which the separated bent portions 53Qa, 51Qa have polygonal line shapes, and it is therefore easy for the line width of the electrode wires to be formed uniformly, in accordance with the design dimension. An increase in the line width of the separated bent portions 53Qa, 51Qa resulting in an increased likelihood of the separated bent portions 53Qa, 51Qa being visually recognized is therefore suppressed. Consequently, a deterioration in the quality of images visually recognized on the display device 100 is suppressed.
(18) The plurality of sensing electrode wires 53SR are configured in such a way that the phase is inverted in mutually adjacent electrode wires, and in such a way that the imaginary points of intersection 53KP are disposed in positions displaced relative to the reference bent portions 40Q of the sensing reference electrode wires 40KR having connected bent portions. Similarly, the plurality of drive electrode wires 51DR are configured in such a way that the phase is inverted in mutually adjacent electrode wires, and in such a way that the imaginary points of intersection 51KP are disposed in positions displaced relative to the reference bent portions 41Q of the drive reference electrode wires 41KR having connected bent portions. According to such a configuration, electrode wires with which the advantages (14) and (15) described hereinabove can be obtained are reliably realized.

In the displacement regions Ss, which are regions within which the imaginary points of intersection 53KP are displaced relative to the reference bent portions 40Q of the sensing reference electrode wires 40KR, the length ds1 in the first electrode direction D1 is at least equal to 0.05 times and at most equal to 0.45 times the reference period KWs, and the length ds2 in the second electrode direction D2 is in a range at least equal to 0.05 times and at most equal to 0.45 times the reference spacing KPs. If the lengths ds1 and ds2 are at least equal to these lower limits, an electrode wire shape in which the periodicity of the sensing reference electrode wire 40KR is adequately disrupted is obtained for the sensing electrode wire 53SR. Meanwhile, if the lengths ds1 and ds2 are at most equal to the upper limits, the sensing electrode wire 53SR is prevented from adopting an excessively irregular bent line shape. The density of the electrode wire arrangement in the electrode wire pattern is thus prevented from becoming excessively non-uniform within the pattern. Similarly, in the displacement regions Sd, which are regions within which the imaginary points of intersection 51KP are displaced relative to the reference bent portions 41Q of the drive reference electrode wires 41KR, the length dd1 in the second electrode direction D2 is at least equal to 0.05 times and at most equal to 0.45 times the reference period KWd, and the length dd2 in the first electrode direction D1 is in a range at least equal to 0.05 times and at most equal to 0.45 times the reference spacing KPd. If the lengths dd1 and dd2 are at least equal to these lower limits, an electrode wire shape in which the periodicity of the drive reference electrode wire 41KR is adequately disrupted is obtained for the drive electrode wire 51DR. Meanwhile, if the lengths dd1 and dd2 are at most equal to the upper limits, the drive electrode wire 51DR is prevented from adopting an excessively irregular bent line shape. The density of the electrode wire arrangement in the electrode wire pattern is thus prevented from becoming excessively non-uniform within the pattern.
(20) The reference period KWs of the sensing reference electrode wires 40KR is twice the reference spacing KPd of the drive reference electrode wires 41KR, and the reference period KWd of the drive reference electrode wires 41KR is twice the reference spacing KPs of the sensing reference electrode wires 40KR. According to such a configuration, in the pattern obtained by superimposing the plurality of sensing reference electrode wires 40KR and the plurality of drive reference electrode wires 41KR, the positions of the reference bent portions 40Q of the sensing reference electrode wires 40KR relative to the reference bent portions 41Q of the drive reference electrode wires 41KR is constant within the pattern. It is consequently possible to form the pattern in such a way that the density of the arrangement of the electrode wires in the pattern is uniform, and the density of the arrangement of electrode wires is also prevented from becoming excessively non-uniform in the electrode wire pattern created on the basis of such a pattern. Therefore, since visual recognition of graining, which occurs as a result of a difference in the sparsity or density of the electrode wires, is suppressed, a deterioration in the quality of images visually recognized on the display device 100 is suppressed.

### Modified examples of fifth mode of embodiment

The fifth mode of embodiment can be modified and implemented as follows.

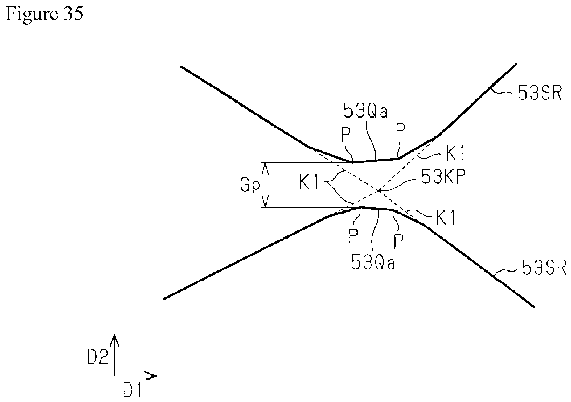

In the fifth mode of embodiment, the separated bent portions 53Qa, 51Qa have an arc shape, but the shape of the separated bent portions 53Qa, 51Qa is not limited to an arc shape. The separated bent portions 53Qa, 51Qa may have a curved shape different from an arc shape, or may have a polygonal line shape. Figure 35 illustrates an example of a polygonal line bent portion, which is a separated bent portion 53Qa having a polygonal line shape.

As illustrated in Figure 35, the separated bent portion 53Qa has a polygonal line shape joining a plurality of intermediate points P arranged between two short line portions 53E that are adjacent to one another along the sensing electrode wire 53SR. The intermediate points P are positioned inside a triangular region formed by joining the imaginary point of intersection 53KP, which is the point of intersection of the respective extension lines of the two mutually adjacent short line portions 53E, and the ends of each of the two short line portions 53E on the sides thereof closest to the imaginary point of intersection 53KP. For example, the intermediate points P may be positioned on a circle touching the imaginary lines K1 at the ends of the two short line portions 53E. The separated bent portions 53Qa extend from the end of one short line portion 53E among the two short line portions 53E, through the intermediate points P, in order from the point positioned closest, in the first electrode direction D1, to said end, to the end of the other short line portion 53E. Such a separated bent portion 53Qa has a polygonal line shape comprising consecutive ridge portions.

The greater the number of intermediate points P, the larger the angles formed in the parts where the separated bent portion 53Qa bends, and the more gradual the change in the direction in which the electrode wire extends. It is therefore easier for the line width of the electrode wires to be formed uniformly, in accordance with the design dimension. From this viewpoint, the number of intermediate points P is preferably at least two.

Even if the separated bent portions 53Qa have a shape different from an arc, the separation distance Gp is the shortest distance in the second electrode direction D2 between two mutually opposing separated bent portions 53Qa.

As described hereinabove, the separated bent portions 53Qa should join the two short line portions 53E, adjacent to one another along the sensing electrode wire 53SR, on the side, in the second electrode direction D2, of the imaginary point of intersection 53KP, which is the point of intersection of respective extension lines of the short line portions 53E, that is closer to the short line portions 53E. In other words, the separated bent portions 53Qa should join the end portions of the two short line portions 53E within a triangular region formed by linearly joining the imaginary point of intersection 53KP and the end portions of the two short line portions 53E. Similarly, the separated bent portions 51Qa should join the two short line portions 51E, adjacent to one another along the drive electrode wire 51DR, on the side, in the first electrode direction D1, of the imaginary point of intersection 51KP, which is the point of intersection of respective extension lines of the short line portions 51E, that is closer to the short line portions 51E.

It should be noted that in the sensing electrode wires 53SR, the plurality of separated bent portions 53Qa may include separated bent portions 53Qa having mutually different shapes, and in the drive electrode wires 51DR, the plurality of separated bent portions 51Qa may include separated bent portions 51Qa having mutually different shapes. Further, the shapes of the separated bent portions 53Qa and the shapes of the separated bent portions 51Qa may be different.

The sensing electrode wires 53SR in one sensing electrode 33SP may be connected to other adjacent sensing electrode wires 53SR at the connected bent portions 53Qb on both sides in the second electrode direction D2. Alternatively, the sensing electrode wires 53SR may be connected to another adjacent sensing electrode wire 53SR at a bent portion 53Qb on only one side in the second electrode direction D2. Furthermore, the sensing electrodes 33SP may include sensing electrode wires 53SR that are not connected to another sensing electrode wire 53SR, and the sensing electrodes 33SP may have no sensing electrode wire 53SR connecting locations. That is, the sensing electrode wires 53SR may have no connected bent portions 53Qb.

Similarly, the drive electrode wires 51DR in one drive electrode 31DP should be connected to other adjacent drive electrode wires 51DR at the connected bent portions 51Qb on at least one side in the first electrode direction D1. Furthermore, the drive electrodes 31DP may include drive electrode wires 51DR that are not connected to another drive electrode wire 51DR, and the drive electrodes 31DP may have no drive electrode wire 51DR connecting locations.

In mutually adjacent sensing electrode wires 53SR, if the configuration is such that two mutually opposing separated bent portions 53Qa are separated from one another by a gap, it is possible for only one of the separated bent portions 53Qa to have a curved or polygonal line shape, as discussed hereinabove, and for the other separated bent portion 53Qa to have the same shape as the connected bent portions 53Qb, namely a point shape. Similarly, in mutually adjacent drive electrode wires 51DR, if the configuration is such that two mutually opposing separated bent portions 51Qa are separated from one another by a gap, it is possible for only one of the separated bent portions 51Qa to have a curved or polygonal line shape, as discussed hereinabove, and for the other separated bent portion 51Qa to have the same point shape as the connected bent portions 51Qb.

Among the plurality of imaginary points of intersection 53KP, the positions of the imaginary points of intersection 53KP in the second electrode direction D2 may change irregularly with respect to the order in which the imaginary points of intersection 53KP are arranged, on only one side, in the second electrode direction D2, of the sensing electrode wire 53SR. That is, the sensing displaced electrode wires 45TR, 46TR may have a shape in which only the first imaginary bent portions or only the second imaginary bent portions of the sensing reference electrode wires 40KR are displaced irregularly. Similarly, among the plurality of imaginary points of intersection 51KP, the positions of the imaginary points of intersection 51KP in the first electrode direction D1 may change irregularly with respect to the order in which the imaginary points of intersection 51KP are arranged, on only one side, in the first electrode direction D1, of the drive electrode wire 51DR.

In the fifth mode of embodiment, the patterns of the sensing electrode wires 53SR and the drive electrode wires 51DR are created on the basis of the patterns of the reference electrode wires 40KR and 41KR, which are patterns in which rhombuses are arranged, but the patterns of the reference electrode wires 40KR, 41KR may be patterns that are different from those in said mode of embodiment. For example, the patterns of the reference electrode wires 40KR, 41KR may be grid-shaped patterns in which rectangles are arranged. Further, the relationship between the reference period KWs of the sensing reference electrode wires 40KR and the reference spacing KPd of the drive reference electrode wires 41KR, and the relationship between the reference period KWd of the drive reference electrode wires 41KR and the reference spacing KPs of the sensing reference electrode wires 40KR may differ from those in said mode of embodiment.

Furthermore, there is no restriction to the method for creating the patterns of the sensing electrode wires 53SR and the drive electrode wires 51DR, provided said patterns have the shape features described in the fifth mode of embodiment.

### Reference mode

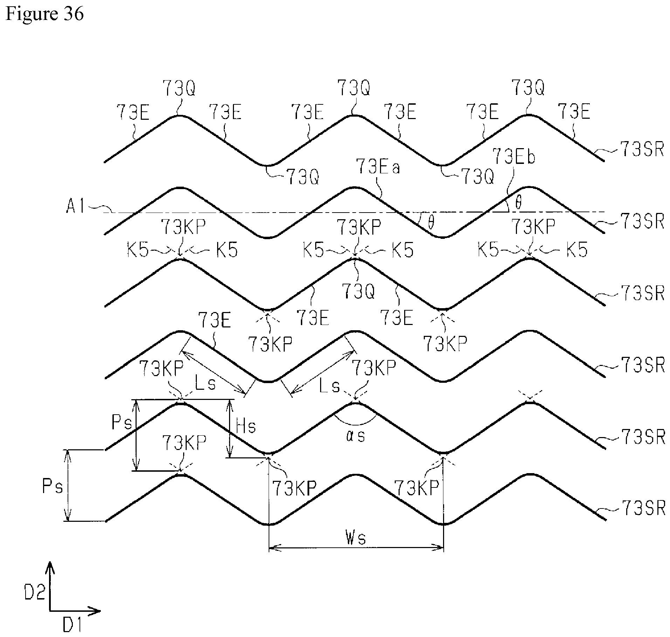

A reference mode of a conductive film, a touch panel and a display device will be described with reference to Figure 36 to Figure 45. Hereinafter, components that are the same as in the first mode of embodiment are denoted using the same reference codes, and descriptions thereof are omitted.

In the corner portions of the polygonal line shaped electrode wires, the direction in which the electrode wire extends changes greatly per unit area. Therefore, when manufacturing the electrode wires, is difficult to form the shape of the corner portions precisely, in accordance with the design shape. In particular, if the electrode wires are formed by etching a metal thin film, the line width of the electrode wires in the corner portions is liable to become greater than the design dimension. Such a localized increase in the line width may lead to an increase in a deviation between the design values and the actual measured values of the electrical characteristics of the touch panel, and to a deterioration in the quality of images visually recognized on the display device. The objective of the present mode is to provide a conductive film, a touch panel and a display device with which it is possible to suppress a localized increase in the line width of the electrode wires.

### Configuration of sensing electrodes

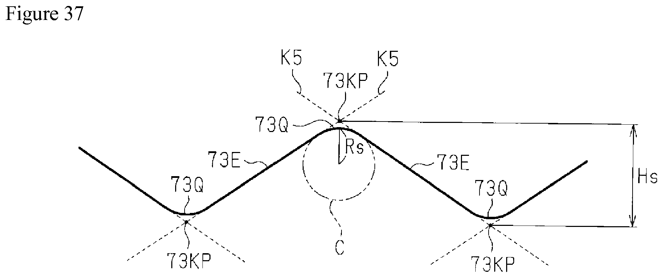

The configuration of sensing electrode wires 73SR forming the sensing electrodes 33SP in the reference mode will be described with reference to Figure 36 and Figure 37.

As illustrated in Figure 36, each of the plurality of sensing electrode wires 73SR has a wavy line shape, that is, a bent line shape which bends in such a way that each bent part has a curvature, and the bent parts corresponding to ridge portions in the drawing and the bent parts corresponding to valley portions in the drawing are arranged alternately one by one along the sensing electrode wire 73SR.

Each sensing electrode wire 73SR extends as a whole in the first electrode direction D1, and the plurality of sensing electrode wires 73SR are arranged spaced apart in the second electrode direction D2. The plurality of sensing electrode wires 73SR constituting one sensing electrode 33SP are each connected at one end thereof in the first electrode direction D1 to a sensing pad 33P.

More specifically, each of the plurality of sensing electrode wires 73SR includes a plurality of arc shaped curved portions 73Q and a plurality of straight portions 73E in the shape of straight lines. The curved portions 73Q form bent parts in the shape of bent lines, and the curved portions 73Q and the straight portions 73E are disposed alternately along the sensing electrode wire 73SR. Furthermore, one straight portion 73E extends continuously from the respective arcs that form two curved portions 73Q, between said two curved portions 73Q. The curved portions 73Q are one example of bent portions, and the straight portions 73E are one example of short line portions.

Each of the plurality of straight portions 73E has a length Ls in the direction in which the straight portion 73E extends, and the length Ls is constant among the plurality of straight portions 73E. Further, the plurality of straight portions 73E comprise straight portions 73Ea inclined at an angle +θ relative to the base axis A1, which is an imaginary straight line extending in the first electrode direction D1, and straight portions 73Ea inclined at an angle -θ relative to the base axis A1. The straight portions 73Ea and the straight portions 73Eb are arranged alternately in the first electrode direction D1. That is, among the plurality of straight portions 73E, the absolute value of the inclination of each straight portion 73E relative to the base axis A1 is constant, and in one sensing electrode wire 73SR the straight portions 73E having a positive inclination and the straight portions 73E having a negative inclination are repeated alternately in the first electrode direction D1.

The curvature of each of the plurality of curved portions 73Q is constant within each curved portion 73Q, and the curvatures of each curved portion 73Q are equal to one another. That is, the radius of curvature of each curved portion 73Q is constant among the plurality of curved portions 73Q.

Each of the plurality of sensing electrode wires 73SR has a shape obtained by translating one sensing electrode wire 73SR in the second electrode direction D2.

Here, an imaginary straight line extending along the straight portion 73E is an imaginary line K5, and a point of intersection of imaginary lines K5 set with respect to each of two straight portions 73E sandwiching one curved portion 73Q is an imaginary point of intersection 73KP. In other words, the imaginary point of intersection 73KP is a point of intersection of respective extension lines of two straight portions 73E joined to both ends of one curved portion 73Q.

The angle between the imaginary lines K5 set with respect to each of two straight portions 73E joined to both ends of one curved portion 73Q is the bend angle αs, and the bend angle αs is constant within one sensing electrode wire 73SR. Further, the bend angle αs is bisected by a straight line extending in the second electrode direction D2 through the imaginary point of intersection 73KP.

A plurality of the imaginary points of intersection 73KP positioned on one side, in the second electrode direction D2, relative to one sensing electrode wire 73SR are positioned on a straight line extending in the first electrode direction D1, and a plurality of the imaginary points of intersection 73KP positioned on the other side thereof in the second electrode direction D2 are also positioned on a straight line extending in the first electrode direction D1.

The distance between imaginary points of intersection 73KP that are adjacent to one another in the first electrode direction D1, on one side or the other side in the second electrode direction D2, is the bending period Ws, and the bending period Ws is constant among the plurality of imaginary points of intersection 73KP set with respect to one sensing electrode wire 73SR. Further, the distance in the second electrode direction D2 between the imaginary points of intersection 73KP positioned on one side in the second electrode direction D2 and the imaginary points of intersection 73KP positioned on the other side in the second electrode direction D2 is the bend width Hs. In other words, the bend width Hs is the distance in the second electrode direction D2 between the straight line on which the plurality of imaginary points of intersection 73KP on one side in the second electrode direction D2 are positioned, and the straight line on which the plurality of imaginary points of intersection 73KP on the other side in the second electrode direction D2 are positioned.

The plurality of sensing reference electrode wires 73SR are arranged in the second electrode direction D2, spaced apart by the electrode wire spacing Ps, which is a constant spacing. That is, the electrode wire spacing Ps is the distance between adjacent imaginary points of intersection 73KP positioned on a straight line extending in the second electrode direction D2, from among the imaginary points of intersection 73KP set with respect to mutually adjacent sensing electrode wires 73SR.

The configuration of the curved portions 73Q will be described in detail with reference to Figure 37.

As illustrated in Figure 37, the arc forming the curved portion 73Q is an arc of a circle C which touches connecting points of the curved portion 73Q and the straight portions 73E joined to both ends of the curved portion 73Q, on the imaginary lines K5 set for each of the two straight portions 73E. The connecting points of the curved portion 73Q and the straight portions 73E are the boundary between a part of the bent line forming the sensing electrode wire 73SR having a curvature greater than zero and a part having a curvature of zero. In this way, the straight portion 73E extends between the two curved portions 73Q, from the ends of the arcs forming said curved portions 73Q, in such a way as to follow the tangent to the curved portions 73Q at the respective ends thereof. Furthermore, the ratio of the radius of curvature Rs of the curved portions 73Q, that is, the radius Rs of the circle C, to the bend width Hs is at most equal to 0.5.

It should be noted that this configuration is a configuration for a case in which the sensing electrode wire 73SR is deemed to be an ideal line having no width. In an actual sensing electrode wire 73SR having a line width, the abovementioned configuration can be realized by defining the imaginary line K5 and the circle C in such a way as to pass though the center, in the width direction, of the sensing electrode wire 73SR.

### Configuration of drive electrodes

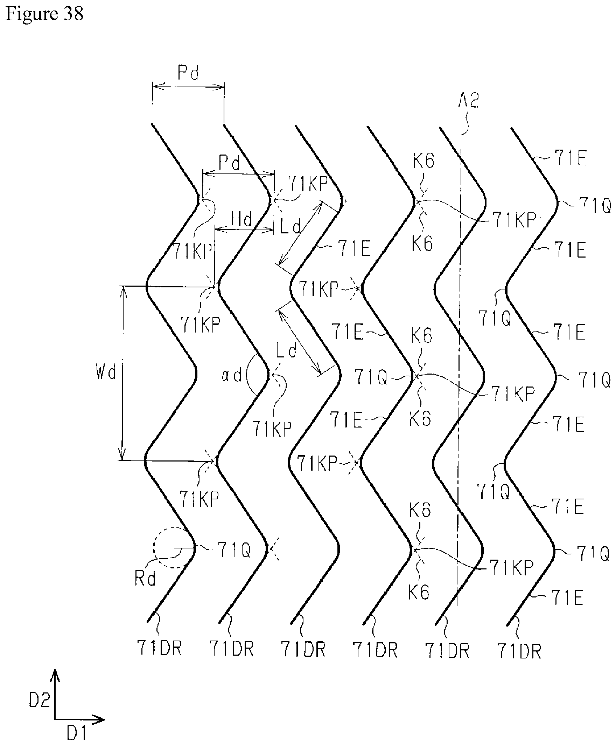

The configuration of drive electrode wires 71DR forming the drive electrodes 31DP in the reference mode will be described with reference to Figure 38.

As illustrated in Figure 38, the drive electrode wires 71DR have a shape obtained by rotating the sensing electrode wires 73SR through 90 degrees, as viewed in a direction facing the top surface of the transparent dielectric substrate 33. That is, each drive electrode wire 71DR extends as a whole in the second electrode direction D2, and the plurality of drive electrode wires 71DR are arranged spaced apart in the first electrode direction D1. The plurality of drive electrode wires 71DR constituting one drive electrode 31DP are each connected at one end thereof in the second electrode direction D2 to a drive pad 31P.

Each of the plurality of drive electrode wires 71DR includes a plurality of arc shaped curved portions 71Q and a plurality of straight portions 71E in the shape of straight lines, and the curved portions 71Q and the straight portions 71E are disposed alternately along the drive electrode wire 71DR. Furthermore, one straight portion 71E extends continuously from the respective arcs that form two curved portions 71Q, between said two curved portions 71Q. The curved portions 71Q are one example of bent portions, and the straight portions 71E are one example of short line portions. Each of the plurality of drive electrode wires 71DR has a shape obtained by translating one drive electrode wire 71DR in the first electrode direction D1.

Each of the plurality of straight portions 71E has a length Ld in the direction in which the straight portion 71E extends, and the length Ld is constant among the plurality of straight portions 71E. Further, the length Ld is equal to the length Ls of the straight portions 73E in the sensing electrode wires 73 SR. Among the plurality of straight portions 71E, the absolute value of the inclination of each straight portion 71E relative to the base axis A2, which is an imaginary straight line extending in the second electrode direction D2, is constant, and in one drive electrode wire 71DR the straight portions 71E having a positive inclination and the straight portions 71E having a negative inclination are repeated alternately in the second electrode direction D2. The absolute value of the inclination of the straight portions 71E relative to the base axis A2 is equal to the absolute value of the inclination of the straight portions 73E relative to the base axis A1 in the sensing electrode wires 73SR.

An imaginary straight line extending along the straight portion 71E is an imaginary line K6, and a point of intersection of imaginary lines K6 set with respect to each of two straight portions 71E sandwiching one curved portion 71Q is an imaginary point of intersection 71KP. That is, a point of intersection of respective extension lines of two straight portions 71E joined to both ends of one curved portion 71Q is the imaginary point of intersection 71KP. The bend angle αd, which is the angle between the imaginary lines K6 set with respect to each of said two straight portions 71E is constant within each drive electrode wire 71DR.

A plurality of the imaginary points of intersection 71KP positioned on one side, in the first electrode direction D1, relative to one drive electrode wire 71DR are positioned on a straight line extending in the second electrode direction D2, and a plurality of the imaginary points of intersection 71KP positioned on the other side thereof in the first electrode direction D1 are also positioned on a straight line extending in the second electrode direction D2.

The bending period Wd, which is the distance between imaginary points of intersection 71KP that are adjacent to one another in the second electrode direction D2, on one side or the other side in the first electrode direction D1, is constant among the plurality of imaginary points of intersection 71KP set with respect to one drive electrode wire 71DR. Further, the distance in the first electrode direction D1 between the imaginary points of intersection 71KP positioned on one side in the first electrode direction D1 and the imaginary points of intersection 71KP positioned on the other side in the first electrode direction D1 is the bend width Hd.

The distance between adjacent imaginary points of intersection 71KP positioned on a straight line extending in the first electrode direction D1, from among the imaginary points of intersection 71KP set with respect to mutually adjacent drive electrode wires 71DR, is the electrode wire spacing Pd. The plurality of drive electrode wires 71DR are arranged in the first electrode direction D1, spaced apart by a constant spacing, namely the electrode wire spacing Pd.

The bend angle αd is equal to the bend angle αs in the sensing electrode wires 73SR, the bending period Wd is equal to the bending period Ws in the sensing electrode wires 73SR, the bend width Hd is equal to the bend width Hs in the sensing electrode wires 73SR, and the electrode wire spacing Pd is equal to the electrode wire spacing Ps in the sensing electrode wires 73SR.

The arc forming the curved portion 71Q is an arc of a circle which touches connecting points of the curved portion 71Q and the two straight portions 71E sandwiching the curved portion 71Q, on the imaginary lines K6 set for each of the straight portions 71E. That is, the straight portion 71E extends between the two curved portions 71Q, from the ends of the arcs forming said curved portions 71Q, in such a way as to follow the tangent to the curved portions 71Q at the respective ends thereof. The radius of curvature Rd of each curved portion 71Q is constant among the plurality of curved portions 71Q, and the ratio of the radius of curvature Rd of the curved portions 71Q to the bend width Hd is at most equal to 0.5.

### Configuration of electrode wire pattern

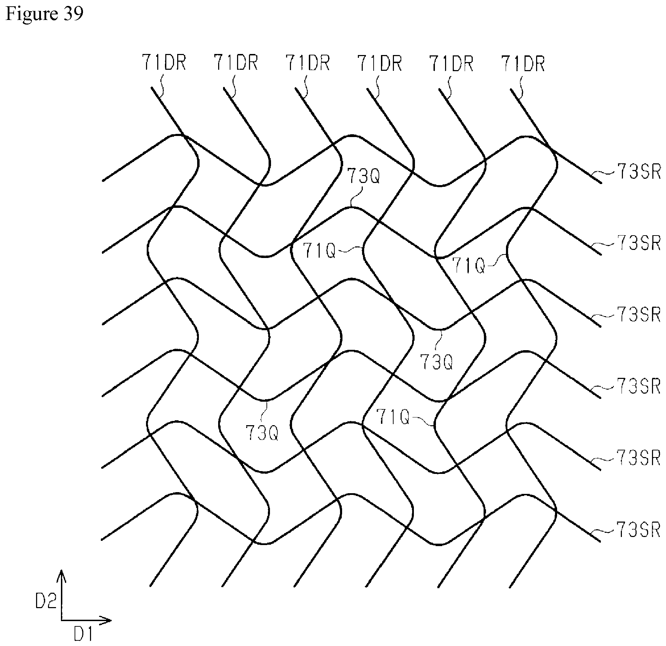

The electrode wire pattern, which is a pattern formed by superimposing the plurality of sensing electrode wires 73SR and the plurality of drive electrode wires 71DR, will be described with reference to Figure 39.

As illustrated in Figure 39, a pattern formed by superimposing the pattern formed by the plurality of sensing electrode wires 73SR discussed hereinabove and the pattern formed by the plurality of drive electrode wires 71DR is formed in the conductive film 21 when viewed in a direction facing the top surface of the transparent dielectric substrate 33. At this time, the electrode wires are overlaid in such a way that the sensing electrodes 33SP and the drive electrodes 31DP intersect at right angles, that is, in such a way that the direction in which the sensing electrode wires 73SR extend and the direction in which the drive electrode wires 71DR extend intersect at right angles.

At least some of the plurality of curved portions 73Q of the sensing electrode wires 73SR face gaps between the drive electrode wires 71DR, and at least some of the plurality of curved portions 71Q of the drive electrode wires 71DR face gaps between the sensing electrode wires 73SR. Furthermore, a mesh-like pattern in which figures having a plurality of different types of shape surrounded by curves and straight lines are arranged in the first electrode direction D1 and the second electrode direction D2 are formed by the plurality of sensing electrode wires 73SR and the plurality of drive electrode wires 71DR.

### Electrode wire pattern conditions

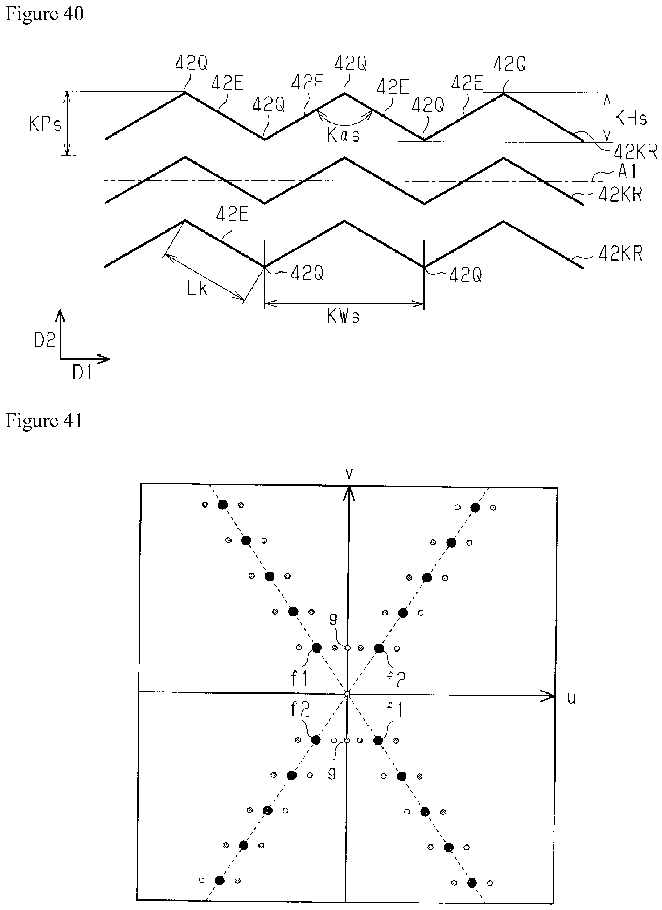

The conditions for setting the bend angle αs, αd, the bending period Ws, Wd, the bend width Hs, Hd and the electrode wire spacing Ps, Pd discussed hereinabove, and the reasons behind the definition of the ratio of the radius of curvature Rs, Rd of the curved portions 73Q, 71Q to the bend width Hs, Hd will be described with reference to Figure 40 to Figure 45.

The sensing electrode wires 73SR will be described hereinafter by way of example, but the same effect is generated and the same advantages are obtained for the drive electrode wires 71DR using the same conditions as those for the sensing electrode wires 73SR.

The sensing electrode wires 73SR have a shape obtained on the basis of sensing reference electrode wires 42KR having a periodic polygonal line shape as illustrated in Figure 40, by changing the bent parts of the sensing reference electrode wires 42KR into arcs. That is, the sensing reference electrode wires 42KR have a polygonal line shape which bends at the imaginary points of intersection 73KP discussed hereinabove.

More specifically, each of the plurality of sensing reference electrode wires 42KR has a polygonal line shape which extends in the first electrode direction D1 and in which a plurality of reference short line portions 42E in the shape of straight lines are linked by way of reference bent portions 42Q, which are parts where mutually adjacent reference short line portions 42E are connected to one another. The positions of the reference bent portions 42Q of the sensing reference electrode wires 42KR correspond to the positions of the imaginary points of intersection 73KP in the sensing electrode wires 73SR created on the basis of the sensing reference electrode wires 42KR. The plurality of sensing reference electrode wires 42KR are arranged in the second electrode direction D2, and each sensing reference electrode wire 42KR has a shape obtained by translating one sensing reference electrode wire 42KR in the second electrode direction D2.

The reference short line portions 42E have a constant length Lk in the direction in which the reference short line portion 42E extends. The inclination of the reference short line portions 42E relative to the base axis A1 coincides with the inclination of the straight portions 73E relative to the base axis A1 in the sensing electrode wires 73SR. The angle between two mutually adjacent reference short line portions 42E is the reference angle Kas, and the reference angle Kas coincides with the bend angle αs discussed hereinabove. The distance between reference bent portions 42Q that are adjacent to one another in the first electrode direction D1 is the reference period KWs, and the reference period KWs coincides with the bending period Ws discussed hereinabove.

Further, the width in the second electrode direction D2 occupied by one sensing reference electrode wire 42KR, that is, the distance in the second electrode direction D2 between adjacent reference bent portions 42Q along the sensing reference electrode wire 42KR, is the reference width KHs, and the reference width KHs coincides with the bend width Hs discussed hereinabove. Furthermore, the distance between the reference bent portions 42Q arranged in the second electrode direction D2 in mutually adjacent sensing reference electrode wires 42KR is the reference spacing KPs, and the reference spacing KPs coincides with the electrode wire spacing Ps discussed hereinabove.

The parameters of reference angle Kas, reference period KWs, reference width KHs and reference spacing KPs are each preferably set in such a way as to satisfy similar conditions to the conditions indicated for the bend angle αs, the bending period Ws, the bend width Hs and the electrode wire spacing Ps respectively in the description of the sensing electrode wires 33SR in the first mode of embodiment. That is, the parameters of reference angle Kad, reference period KWd, reference width KHs and reference spacing KPd are preferably set to values that suppress moiré generation when the pattern of the plurality of sensing reference electrode wires 42KR and the pixel pattern of the display panel 10 are superimposed. Further, the reference angle Kad is preferably at least equal to 95 degrees and at most equal to 150 degrees, and more preferably at least equal to 100 degrees and at most equal to 140 degrees. Further, the reference spacing KPd is preferably set to within a range of between 10% or more and 600% or less of the first pixel width P1 and the second pixel width P2 in the display panel 10.

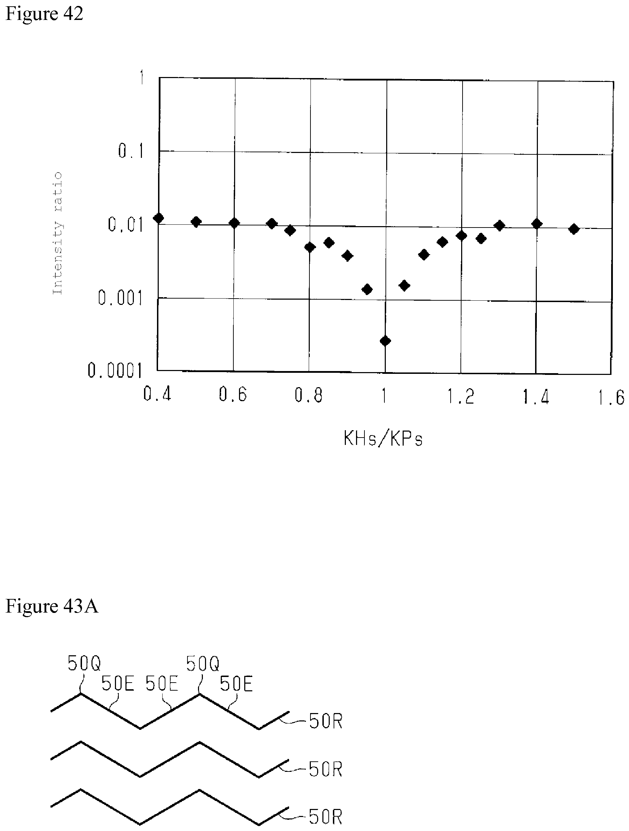

Here, the reference width KHs is preferably set to within a range in which an occupancy ratio KHs/KPs, which is the ratio of the reference width KHs to the reference spacing KPs set as discussed hereinabove, is at least equal to 0.7 and at most equal to 1.3. The reasons for defining this range of the occupancy ratio KHs/KPs will be described with reference to Figure 41 and Figure 42.

Figure 41 illustrates the result of an FFT analysis of one example of the pattern formed by the plurality of sensing reference electrode wires 42KR illustrated in Figure 40, being a power spectrum obtained by means of a two-dimensional Fourier transformation of the pattern formed by the plurality of sensing reference electrode wires 42KR. In Figure 41, characteristic peaks are emphasized, and weak points having a low correlation with the pattern of sensing reference electrode wires 42KR are omitted.

The origin in the drawing represents the peak of a direct current component, and fundamental spatial frequency components f1, f2 and high order components, defined by the reference angle Kas and the reference period KWs, appear in a two-dimensional frequency space. Further, in the drawing, frequency components attributable to the reference period KWs appear to the left and right of the fundamental spatial frequency component f1 and to the left and right of the fundamental spatial frequency component f2.

Here, a frequency component g, which is a spatial frequency in only the v-direction, appears between the fundamental spatial frequency component f1 and the fundamental spatial frequency component f2. The frequency component g is a frequency component generated as a result of the reference spacing KPs, and is derived only from the second electrode direction D2 periodicity contained in the pattern of sensing reference electrode wires 42KR. The high intensity of the frequency component g indicates that an element extending in the first electrode direction D1 in the pattern of the sensing reference electrode wires 42KR has a large frequency component, and in this case, when the pixel pattern of the display panel 10 and the pattern of the sensing reference electrode wires 42KR, extending similarly in the first electrode direction D1, are superimposed, the patterns interfere, and moiré having a high contrast is liable to be generated.

Figure 42 presents a result obtained by analyzing how the intensity of the frequency component g in the FFT analysis result varies when the reference width KHs and the occupancy ratio KHs/KPs are varied. That is, the drawing presents a relationship between the degree of overlap in the first electrode direction D1 between a region occupied by one sensing reference electrode wire 42KR and a region occupied by another sensing reference electrode wire 42KR, and the intensity of the frequency component g. In Figure 42, the vertical axis is a logarithmic representation of a relative value obtained by dividing the intensity of the frequency component g by the intensity of a direct current component of the overall pattern of the sensing reference electrode wires 42KR, and the horizontal axis represents the occupancy ratio KHs/KPs.

As illustrated in Figure 42, if the occupancy ratio KHs/KPs is increased from 0.4, the intensity of the frequency component g suddenly decreases when the occupancy ratio KHs/KPs exceeds 0.7, and the intensity of the frequency component g reaches a minimum when the occupancy ratio KHs/KPs is 1.0. Furthermore, the intensity of the frequency component g increases when the occupancy ratio KHs/KPs exceeds 1.0, and the intensity of the frequency component g is a constant high intensity when the occupancy ratio KHs/KPs exceeds 1.3.

Therefore, since the intensity of the frequency component g is suppressed to a low intensity if the occupancy ratio KHs/KPs is at least equal to 0.7 and at most equal to 1.3, moiré is less liable to occur when the pixel pattern and the pattern of the sensing reference electrode wires 42KR are superimposed, and the intensity of the frequency component g is lowest when the occupancy ratio KHs/KPs is 1.0, in particular, indicating that moiré is least liable to occur.

It should be noted that if the reference angle Kas is 90 degrees, the ratio between the reference period KWs and the reference width KHs is 2:1, and if the occupancy ratio KHs/KPs is 1.0, the ratio between the reference period KWs and the reference spacing KPs is 2:1. As a result, interference between the reference period KWs and the reference spacing KPs becomes stronger, which is not preferable.

On this basis, the bend angle αs in the sensing electrode wires 73SR is preferably at least equal to 95 degrees and at most equal to 150 degrees, and more preferably at least equal to 100 degrees and at most equal to 140 degrees. Further, the electrode wire spacing Ps is preferably set to within a range of between 10% or more and 600% or less of the first pixel width P1 and the second pixel width P2 in the display panel 10. Further, the bend width Hs is preferably set to within a range in which the ratio of the bend width Hs to the electrode wire spacing Ps (Hs/Ps) is at least equal to 0.7 and at most equal to 1.3.

The sensing electrode wires 73SR are created by changing the bent parts of the sensing reference electrode wires 42KR, that is, the shape in the vicinity of the reference bent portions 42Q, into an arc having a radius of curvature Rs. The reasons for defining the ratio of the radius of curvature Rs to the bend width Hs (reference width KHs) will now be described.

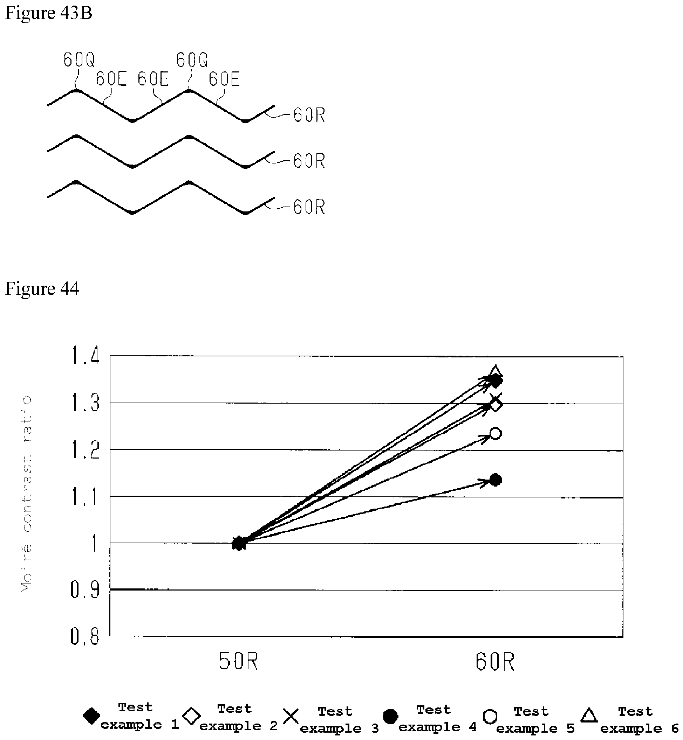

The configuration of electrode wires in which a localized increase in the line width occurs during the manufacturing process will first be described with reference to Figure 43A and Figure 43B. Figure 43A is a drawing illustrating an example of an ideal electrode wire pattern, that is, an example of an electrode wire pattern as designed, and electrode wires 50R illustrated in Figure 43A have the same configuration as the sensing reference electrode wires 42KR illustrated previously in Figure 40. The line width of the electrode wires 50R is constant in the end portions and the central portions of short line portions 50E corresponding to the reference short line portions 42E. That is, the line width of the electrode wires 50R does not change, even in parts in the vicinity of bent portions 50Q, corresponding to the reference bent portions 42Q, and in parts remote from the bent portions 50Q. Furthermore, the electrode wires 50R have a pointed shape in the bent portions 50Q.

Figure 43B is a drawing illustrating schematically an example of the shape of an electrode wire that is actually formed when an attempt is made to form the electrode wires 50R by etching a metal thin film. Since the direction in which the electrode wires 50R extend changes sharply per unit area in the vicinity of the bent portions 50Q of the electrode wires 50R, when trying to form the bent portions 50Q, an imbalance in the flow of etching fluid occurs in the parts intended to form the parts in the vicinity of the bent portions 50Q. As a result, even if the shape of the electrode wires 50R is reproduced precisely as the shape of a mask used for etching, for example, the line width of electrode wires 60R that are actually formed increases in the vicinity of bent portions 60Q of the electrode wires 60R, that is, in the end portions of short line portions 60E, and the bent portions 60Q form with a shape that bulges to the inside, mainly in the corner portions, compared with the ideal bent portions 50Q.

In contrast, in the sensing electrode wires 73SR in the present mode, since the bent parts bend in such a way as to have a curvature by virtue of being formed from the curved portions 73Q, the change in the direction in which the electrode wires extend in the bent parts is more gradual that in the electrode wires 50R. Therefore, a localized increase in the line width of the electrode wires in the vicinity of the bent parts during the manufacturing process is suppressed. As a result, the occurrence of discrepancies between the design values and actual measured values of the electrical characteristics of the touch panel 20 is suppressed. Further, since it is also less likely that locations in which the line width of the electrode wires increases locally will be noticeable when seen from the operating surface 20S of the touch panel 20, a deterioration in the quality of the external appearance of the touch panel 20 as seen from the operating surface 20S is suppressed, and a deterioration in the quality of images visually recognized on the display device 100 is also suppressed.

It should be noted that in order to increase the effect of suppressing a localized increase in the line width of the electrode wires, the curved portions 73Q preferably have a radius of curvature Rs with which the width over which the curved portions 73Q extend in the first electrode direction D1 is at least equal to twice the line width of the sensing electrode wires 73SR. Since the standard resolution when forming electrode wires is the line width of the electrode wires, if the width over which the curved portions 73Q extend in the first electrode direction D1 is at least equal to twice the line width of the sensing electrode wires 73SR, the sensing electrode wires 73SR can be formed while suppressing a localized increase in the line width of the electrode wires.

Further, if the electrode wires are formed by a method other than etching, since it is difficult to form very small corner portions precisely, as in the vicinity of the bent portions 50Q of the electrode wires 50R, even if a manufacturing method different from etching is used, advantages equivalent to the advantages discussed hereinabove can be obtained.

Here, a relationship between moiré and the ratio of the radius of curvature Rs of the curved portions 73Q to the bend width Hs in the sensing electrode wires 73SR will be described.

Figure 44 presents the results of simulations relating to moiré occurring when a pattern formed from the electrode wires 50R having an ideal shape and a pattern formed from the electrode wires 60R having a shape that is actually formed when aiming to form the electrode wires 50R are respectively superimposed on the pixel pattern. Moiré is a phenomenon which occurs as a result of a relative relationship between the periodicity of the electrode wire pattern and the periodicity of the pixel pattern, and in particular the relationship between the spacing of the electrode wires in the electrode wire pattern and the pixel width in the pixel pattern is an important factor impacting the generation of moiré. Therefore, six test examples having mutually different ratios between the electrode wire spacing and the pixel width were used as the object of the simulation.

Table 1 presents a combination of the electrode wire pattern and the pixel pattern in test examples 1 to 6, serving as the object of the simulation, and the ratio of the spacing between the electrode wires in the electrode wire pattern (reference spacing KPs, electrode wire spacing Ps) to the pixel width in the pixel pattern (first pixel width P1, second pixel width P2), for each test example 1 to 6.

Three types of pattern, A-1, A-2 and A-3, having mutually different electrode wire spacings were used as the electrode wire patterns, and two types of pattern, B-1 and B-2, having mutually different pixel widths were used as the pixel patterns. The pixel patterns B-1 and B-2 correspond to the resolutions of display panels used in typical laptop computers, for example 13.3 inch to 19 inch display panels. The first pixel width P1 and the second pixel width P2 are equal in each pixel pattern.

**Table 1**

| | Electrode wire pattern | Pixel pattern | Electrode wire spacing/ pixel width |
|---|---|---|---|
| Test example 1 | A-1 | B-1 | 80% |
| Test example 2 | A-1 | B-2 | 110% |
| Test example 3 | A-2 | B-1 | 120% |
| Test example 4 | A-2 | B-2 | 168% |
| Test example 5 | A-3 | B-1 | 158% |
| Test example 6 | A-3 | B-2 | 222% |

Moiré contrast used to evaluate moiré is an index representing light and shade in the moiré. The moiré contrast is a value calculated by quantifying the moiré strength obtained by the simulation, and dividing the difference between the maximum value and the minimum value thereof by the sum of the maximum value and the minimum value. In Figure 44, the vertical axis represents the ratio of the moiré contrast for a case in which the pattern of actually formed electrode wires 60R is used, with 1 representing the moiré contrast when the pattern of ideal electrode wires 50R is used. The larger the value of the moiré contrast, the darker the stripes appearing as moiré, and the greater the likelihood that moiré will be visually recognized.

As illustrated in Figure 44, in each test example the moiré contrast when the pattern of electrode wires 60R is used is greater than the moiré contrast when the pattern of ideal electrode wires 50R is used, rising to approximately 1.15 to 1.4 times said moiré contrast. That is, it was confirmed that moiré is visually recognized more intensely with a pattern in which there is a localized increase in the line width of the electrode wires in the vicinity of the bent parts, as in the electrode wires 60R, than with a pattern of electrode wires in which the bent parts are formed precisely. This is thought to be because when there is a localized increase in the line width of the electrode wires in the vicinity of the bent parts, the parts with an increased line width are more liable to be visually recognized as being arranged as dots, and this pattern of dots is more liable to be visually recognized as a periodic structure having periodicity in the same direction as the pixel pattern.

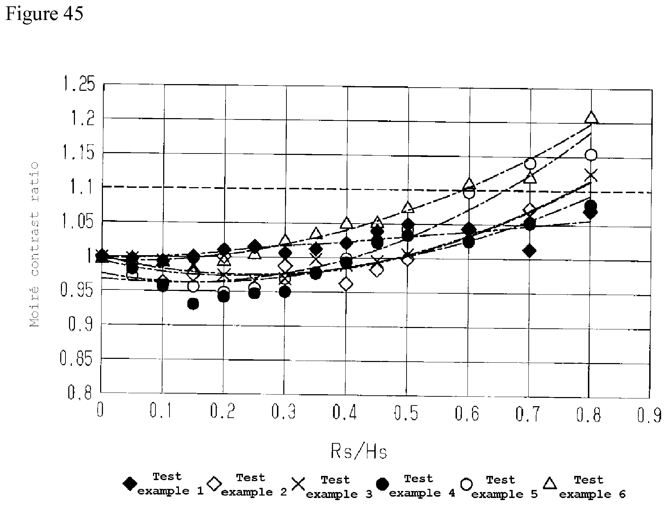

Figure 45 illustrates the results of simulations relating to moiré generated when, for the combinations of the electrode wire patterns and the pixel patterns in each of the test examples 1 to 6, the radius of curvature Rs of the curved portions 73Q is varied, using the shape of the sensing electrode wires 73SR in the present mode as the shape of the electrode wires.

In Figure 45, the vertical axis represents the ratio of the moiré contrast for a case in which the pattern of sensing electrode wires 73SR in the present mode is used, with 1 representing the moiré contrast when the pattern of electrode wires 50R is used. Further, in Figure 45 the radius of curvature Rs of the curved portions 73Q in each electrode wire pattern is represented on the horizontal axis as a ratio with respect to the bend width Hs. The length Ls of the straight portions 73E decreases as the ratio of the radius of curvature Rs to the bend width Hs increases.

It should be noted that Figure 45 also illustrates a relationship between the moiré contrast obtained for each test example and the ratio of the radius of curvature Rs to the bend width Hs, together with an approximate curve relating to the plotted points.

As illustrated previously in Figure 44, the moiré contrast when the pattern of electrode wires 60R in which there is a localized increase in the line width of the electrode wires in the vicinity of the bent parts is used rises to approximately 1.15 times to 1.4 times that when the pattern of the electrode wires 50R is used. As illustrated in Figure 45, for each test example, if the ratio of the radius of curvature Rs of the curved portions 73Q to the bend width Hs is 0.5 or less, the moiré contrast when the pattern of the sensing electrode wires 73SR is used is suppressed to at most 1.1 times the moiré contrast when the pattern of the electrode wires 50R is used. Therefore, if the ratio of the radius of curvature Rs of the curved portions 73Q to the bend width Hs is at most equal to 0.5, visual recognition of moiré is suppressed to a greater extent than with an electrode wire pattern in which there is a localized increase in the line width of the electrode wires in the vicinity of the bent parts.

Further, as illustrated in Figure 45, for each test example, if the ratio of the radius of curvature Rs of the curved portions 73Q to the bend width Hs is 0.3 or less, the moiré contrast when the pattern of the sensing electrode wires 73SR is used is suppressed to at most 1.05 times the moiré contrast when the pattern of the electrode wires 50R is used. Further, in such a range, depending on the relationship between the pixel pattern and the electrode wire pattern, that is, depending on the ratio of the electrode wire spacing Ps to the pixel width P1, P2, the moiré contrast is lower when the pattern of the sensing electrode wires 73SR having the curved portions 73Q is used than when the pattern of the electrode wires 50R is used, as in the test examples 2 to 5. Visual recognition of moiré is therefore suppressed to an even greater extent if the ratio of the radius of curvature Rs of the curved portions 73Q to the bend width Hs is at most equal to 0.3.

Similarly, in the drive electrode wires 71DR, the bend angle αd, the bending period Wd, the bend width Hd and the electrode wire spacing Pd are each preferably set in such a way as to satisfy the same conditions as the conditions indicated for the bend angle αs, the bending period Ws, the bend width Hs and the electrode wire spacing Ps respectively in the above description of the sensing electrode wires 73SR.

That is, the parameters of bend angle αd, bending period Wd, bend width Hd, and electrode wire spacing Pd are preferably set to values that suppress moiré generation when the pattern of the reference electrode wires comprising periodic polygonal line shapes which bend at the imaginary points of intersection 71KP and the pixel pattern of the display panel 10 are superimposed. Further, the bend angle αd is preferably at least equal to 95 degrees and at most equal to 150 degrees, and more preferably at least equal to 100 degrees and at most equal to 140 degrees. Further, the electrode wire spacing Pd is preferably set to within a range of between 10% or more and 600% or less of the first pixel width P1 and the second pixel width P2 in the display panel 10. Further, the bend width Hd is preferably set to within a range in which the ratio of the bend width Hd to the electrode wire spacing Pd (Hd/Pd) is at least equal to 0.7 and at most equal to 1.3.

Furthermore, if the ratio of the radius of curvature Rd of the curved portions 71Q to the bend width Hd is at most equal to 0.5, visual recognition of moiré when superimposed on the pixel pattern is suppressed to a greater extent than with an electrode wire pattern in which there is a localized increase in the line width of the electrode wires in the vicinity of the bent parts.

It should be noted that the shape of the sensing electrode wires 73SR, is, in other words, a shape in which coupling portions, which are parts of the sensing electrode wires 73SR joining two mutually adjacent straight portions 73E, are positioned in a region that is closer to the straight portions 73E, in the second electrode direction D2, than the imaginary points of intersection 73KP, which are points of intersection of the respective extension lines of said straight portions 73E. That is, in the two straight portions 73E, the end portions thereof that are closest to the imaginary point of intersection 73KP are joined to one another in a triangular region surrounded by linearly joining the imaginary point of intersection 73KP and the two straight portions 73E. Furthermore, the straight portions 73E are coupled portions that are coupled to another straight portion 73E by means of the curved portions 73Q, which are coupling portions having a curved shape.

Similarly, the shape of the drive electrode wires 71DR is a shape in which coupling portions, which are parts of the drive electrode wires 71DR joining two mutually adjacent straight portions 71E, are positioned in a region that is closer to the straight portions 71E, in the first electrode direction D1, than the imaginary points of intersection 71KP, which are points of intersection of the respective extension lines of said straight portions 71E. Furthermore, the straight portions 71E are coupled portions that are coupled to another straight portion 71E by means of the curved portions 71Q, which are coupling portions having a curved shape.

According to such a configuration, the change per unit area, in the bent parts, in the direction in which the electrode wires extend is more gradual than with electrode wires having a polygonal line shape passing through the straight portions 73E, 71E and the imaginary points of intersection 73KP, 71KP, and therefore the localized increase in the line width of the electrode wires in the vicinity of the bent parts during the manufacturing process is suppressed.

As described hereinabove, according to the reference mode the advantages detailed below can be obtained.
(21) In each of the sensing electrode wires 73SR and the drive electrode wires 71DR, since the bent parts having a bent line shape are formed from the arc shaped curved portions 73Q, 71Q, the change per unit area, in the bent parts, in the direction in which the electrode wires extend is more gradual than with electrode wires having a polygonal line shape. It is therefore easy to form the electrode wires 73SR, 71DR, and a localized increase in the line width of the electrode wires in the vicinity of the bent parts during the manufacturing process is suppressed. As a result, the occurrence of discrepancies between the design values and actual measured values of the electrical characteristics of the touch panel 20 is suppressed, and a deterioration in the quality of images visually recognized on the display device 100 is suppressed.
(22) In each of the sensing electrode wires 73SR and the drive electrode wires 71DR, the ratio of the radius of curvature Rs, Rd of the curved portions 73Q, 71Q to the bend width Hs, Hd is at most equal to 0.5, and consequently visual recognition of moiré when superimposed on the pixel pattern is suppressed to a greater extent than with an electrode wire pattern in which there is a localized increase in the line width of the electrode wires in the vicinity of the bent parts.
(23) In each of the pattern of the sensing electrode wires 73SR and the pattern of the drive electrode wires 71DR, the ratio of the bend width Hs, Hd to the electrode wire spacing Ps, Pd is at least equal to 0.7 and at most equal to 1.3. According to such a configuration, the intensity of frequency components of elements extending in the direction in which the reference electrode wires extend, appearing in an FFT analysis of the patterns of the reference electrode wires on which the sensing electrode wires 73SR and the drive electrode wires 71DR are based is suppressed to a low level, and therefore moiré is less liable to be visually recognized when the pattern of the reference electrode wires and the pixel pattern are superimposed. As a result, visual recognition of moiré is also easier to suppress when an electrode wire pattern created on the basis of the reference electrode wires is superimposed on the pixel pattern.

### Modified examples of reference mode

### The reference mode can be modified and implemented as follows.

The bend angle αs, the bending period Ws, the bend width Hs and the electrode wire spacing Ps in the sensing electrode wires 73SR, and the bend angle αd, the bending period Wd, the bend width Hd and the electrode wire spacing Pd in the drive electrode wires 71DR, respectively, may differ from one another.

The radius of curvature Rs of the curved portions 73Q in the sensing electrode wires 73SR and the radius of curvature Rd of the curved portions 71Q in the drive electrode wires 71DR may coincide or may differ. Further, the plurality of curved portions 73Q in the plurality of sensing electrode wires 73SR may include curved portions 73Q having mutual different radii of curvature Rs. Further, the plurality of curved portions 73Q in one sensing electrode wire 73SR may include curved portions 73Q having mutual different radii of curvature Rs. Similarly, the plurality of curved portions 71Q in the plurality of drive electrode wires 71DR or in one drive electrode wire 71DR may include curved portions 71Q having mutual different radii of curvature Rd.

The shape of the reference electrode wires on which the sensing electrode wires 73SR and the drive electrode wires 71DR are based is not limited to the shape in the abovementioned modes of embodiment, but should have a periodic bent line shape. More specifically, the shape of the reference electrode wires should be a bent line shape in which ridge portions and valley portions are repeated alternately, wherein the plurality of reference bent portions positioned in the ridge portions and the plurality of reference bent portions positioned in the valley portions are positioned on separate straight lines extending in the direction in which the reference electrode wires extend. For example, in the sensing reference electrode wires 42KR, it is possible for the reference angle Kas not to be bisected by a straight line extending through the reference bent portion 42Q in a direction orthogonal to the direction in which the sensing reference electrode wires 42KR extend, and the angle between adjacent reference short line portions 42E may be configured from angles that are asymmetrical with respect to said straight line.

In the first to fifth modes of embodiment, the reference mode and the modified examples thereof, the transparent dielectric substrate 33 is one example of a transparent dielectric layer. Furthermore, if the top surface of the transparent dielectric substrate 33 is defined as a first surface, then the rear surface of the transparent dielectric substrate 33 is a second surface, the sensing electrodes 33SP are first electrodes containing the sensing electrode wires 33SR, 34SR, 53SR, 63SR, 73SR serving as first electrode wires, and the drive electrodes 31DP are second electrodes containing the drive electrode wires 31DR, 51DR, 61DR, 71DR serving as second electrode wires. Further, the sensing reference electrode wires 40KR, 42KR are first reference electrode wires and the drive reference electrode wires 41KR are second reference electrode wires. Furthermore, the first electrode direction D1 is a first direction and a second intersecting direction, and the second electrode direction D2 is a second direction and a first intersecting direction.

Further, if the top surface of the transparent dielectric substrate 33 is defined as a second surface, then the rear surface of the transparent dielectric substrate 33 is a first surface, the sensing electrodes 33SP are second electrodes containing the sensing electrode wires 33SR, 34SR, 53SR, 63SR, 73SR serving as second electrode wires, and the drive electrodes 31DP are first electrodes containing the drive electrode wires 31DR, 51DR, 61DR, 71DR serving as first electrode wires. Further, the sensing reference electrode wires 40KR, 42KR are second reference electrode wires and the drive reference electrode wires 41KR are first reference electrode wires. Furthermore, the first electrode direction D1 is a second direction and a first intersecting direction, and the second electrode direction D2 is a first direction and a second intersecting direction.

### Modified examples

The first to fifth modes of embodiment and the reference mode can be modified and implemented as follows.

In the first to fifth modes of embodiment, it is possible for either one only of the pattern formed by the plurality of sensing electrode wires and the pattern formed by the plurality of drive electrode wires to be a pattern as described in each mode of embodiment. With such a configuration also, the effect whereby visual recognition of strip-shaped patterns is suppressed to a greater extent than with a configuration in which the electrode wires arranged in a row have aligned phases is obtained in both the pattern formed by the plurality of sensing electrode wires and the pattern formed by the plurality of drive electrode wires. Further, each of the sensing electrodes 33SP and the drive electrodes 31DP may include electrode wires having a different shape from the shapes in each mode of embodiment, in addition to electrode wires having the shapes in each mode of embodiment. Further, each of the sensing electrode wires and the drive electrode wires should have the shapes in each mode of embodiment, at least in regions in which it is desired to suppress visual recognition of strip-shaped patterns, for example in parts disposed in a central region, for example, as seen from the operating surface 20S. Further, in the second to fifth modes of embodiment, the pattern comprising the plurality of sensing electrode wires may be a pattern in which the pattern of a partial region included in said pattern is repeated in the first electrode direction D1 or the second electrode direction D2. Similarly, the pattern comprising the plurality of drive electrode wires may be a pattern in which the pattern of a partial region included in said pattern is repeated in the first electrode direction D1 or the second electrode direction D2. In this case, said partial region, that is, a part contained in repeated unit regions, is a first electrode wire or a second electrode wire.

In the reference mode, it is possible for either one only of the pattern formed by the plurality of sensing electrode wires 73SR and the pattern formed by the plurality of drive electrode wires 71DR to be a pattern comprising electrode wires in which the bent parts are formed from arc shaped curved portions. Further, the pattern formed by the plurality of sensing electrode wires 73SR and the pattern formed by the plurality of drive electrode wires 71DR may include bent parts having a shape different from an arc shape. It is also possible, according to such a configuration, to suppress the localized increase in the line width of the electrode wires to a greater extent than if the shape of the electrode wires is a polygonal line shape having no arc shaped bent parts over the entirety thereof. Further, for example, each of the sensing electrode wires 73SR and the drive electrode wires 71DR should have a bent line shape in which the bent parts are formed from arc shaped curved portions, in at least parts thereof disposed in regions in which it is desired to suppress moiré.

When the sensing electrodes 33SP and the drive electrodes 31DP are superimposed, the first electrode direction D1, which is the direction in which the sensing electrodes 33SP extend, and the second electrode direction D2, which is the direction in which the drive electrodes 31DP extend, do not need to intersect at right angles, but said directions should intersect. That is, from among the sensing electrodes 33SP and the drive electrodes 31DP, the first direction, which is the direction in which one set of electrodes extends, and the second direction, which is the direction in which the other set of electrodes extends, do not need to intersect at right angles. It should be noted that in a configuration in which the first direction and the second direction intersect at right angles, it is easy to obtain the electrode wire pattern in which the sensing electrode wires and the drive electrode wires are superimposed, and it is easy to align the sensing electrode wires and the drive electrode wires when the conductive film 21 is being manufactured.

Further, the direction in which the sensing electrodes 33SP extend and the direction in which the sensing electrodes 33SP are arranged do not need to intersect one another at right angles, but said directions should intersect. Similarly, the direction in which the drive electrodes 31DP extend and the direction in which the drive electrodes 31DP are arranged do not need to intersect one another at right angles, but said directions should intersect. That is, from among the sensing electrodes 33SP and the drive electrodes 31DP, the first direction, which is the direction in which one set of electrodes extends, and the first intersecting direction, which is the direction in which said one set of electrodes are aligned, should be directions that intersect one another, and the second direction, which is the direction in which the other set of electrodes extends, and the second intersecting direction, which is the direction in which said other set of electrodes are aligned, should be directions that intersect one another.

Further, in each mode of embodiment and the reference mode, the first direction and the second intersecting direction are the same direction, and the second direction and the first intersecting direction are the same direction, but these directions may all be mutually different directions.

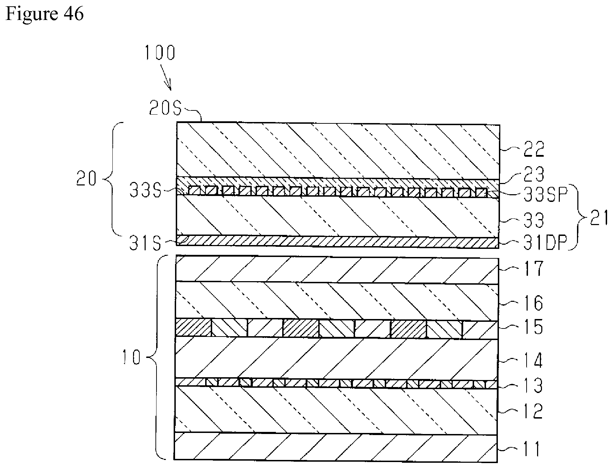

As illustrated in Figure 46, in the conductive film 21 forming the touch panel 20, the transparent substrate 31 and the transparent adhesive layer 32 may be omitted. With such a configuration, among the surfaces of the transparent dielectric substrate 33, the rear surface facing the display panel 10 is set as the drive electrode surface 31S, and the drive electrodes 31DP are positioned on the drive electrode surface 31S. Furthermore, the top surface of the transparent dielectric substrate 33, which is the surface thereof on the opposite side to the rear surface, is the sensing electrode surface 33S, and the sensing electrodes 33SP are positioned on the sensing electrode surface 33S. It should be noted that with such a configuration, the drive electrodes 31DP are formed, for example, by performing etching to pattern one thin film which has been formed on one surface of the transparent dielectric substrate 33, and the sensing electrodes 33SP are formed, for example, by performing etching to pattern one thin film which has been formed on the other surface of the transparent dielectric substrate 33.

It should be noted that it is easier to form the electrode wires with a configuration in which the sensing electrodes 33SP and the drive electrodes 31DP are formed on mutually different substrates, as in each mode of embodiment and the reference mode described hereinabove, than with a configuration in which electrode wires are formed on both surfaces of one substrate.

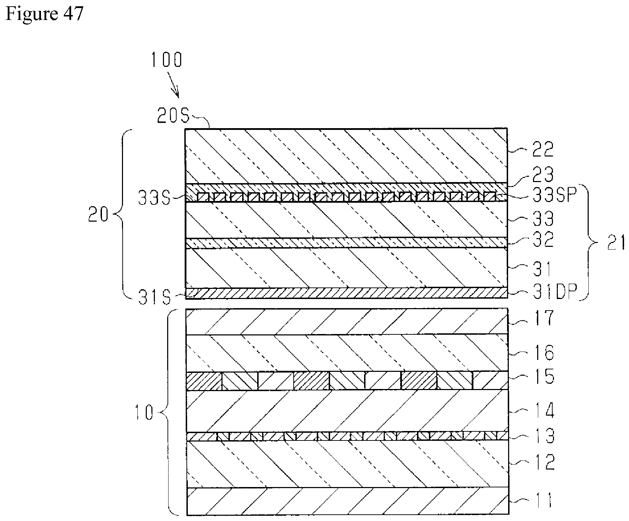

As illustrated in Figure 47, in the touch panel 20, the drive electrodes 31DP, the transparent substrate 31, the transparent adhesive layer 32, the transparent dielectric substrate 33, the sensing electrodes 33SP, the transparent adhesive layer 23 and the cover layer 22 may be positioned in order from the constituent element closest to the display panel 10.

In such a configuration, the drive electrodes 31DP are formed, for example, on one surface of the transparent dielectric substrate 31 serving as the drive electrode surface 31S, and the sensing electrodes 33SP are formed on one surface of the transparent dielectric substrate 33 serving as the sensing electrode surface 33S. Furthermore, the surface of the transparent substrate 31 on the opposite side to the drive electrode surface 31S and the surface of the transparent dielectric substrate 33 on the opposite side to the sensing electrode surface 33S are bonded together by means of the transparent adhesive layer 32. In this case, the transparent substrate 31, the transparent adhesive layer 32 and the transparent dielectric substrate 33 form the transparent dielectric layer, the drive electrode surface 31S of the transparent substrate 31 is one of the first surface and the second surface, and the sensing electrode surface 33S of the transparent dielectric substrate 33 is the other of the first surface and the second surface.

The display panel 10 and the touch panel 20 do not need to be formed separately, and the touch panel 20 may be formed integrally with the display panel 10. With such a configuration, an in-cell type configuration may, for example, be adopted in which, within the conductive film 21, the plurality of drive electrodes 31DP are positioned in the TFT layer 13, while the plurality of sensing electrodes 33SP are positioned between the color filter substrate 16 and the upper polarizing plate 17. Alternatively, an on-cell type configuration may be adopted in which the conductive film 21 is positioned between the color filter substrate 16 and the upper polarizing plate 17. In such a configuration, the layer sandwiched between the drive electrodes 31DP and the sensing electrodes 33SP forms the transparent dielectric layer.

### Appendix

The means of overcoming the problem described hereinabove includes the following items, as technical concepts derived from the third mode of embodiment, the fourth mode of embodiment and the modified examples thereof.

### Item 1

A conductive film provided with a transparent dielectric layer having a first surface and a second surface which is a surface on the opposite side to the first surface, a plurality of first electrodes which extend on the first surface in a first direction and are arranged in a first intersecting direction intersecting the first direction, and a plurality of second electrodes which extend on the second surface in a second direction intersecting the first direction and are arranged in a second intersecting direction intersecting the second direction, wherein: the first electrodes include a plurality of first electrode wires having a bent line shape extending in the first direction; a plurality of bent portions of the first electrode wires include first bent portions and second bent portions arranged alternately along the electrode wires; a distance, in the first direction, between mutually adjacent first bent portions is a bending period; the bending period is constant among the plurality of first electrode wires; the position, in the first direction, within the bending period of the first electrode wire is a phase; the phases of parts, arranged in the first intersecting direction, of first electrode wires that are adjacent to one another in the first intersecting direction are mutually different; an imaginary straight line which extends in the first direction and is positioned equidistant, in the first intersecting direction, from two bent portions that are farthest from one another in the first intersecting direction, from among the plurality of bent portions of each first electrode wire, is a centerline; a distance, in the first intersecting direction, between the centerline and the two bent portions that are farthest from one another in the first intersecting direction is an object length; with regard to each of the plurality of bent portions included in the first electrode wires, a center length, which is the distance from the bent portion to the centerline in the first intersecting direction, is more than 0.75 times and at most equal to 1 times the object length, and the plurality of bent portions include a plurality of bent portions having mutually different center lengths.

According to this configuration, the formation, by linear parts of the plurality of first electrode wires extending in the same direction, of strip-shaped regions arranged in the first intersecting direction is suppressed, and an alternating arrangement in the first direction, with no gaps, of two types of strip-shaped regions in which the direction in which the linear parts contained in each region extend differ from one another is also suppressed. Visual recognition, as a result of reflected light, for example, of a strip-shaped pattern resulting from such an arrangement of strip-shaped regions is therefore suppressed. Consequently, a reduction in the appearance quality of a touch panel employing a conductive film when viewed from the operating surface thereof is suppressed.

Further, since the ratio of the center length to the object length is not constant among the plurality of bent portions, the periodicity of the pattern comprising the plurality of first electrode wires, which gives rise to moiré, is suppressed to a lower level than with a configuration in which this ratio is constant. Therefore, visual recognition of moiré is suitably suppressed in a pattern in which the electrode wire pattern and the pixel pattern are superimposed.

### Item 2

The conductive film as described in item 1, wherein: the phases of first electrode wires that are adjacent to one another in the first intersecting direction are inverted; and the first electrode wires include locations in which, among two first electrode wires that are adjacent to one another in the first intersecting direction, the bent portions of one first electrode wire and the bent portions of the other first electrode wire are connected to one another.

According to this configuration, an arrangement, in the first intersecting direction, of parts of the plurality of first electrode wires extending in the same direction can be reliably suppressed. Visual recognition of a strip-shaped pattern can therefore be suitably suppressed. Further, by connecting two mutually adjacent first electrode wires to one another at the bent portions, the occurrence, in the first electrode wires, of parts that are isolated from the surroundings can be suppressed, even if breaks occur in the first electrode wires. A deterioration in the detection accuracy of the position of contact on the touch panel can be suppressed by employing such a conductive film.

### Item 3

A conductive film provided with a transparent dielectric layer having a first surface and a second surface which is a surface on the opposite side to the first surface, a plurality of first electrodes which extend on the first surface in a first direction and are arranged in a first intersecting direction intersecting the first direction, and a plurality of second electrodes which extend on the second surface in a second direction intersecting the first direction and are arranged in a second intersecting direction intersecting the second direction, wherein: the first electrodes include a plurality of first electrode wires having a bent line shape extending in the first direction; an imaginary electrode wire which includes a plurality of first imaginary bent portions and a plurality of second imaginary bent portions and which has a bent line shape which bends repeatedly with a prescribed period in the first direction is a first reference electrode wire; in the first reference electrode wires, the first imaginary bent portions and the second imaginary bent portions are arranged alternately along the electrode wires, and the plurality of first imaginary bent portions and the plurality of second imaginary bent portions are positioned on separate straight lines extending in the first direction; the position, in the first direction, within the period of the first reference electrode wires is a phase; the plurality of first reference electrode wires are arranged in such a way that the phases of parts, arranged in the first intersecting direction, of first electrode wires that are adjacent to one another in the first intersecting direction are mutually different; the length of half an arrangement spacing of the plurality of first reference electrode wires is a reference length; an imaginary straight line which extends in the first direction and is positioned equidistant, in the first intersecting direction, from the first imaginary bent portions and the second imaginary bent portions of each first reference electrode wire is a reference centerline; the first electrode wires have a bent line shape obtained by displacing the positions of the reference bent portions of at least one of the first imaginary bent portions and the second imaginary bent portions, irregularly with respect to the order in which the reference bent portions are arranged along the first reference electrode wires; and with regard to each of the plurality of bent portions of the first electrode wires, a distance, in the first intersecting direction, from the bent portion to the reference centerline is included in a range of more than 0.75 times and at most equal to 1 times the reference length.

According to this configuration, the formation, by linear parts of the plurality of first electrode wires extending in the same direction, of strip-shaped regions arranged in the first intersecting direction is suppressed, and an alternating arrangement in the first direction, with no gaps, of two types of strip-shaped regions in which the direction in which the linear parts contained in each region extend differ from one another is also suppressed. Visual recognition, as a result of reflected light, for example, of a strip-shaped pattern resulting from such an arrangement of strip-shaped regions is therefore suppressed. Consequently, a reduction in the appearance quality of a touch panel employing a conductive film when viewed from the operating surface thereof is suppressed.

Further, since the ratio of the distance between the bent portions and the reference centerline to the reference length changes irregularly in the plurality of bent portions, the periodicity of the pattern comprising the plurality of first electrode wires, which gives rise to moiré, is suppressed to a lower level than with a configuration in which this ratio is constant. Therefore, visual recognition of moiré is suitably suppressed in a pattern in which the electrode wire pattern and the pixel pattern are superimposed.

### Item 4

The conductive film as described in item 3, wherein: a distance, in the first direction, between reference bent portions that are adjacent to one another and are positioned on one side, in the first intersecting direction, of the first reference electrode wire is a reference period; imaginary regions, each in the shape of an isosceles triangle having a base which extends in the first direction and which is positioned centrally between first reference electrode wires that are adjacent to one another in the first intersecting direction, are displacement regions; the displacement regions are each disposed in positions in which the reference bent portions are positioned within the displacement regions, and in positions in which an imaginary straight line extending in the first intersecting direction through the reference bent portion passes through the vertex of the isosceles triangle and the midpoint of the base; the height of each isosceles triangle is at least equal to 0.05 times and at most equal to 0.45 times the arrangement spacing; the length of the base is at least equal to 0.1 times and at most equal to 0.9 times the reference period; the bent portions of the first electrode wires are positioned within the displacement regions; and at least some of the plurality of bent portions are disposed in positions displaced in both the first direction and the first intersecting direction relative to the reference bent portions.

According to this configuration, the periodicity of the pattern comprising the plurality of first electrode wires is suppressed to an even lower level than with a configuration in which the plurality of bent portions of the first electrode wires are all disposed in positions displaced in only the first intersecting direction relative to the reference bent portions. Therefore, visual recognition of moiré is suitably suppressed in a pattern in which the electrode wire pattern and the pixel pattern are superimposed. Further, by setting the height of the displacement region and the length of the base to be at least equal to these lower limits, a shape in which the periodicity of the reference electrode wires is adequately disrupted is obtained as the shape of the first electrode wires. Meanwhile, by setting the height of the displacement region and the length of the base to be at most equal to these upper limits, the first electrode wires are prevented from having an excessively irregular bent line shape, thereby preventing the density of the arrangement of electrode wires in the electrode wire pattern from becoming excessively non-uniform.

### Item 5

The conductive film as described in item 3 or item 4, wherein: the first electrode wires include locations in which, among two first electrode wires that are adjacent to one another in the first intersecting direction, the bent portions of one first electrode wire and the bent portions of the other first electrode wire are connected to one another.

According to this configuration, the occurrence, in the first electrode wires, of parts that are isolated from the surroundings can be suppressed, even if breaks occur in the first electrode wires. A deterioration in the detection accuracy of the position of contact on the touch panel can be suppressed by employing such a conductive film.

### Item 6

The conductive film as described in any one of items 3 to 5, wherein: the second electrodes include a plurality of second electrode wires having a bent line shape extending in the second direction; imaginary electrode wires which include a plurality of imaginary bent portions and have a bent line shape which bends repeatedly with a prescribed period in the second direction are second reference electrode wires; the position, in the second direction, within the period of the second reference electrode wires is a phase; the plurality of second reference electrode wires are arranged in such a way that the phases of parts, arranged in the second intersecting direction, of second reference electrode wires that are adjacent to one another in the second intersecting direction are mutually different; the second electrode wires have a bent line shape obtained by displacing the positions of the reference bent portions of at least some of the plurality of imaginary bent portions of the second reference electrode wires, irregularly with respect to the order in which the reference bent portions are arranged along the second reference electrode wires; an arrangement spacing of the plurality of first reference electrode wires is a first reference spacing; a distance, in the first direction, between imaginary bent portions that are adjacent to one another and are positioned on one side, in the first intersecting direction, of the first reference electrode wire is a first reference period; an arrangement spacing of the plurality of second reference electrode wires is a second reference spacing; a distance, in the second direction, between imaginary bent portions that are adjacent to one another and are positioned on one side, in the second intersecting direction, of the second reference electrode wire is a second reference period; the first reference period is twice the length of the second reference spacing; and the second reference period is twice the length of the first reference spacing.

According to this configuration, in a pattern in which the plurality of first reference electrode wires and the plurality of second reference electrode wires are overlaid, the positions of the bent portions of the first reference electrode wires relative to the bent portions of the second reference electrode wires are fixed. The electrode wires can therefore be arranged in such a way as to increase the uniformity of the arrangement density of the electrode wires in the pattern of the reference electrode wires. Furthermore, since the electrode wire pattern in which the plurality of first electrode wires and the plurality of second electrode wires are overlaid is a pattern based on the pattern of the reference electrode wires, excessive non-uniformity in the arrangement density of the electrode wires in the electrode wire pattern can be suppressed. As a result, visual recognition of graining, which occurs as a result of a difference in the sparsity or density of the electrode wires, can be suppressed.

The means of overcoming the problem described hereinabove includes the following items, as technical concepts derived from the fifth mode of embodiment and the modified examples thereof.

### Item 7

A conductive film provided with a transparent dielectric layer having a first surface and a second surface which is a surface on the opposite side to the first surface, a plurality of first electrodes which extend on the first surface in a first direction and are arranged in a first intersecting direction intersecting the first direction, and a plurality of second electrodes which extend on the second surface in a second direction intersecting the first direction and are arranged in a second intersecting direction intersecting the second direction, wherein: the first electrodes include a plurality of first electrode wires having a bent line shape extending in the first direction; the first electrodes include a plurality of bent portions and a plurality of short line portions in the shape of straight lines joining the bent portions that are adjacent to one another along the first electrode wires; the inclinations of the short line portions relative to the first direction change irregularly with respect to the order in which the short line portions are arranged, among the plurality of short line portions; the plurality of bent portions include separated bent portions; a point of intersection of extension lines of the two short line portions joined to each separated bent portion is an imaginary point of intersection; and in two first electrode wires that are adjacent to one another in the first intersecting direction, the separated bent portions of one first electrode wire and the separated bent portions of the other first electrode wire face one another with a gap therebetween, and the positions of the imaginary points of intersection related to each of said separated bent portions coincide with one another.

According to this configuration, the formation, by linear parts of the plurality of first electrode wires extending in the same direction, of strip-shaped regions arranged in the first intersecting direction is suppressed, and an alternating arrangement in the first direction, with no gaps, of two types of strip-shaped regions in which the direction in which the linear parts contained in each region extend differ from one another is also suppressed. Visual recognition, as a result of reflected light, for example, of a strip-shaped pattern resulting from such an arrangement of strip-shaped regions is therefore suppressed. Consequently, a reduction in the appearance quality of a touch panel employing a conductive film when viewed from the operating surface thereof is suppressed.

Further, since the inclination in the plurality of short line portions changes irregularly, the periodicity of the pattern comprising the plurality of first electrode wires, which gives rise to moiré, can be suppressed to a low level. Therefore, visual recognition of moiré is suitably suppressed in a pattern in which the electrode wire pattern and the pixel pattern are superimposed.

### Item 8

The conductive film as described in item 7, wherein: imaginary electrode wires which include a plurality of imaginary bent portions and have a bent line shape which bends repeatedly with a prescribed period in the first direction are first reference electrode wires; the position, in the first direction, within the period of the first reference electrode wires is a phase; the plurality of first reference electrode wires are arranged in such a way that the phases of parts, arranged in the first intersecting direction, of two first reference electrode wires that are adjacent to one another in the first intersecting direction are inverted and the imaginary bent portions of one of said first reference electrode wires and the imaginary bent portions of the other first reference electrode wire are connected to one another; and the first electrode wires are configured in such a way that the imaginary points of intersection related to the first electrode wires are disposed in positions displaced relative to the imaginary bent portions of the first reference electrode wires.

According to this configuration, the bent line shape of the first electrode wires described in item 7 is achieved reliably.

### Item 9

The conductive film as described in item 8, wherein: the second electrodes include a plurality of second electrode wires having a bent line shape extending in the second direction; the second electrodes include a plurality of bent portions and a plurality of short line portions in the shape of straight lines joining the bent portions that are adjacent to one another along the second electrode wires; the inclinations of the short line portions relative to the second direction change irregularly with respect to the order in which the short line portions are arranged, among the plurality of short line portions; the plurality of bent portions of the second electrode wires include separated bent portions; a point of intersection of extension lines of the two short line portions joined to each separated bent portion is an imaginary point of intersection; in two second electrode wires that are adjacent to one another in the second intersecting direction, the separated bent portions of one second electrode wire and the separated bent portions of the other second electrode wire face one another with a gap therebetween, and the positions of the imaginary points of intersection related to each of said separated bent portions coincide with one another; imaginary electrode wires which include a plurality of imaginary bent portions and have a bent line shape which bends repeatedly with a prescribed period in the second direction are second reference electrode wires; the position, in the second direction, within the period of the second reference electrode wires is a phase; the plurality of second reference electrode wires are arranged in such a way that the phases of parts, arranged in the second intersecting direction, of two second reference electrode wires that are adjacent to one another in the second intersecting direction are inverted and the imaginary bent portions of one of said second reference electrode wires and the imaginary bent portions of the other second reference electrode wire are connected to one another; the second electrode wires are configured in such a way that the imaginary points of intersection related to the second electrode wires are disposed in positions displaced with respect to the imaginary bent portions of the second reference electrode wires; an arrangement spacing of the plurality of first reference electrode wires is a first reference spacing; a distance, in the first direction, between imaginary bent portions that are adjacent to one another and are positioned on one side, in the first intersecting direction, of the first reference electrode wire is a first reference period; an arrangement spacing of the plurality of second reference electrode wires is a second reference spacing; a distance, in the second direction, between imaginary bent portions that are adjacent to one another and are positioned on one side, in the second intersecting direction, of the second reference electrode wire is a second reference period; the first reference period is twice the length of the second reference spacing; and the second reference period is twice the length of the first reference spacing.

According to this configuration, in a pattern in which the plurality of first reference electrode wires and the plurality of second reference electrode wires are overlaid, the positions of the bent portions of the first reference electrode wires relative to the bent portions of the second reference electrode wires are fixed. The electrode wires can therefore be arranged in such a way as to increase the uniformity of the arrangement density of the electrode wires in the pattern of the reference electrode wires. Furthermore, since the electrode wire pattern in which the plurality of first electrode wires and the plurality of second electrode wires are overlaid is a pattern based on the pattern of the reference electrode wires, excessive non-uniformity in the arrangement density of the electrode wires in the electrode wire pattern can be suppressed. As a result, visual recognition of graining, which occurs as a result of a difference in the sparsity or density of the electrode wires, can be suppressed.

The means of overcoming the problem in the reference mode includes the following items, as technical concepts derived from the reference mode and the modified examples thereof.

### Item 10

A conductive film provided with a transparent dielectric layer having a first surface and a second surface which is a surface on the opposite side to the first surface, a plurality of electrode wires which extend on the first surface of the transparent dielectric layer in a first direction and are arranged in a first intersecting direction intersecting the first direction, and a plurality of electrode wires which extend on the second surface of the transparent dielectric layer in a second direction intersecting the first direction and are arranged in a second intersecting direction intersecting the second direction, wherein: the plurality of electrode wires positioned on the first surface include first electrode wires having a bent line shape; the first electrode wires include a plurality of first curved portions in the shape of arcs and a plurality of first straight portions in the shape of straight lines; the first curved portions and the first straight portions are arranged alternately along the first electrode wires; the first straight portions extend between two first curved portions, from the ends of the arcs forming said first curved portions, in such a way as to follow the tangent to the first curved portions at the respective ends thereof; points of intersection of extension lines of two first straight portions joined to the first curved portion are first imaginary points of intersection; the maximum distance, in the first intersecting direction, between the first imaginary points of intersection positioned on one side, in the first intersecting direction, of the first electrode wire, and the first imaginary points of intersection positioned on the other side, in the first intersecting direction, of the first electrode wire is a bend width; and the ratio of the radius of curvature of the first curved portions to the bend width is at most equal to 0.5. According to this configuration, in the bent parts configured from the arc shaped first curved portions in the first electrode wires having a wavy line shape, the change per unit area in the direction in which the electrode wires extend is more gradual than in bent parts of electrode wires having a polygonal line shape in which ridge portions and valley portions are repeated alternately. It is therefore easy to form the first electrode wires, and a localized increase in the line width of the electrode wires in the vicinity of the bent parts during the manufacturing process is suppressed. As a result, the occurrence of discrepancies between the design values and actual measured values of the electrical characteristics of a touch panel provided with a conductive film having such an electrode wire pattern is suppressed, and a deterioration in the quality of images visually recognized on a display device provided with said touch panel is also suppressed. Furthermore, if the ratio of the radius of curvature of the first curved portions to the bend width is at most equal to 0.5, visual recognition of moiré when superimposed on the pixel pattern is suppressed to a greater extent than with an electrode wire pattern in which there is a localized increase in the line width of the electrode wires in the vicinity of the bent parts.

### Item 11

The conductive film as described in item 10, wherein: a plurality of first imaginary points of intersection positioned on one side, in the first intersecting direction, of each first electrode wire and a plurality of first imaginary points of intersection positioned on the other side, in the first intersecting direction, of each first electrode wire are positioned on separate straight lines extending in the first direction; the plurality of electrode wires positioned on the first surface include a plurality of first electrode wires arranged spaced apart by an electrode wire spacing, which is a prescribed spacing in the first intersecting direction; and the ratio of the bend width to the electrode wire spacing is at least equal to 0.7 and at most equal to 1.3.

According to this configuration, visual recognition of moiré is easier to suppress when the electrode wire pattern and the pixel pattern are superimposed.

## Claims

1. A conductive film provided with:
a transparent dielectric layer having a first surface and a second surface which is a surface on the opposite side to the first surface;
a plurality of first electrodes which extend on the first surface in a first direction and are arranged in a first intersecting direction intersecting the first direction; and
a plurality of second electrodes which extend on the second surface in a second direction intersecting the first direction and are arranged in a second intersecting direction intersecting the second direction; wherein
the first electrodes include a plurality of first electrode wires having a bent line shape extending in the first direction,
a region between two first electrode wires that are adjacent to one another in the first intersecting direction is an intermediate region, the intermediate region includes an enlarging region in which the length of the intermediate region in the first intersecting direction becomes larger in the first direction, and a contracting region in which the length of the intermediate region in the first intersecting direction becomes smaller in the first direction, and the enlarging region and the contracting region are disposed alternately in the first direction.

2. The conductive film as claimed in claim 1, wherein:
the first electrode wires include a plurality of bent portions and a plurality of short line portions in the shape of straight lines joining the bent portions that are adjacent to one another along the first electrode wires, and the inclinations of the short line portions relative to the first direction change irregularly with respect to the order in which the short line portions are arranged, among the plurality of short line portions;
the plurality of bent portions include separated bent portions, and a point of intersection of extension lines of the two short line portions joined to each separated bent portion is an imaginary point of intersection; and
in two first electrode wires that are adjacent to one another in the first intersecting direction, the separated bent portions of one first electrode wire and the separated bent portions of the other first electrode wire face one another with a gap therebetween, and the positions of the imaginary points of intersection related to each of said separated bent portions coincide with one another.

3. The conductive film as claimed in claim 2, wherein:
the separated bent portions include arcuate bent portions having an arc shape; and
the short line portions joined to each arcuate bent portion extend from each end of the arc forming the arcuate bent portion in such a way as to follow the tangent to the arcuate bent portion at said end thereof.

4. The conductive film as claimed in claim 2 or 3, wherein:
the separated bent portions include polygonal line bent portions; and
the polygonal line bent portions extend from the end of one short line portion to the end of another short line portion, where said two short line portions sandwich the polygonal line bent portion, in such a way as to join a plurality of points positioned between the ends of two short line portions.

5. The conductive film as claimed in any one of claims 2 to 4, wherein:
imaginary electrode wires which include a plurality of imaginary bent portions and have a bent line shape which bends repeatedly with a prescribed period in the first direction are first reference electrode wires, the position, in the first direction, within the period of the first reference electrode wires is a phase, and the plurality of first reference electrode wires are arranged in such a way that the phases of parts, arranged in the first intersecting direction, of two first reference electrode wires that are adjacent to one another in the first intersecting direction are inverted and the imaginary bent portions of one of said first reference electrode wires and the imaginary bent portions of the other first reference electrode wire are connected to one another; and
the first electrode wires are configured in such a way that the imaginary points of intersection related to the first electrode wires are disposed in positions displaced with respect to the imaginary bent portions of the first reference electrode wires.

6. The conductive film as claimed in claim 5, wherein:
a distance, in the first direction, between imaginary bent portions that are adjacent to one another and are positioned on one side, in the first intersecting direction, of the first reference electrode wire is a reference period, and an arrangement spacing of the plurality of first reference electrode wires is a reference spacing;
rectangular regions centered at the imaginary bent portions are displacement regions;
a length, in the first direction, of the displacement region is at least equal to 0.05 times and at most equal to 0.45 times the reference period;
a length, in the first intersecting direction, of the displacement region is at least equal to 0.05 times and at most equal to 0.45 times the reference spacing; and
the first electrode wires are configured in such a way that each of the plurality of imaginary points of intersection is positioned within an individual displacement region.

7. The conductive film as claimed in claim 1, wherein:
a plurality of bent portions of the first electrode wires include first bent portions and second bent portions which are arranged alternately along the electrode wires, a distance, in the first direction, between mutually adjacent first bent portions is a bending period, and the bending period is constant among the plurality of first electrode wires;
the position, in the first direction, within the bending period of the first electrode wires is a phase, and the phases of parts, arranged in the first intersecting direction, of first electrode wires that are adjacent to one another in the first intersecting direction are mutually different; and
an imaginary straight line which extends in the first direction and is positioned equidistant, in the first intersecting direction, from two bent portions that are farthest from one another in the first intersecting direction, from among the plurality of bent portions of each first electrode wire, is a centerline, the distance, in the first intersecting direction, between the centerline and the two bent portions that are farthest from one another in the first intersecting direction is an object length, with regard to each of the plurality of bent portions included in the first electrode wires, a center length, which is the distance from the bent portion to the centerline in the first intersecting direction, is included in a range of more than 0.75 times and at most equal to 1 times the object length, and the plurality of bent portions include a plurality of bent portions having mutually different center lengths.

8. The conductive film as claimed in claim 7, wherein the center lengths of the plurality of bent portions in the first electrode wires vary irregularly with respect to the order in which the bent portions are arranged along the first electrode wires.

9. The conductive film as claimed in claim 1, wherein:
imaginary electrode wires which include a plurality of first imaginary bent portions and a plurality of second imaginary bent portions and have a bent line shape which bends repeatedly with a prescribed period in the first direction are first reference electrode wires, in the first reference electrode wires the first imaginary bent portions and the second imaginary bent portions are arranged alternately along the electrode wires, and the plurality of first imaginary bent portions and the plurality of second imaginary bent portions are positioned on separate straight lines extending in the first direction;
the position, in the first direction, within the period of the first reference electrode wires is a phase, and the plurality of first reference electrode wires are arranged in such a way that the phases of parts, arranged in the first intersecting direction, of first reference electrode wires that are adjacent to one another in the first intersecting direction are mutually different;
the length of half an arrangement spacing of the plurality of first reference electrode wires is a reference length;
an imaginary straight line which extends in the first direction and is positioned equidistant, in the first intersecting direction, from the first imaginary bent portions and the second imaginary bent portions of each first reference electrode wire is a reference centerline; and
the first electrode wires have a bent line shape obtained by displacing the positions of the reference bent portions of at least one of the first imaginary bent portions and the second imaginary bent portions, irregularly with respect to the order in which the reference bent portions are arranged along the first reference electrode wires, and with regard to each of the plurality of bent portions of the first electrode wires, a distance, in the first intersecting direction, from the bent portion to the reference centerline is included in a range of more than 0.75 times and at most equal to 1 times the reference length.

10. The conductive film as claimed in any one of claims 2 to 9, wherein:
the plurality of bent portions include connected bent portions; and
in two first electrode wires which are adjacent to one another in the first intersecting direction and are contained in a common first electrode, the connected bent portions of one first electrode wire and the connected bent portions of the other first electrode wire are connected to one another.

11. The conductive film as claimed in claim 1, wherein:
the first electrode wires have a bent line shape which bends repeatedly with a prescribed period in the first direction; and
the position, in the first direction, within the period of the first electrode wires is a phase, and the phases of parts, arranged in the first intersecting direction, of first electrode wires that are adjacent to one another in the first intersecting direction are mutually different.

12. The conductive film as claimed in claim 11, wherein the phases of first electrode wires that are adjacent to one another in the first intersecting direction are inverted.

13. The conductive film as claimed in claim 11 or 12, wherein:
an arrangement spacing of the plurality of first electrode wires is a first electrode wire spacing;
the width over which the first electrode wires extend in the first intersecting direction is a first bend width; and
the ratio of the first bend width to the first electrode wire spacing is more than 0.75 and at most equal to 1.

14. The conductive film as claimed in any one of claims 11 to 13, wherein:
the second electrodes contain a plurality of second electrode wires having a bent line shape which bends repeatedly with a prescribed period in the second direction;
the position, in the second direction, within the period of the second electrode wires is a phase, and the phases of parts, arranged in the second intersecting direction, of second electrode wires that are adjacent to one another in the second intersecting direction are mutually different;
an arrangement spacing of the plurality of first electrode wires is a first electrode wire spacing;
the first electrode wires include a plurality of bent portions, and a distance, in the first direction, between bent portions that are adjacent to one another and are positioned on one side, in the first intersecting direction, of the first electrode wire is a first bending period;
an arrangement spacing of the plurality of second electrode wires is a second electrode wire spacing;
the second electrode wires include a plurality of bent portions, and a distance, in the second direction, between bent portions that are adjacent to one another and are positioned on one side, in the second intersecting direction, of the second electrode wire is a second bending period; and
the first bending period is twice the length of the second electrode wire spacing, and the second bending period is twice the length of the first electrode wire spacing.

15. The conductive film as claimed in claim 1, wherein:
imaginary electrode wires which include a plurality of first imaginary bent portions and a plurality of second imaginary bent portions and have a bent line shape which bends repeatedly with a prescribed period in the first direction are first reference electrode wires, and in the first reference electrode wires the first imaginary bent portions and the second imaginary bent portions are arranged alternately along the electrode wires;
the position, in the first direction, within the period of the first reference electrode wires is a phase, and the plurality of first reference electrode wires are arranged in such a way that the phases of parts, arranged in the first intersecting direction, of first reference electrode wires that are adjacent to one another in the first intersecting direction are mutually different; and
the plurality of first electrode wires each have a bent line shape obtained by displacing the positions of the reference bent portions of at least one of the first imaginary bent portions and the second imaginary bent portions, irregularly with respect to the order in which the reference bent portions are arranged along the first reference electrode wires.

16. The conductive film as claimed in claim 15, wherein:
an arrangement spacing of the plurality of first reference electrode wires is a reference spacing;
a distance, in the first direction, between reference bent portions that are adjacent to one another and are positioned on one side, in the first intersecting direction, of the first reference electrode wire is a reference period;
imaginary regions, each in the shape of an isosceles triangle having a base which extends in the first direction and which is positioned centrally between first reference electrode wires that are adjacent to one another in the first intersecting direction, are displacement regions;
the displacement regions are each disposed in positions in which the reference bent portions are positioned within the displacement regions, and in positions in which an imaginary straight line extending in the first intersecting direction through the reference bent portion passes through the vertex of the isosceles triangle and the midpoint of the base;
the height of each isosceles triangle is at least equal to 0.05 times and at most equal to 0.45 times the reference spacing;
the length of the base is at least equal to 0.1 times and at most equal to 0.9 times the reference period; and
the bent portions of the first electrode wires are positioned within the displacement regions.

17. The conductive film as claimed in claim 15 or 16, wherein:
an arrangement spacing of the plurality of first reference electrode wires is a reference spacing; and
in two first electrode wires that are adjacent to one another in the first intersecting direction,
a distance between the bent portions of one first electrode wire and the bent portions of the other first electrode wire, where said bent portions are positioned closest to one another, is at most equal to 0.5 times the reference spacing.

18. The conductive film as claimed in any one of claims 7 to 9 and 11 to 17, wherein the first electrode wires include a plurality of bent portions and a plurality of short line portions in the shape of straight lines joining the bent portions that are adjacent to one another along the first electrode wires.

19. A touch panel provided with:
the conductive film as claimed in any one of claims 1 to 18;
a cover layer covering the conductive film; and
a peripheral circuit which measures an electrostatic capacitance between the first electrodes and the second electrodes.

20. A display device provided with:
a display panel which has a plurality of pixels aligned in a grid formation, and which displays information;
a touch panel through which the information being displayed by the display panel is transmitted; and
a control unit which controls the driving of the touch panel; wherein
the touch panel is the touch panel as claimed in claim 19.
